# EUROPEAN PATENT SPECIFICATION

(11) **EP 2 445 263 B1**
(45) Date of publication and mention of the grant of the patent: **31.07.2024**
(21) Application number: 11185910.4
(22) Date of filing: 20.10.2011
(51) Int. Cl.: H04W 40/00

(54) **Transmission method for wireless relay system and relay station using the same**
Übertragungsverfahren für ein drahtloses Relaissystem und Relaisstation damit
Procédé de transmission pour système de relais sans fil et station de relais l'utilisant

(30) Priority: 22.10.2010 US 909867
(43) Date of publication of application: 25.04.2012
(73) Proprietor: Koninklijke Philips N.V., 5656 AG Eindhoven (NL)
(72) Inventor: Lin, Tzu-Ming, Hsinchu County 302 (TW)
(74) Representative: Philips Intellectual Property & Standards

(56) References cited:
- ALCATEL-LUCENT SHANGHAI BELL ET AL: "HARQ Timeline for LTE-Advanced relay in FDD", 3GPP DRAFT; R1-100948 HARQ TIMELINE FOR LTE-ADVANCED RELAY IN FDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418541
- RESEARCH IN MOTION UK LIMITED: "Type-II Relay DL/UL Transmission Schemes and Performance Analysis", 3GPP DRAFT; R1-093294(RIM-TYPE2_RELAY UL DL SCHEME AND PERFORMANCE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20090824 - 20090828, 18 August 2009 (2009-08-18), XP050597616
- MOTOROLA: "Un HARQ for TDD", 3GPP DRAFT; R1-105606, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450688
- LG ELECTRONICS: "Further consideration on TDD Un subframe allocation", 3GPP DRAFT; R1-105347 FURTHER CONSIDERATION ON TDD UN SUBFRAME ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450499
- "3 Generation Partnership Project; Technical Specification Group Radio Access Network; Evolved Universal Terrestrial Radio Access (E-UTRA); Physical layer procedures (Release 8)", 3GPP STANDARD ; TECHNICAL SPECIFICATION ; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V8.8.0, 19 September 2009 (2009-09-19), pages 1 - 77, XP051296169

## Description

### TECHNICAL FIELD

The disclosure relates to a transmission method for a wireless relay system and a replay station using the same. The transmission method for a wireless relay system includes a Hybrid Automatic Repeat Request (HARQ) method in the wireless relay system.

### BACKGROUND

Currently, relay techniques is gradually adopted in wireless communication technology to improve wireless communication coverage area, group mobility, cell-edge throughput of base stations and provision of temporary network deployment. For example, IEEE 802.16m statnd and Third Generation Partnership Project Long Term Evolution Advanced (3GPP LTE-Advanced) standard both adopt replay node (also called a relay station) for achieving the relay forwarding communication.

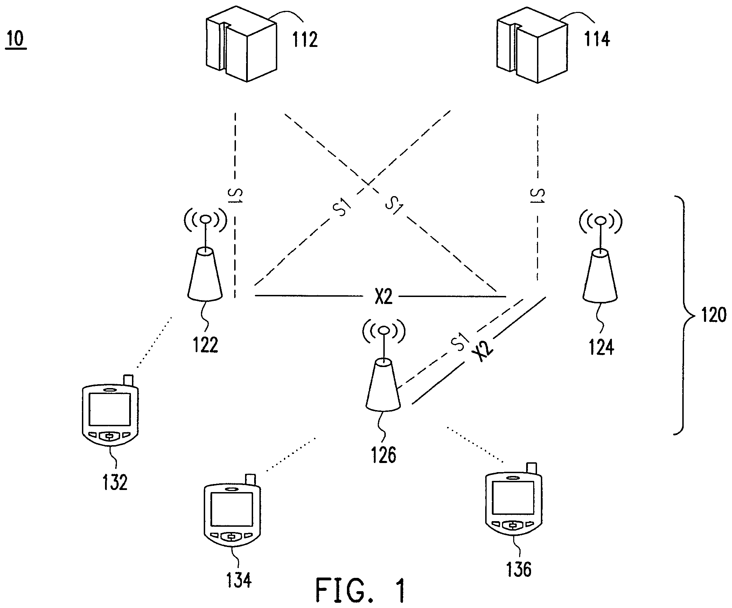

FIG. 1 is schematic diagram of a wireless communication system 19 with a relay node. As shown in FIG. 1, the wireless communication system 10 supports 3GPP LTE standard, and includes a mobility management entity (MME) 112, an MME 114, an Evolved Universal Terrestrial Radio Access Network (E-UTRAN) 120 and user equipments (UE) 132, 134, 136. The MME 112 can also be integratred with a serving gateway (S-GW).

The E-UTRAN 120 can include an enhanced Node B (eNodeB or abbreviated as eNB) 122, an eNB 124 and a relay node 126. The E-UTRAN 120 is connected with MME/S-GW 112 via an S1 conneciotn (interface). In the E-UTRAN 120, the eNB122 and the eNB 124 are connected with each other via an X2 interface (which can be a wired communication). In the wireless communication system 10, the relay node 126 can be connected with the eNB 124 via the X2 interface. However, the relay node 126 can also be connected with a base sation or an advanced base station (abbreviated as ABS), in order to establish an S1 interface with the MME/S-GW 112. The relay node 126 provides a Uu interface (not shown) for the UE 134, 136, so as to provide wireless communication service of the eNB 124 to the UE 134, 136. The UE 132 is directly connected with the eNB 122 without via the relay node 126.

In the wireless relay communication system supporting 3GPP LTE standard, such as in the wireless communication system 10, the relay node 126 may not have a base station ID (cell ID), such that the relay node 126 does not create a new cell, but it can still relay or forward data to the UE 134, or forward data to the UE 134 from the eNB 124. The UE 134 may just receive control signals from the eNB 124, such as Physical Downlink Control Channel (PDCCH) or cell reference signal. The UE 134 can receive data signals from the relay node 126, such as Physical Downlink Shared Channel (PDSCH). Moreover, in the wireless communication system 10, the relay node can transmit or receive wireless signals in an uplink band or a downlink band of the eNB 124 in a time division multiplexing (TDM) mode, so as to extend wireless service coverage area of the eNB 124. In some situations, the relay node 126 just supports relaying data, and the eNB 124 and the UE 134 exchange physical (PHY) data.

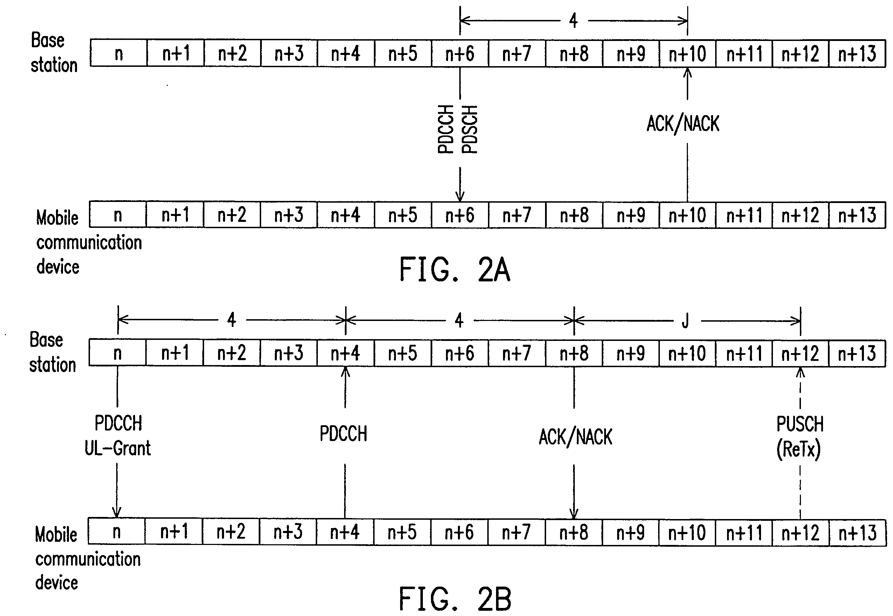

FIG. 2A is a schematic diagram illustrating a convential HARQ process in a downlink transmission of a frequency division duplex (FDD) mode of LTE system. Each block in FIG. 2A denots a plurality of subframes. In 3GPP LTE standard, each frame includes 10 subframes. The figure shown in each block denotes a timing sequence of every subframe. For example, a subframe "*n*+3" represents the 3^{rd} subframe appeared after the *n*^{th} subframe, and such notation principle can be applied to following schematic diagrams of every HARQ process. Referring to FIG. 2A, the HARQ process is operated between a base station (e.g., the eNB 122) and a mobile communication device (e.g., the UE 132). The blocks shown in the top row represent the subframe timing sequence of the base station, and the blocks shown in the bottom row represent the subframe timing sequence of the mobile communication device.

As illustrated in FIG. 2A, wireless resource is allocated for the eNB 122 in the subframe "*n*+6" and the eNB 122 transmits PDCCH and PDSCH to the UE 132. After 4 subframes, the subframe "*n*+10", the IE 132 replies a positive acknowledgement (abbreviated as ACK)/ a negative acknowledgement (abbreviated as NACK), and feedback to the eNB 122 whether the HARQ data is successfully received in the subframe "*n*+6". The aforementioned 4 subframe interval is a configured and fixed time interval defined in 3GPP LTE standard. If the eNB 122 receives the ACK, then the eNB 122 can prepare another HARQ process. On the contrary, if the eNB 122 receives the NACK, then the eNB 122 can arrange retransmission explicitly or implicitly in subsequent subframes. For example, the eNB 122 can arrage the UE 132 report the reception result after 4 subframes, and the eNB 122 can arrange downlink resource for retransmitting the HARQ data in an explicit arrangement example. In an implicit arrangement example, fixed timing is reused for retransmitting the HARQ data to the UE 132 until the eNB 122 receives an ACK fedback from the UE 132. Alternatively, a preset timeout can be used to terminate the retransmission of the HARQ data.

FIG. 2B is a schematic diagram illustrating a convential HARQ process in an uplink transmission of an FDD mode of LTE system. Referring to FIG. 2B, before an uplink transmission process of the UE 132, the eNB 122 grants uplink resource to the UE 132 in subframe "*n*", which is allocated through control signaling such as PDCCH. After 4 subframes, the UE 132 transmits uplink data to the eNB 122 in the granted subframe "*n*+4" through, for example, a Physical Uplink Shared Channel (PUSCH). Once the eNB 122 receives the uplink data, after 4 subframes, the eNB 122 replies an ACK signal to feedback whether the uplink data is successfully received in subframe "*n*+8". If the uplink data transmission is failed, the eNB 122 can reply an NACK signal or a fake-ACK signal in the subframe "*n*+8", which is 4 subframes after the uplink data transmission. Alternatively, the retransmission is triggered in a fixed subframe (e.g., *J* subframes), and the *J* value can be assigned explicitly or implicitly.

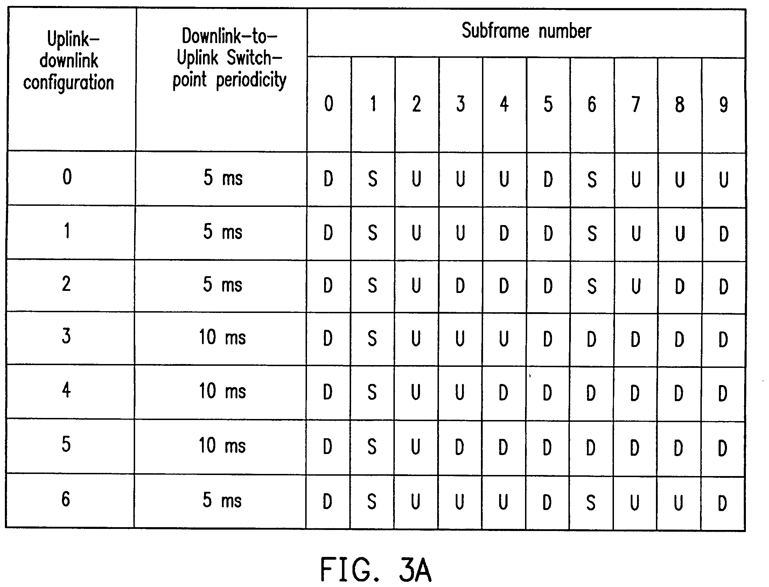

FIG. 3A is a schematic diagram illustrating a category of frame structures of a time division duplex (TDD) in LTE system. FIG. 3A illustrates a look-up table, which further indicates 7 uplink/downlink (UL/DL) configurations of the TDD mode in 3GPP LTE system, such as a configuration 0 to a configuration 6. Different configurations may have an uplink-to-downlink (UL-to-DL) switchpiont periodicity of 5 mircoseconds (ms) or of 10 ms. The UL-to-DL switchpiont periodicity represents a repeating time interval of the configured frame structure. Moreover, the loop-up table further shows corresponding uplink transmission meaning or corresponding downlink transmission meaning of 10 subframes in each UL/DL configuration. Each subframe occupies 1 microseconds of wireless resource in time domain. Furthermore, the subframe labeled as "*D*" or "*S*" represents a downlink transmission, and the subframe labeled as "*U*" represents an uplink transmission. For example, ss shown in FIg. 3A, in a configuration 0, the subframes 0, 1, 5, 6 are allocated for the downlink transmission while the subframes 2, 3, 4, 7, 8, 9 are allocated for the uplink transmission.

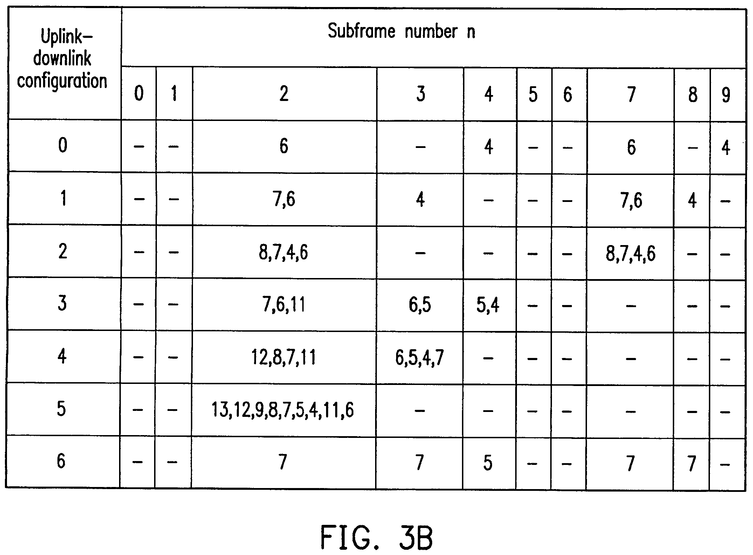

FIG. 3B is a schematic diagram illustrating a mapping of downlink data subframe allocated in a TDD mode of LTE system and corresponding ACK/NACK. The example shown in FIG. 3B corresponds to an uplink transmission example similar to that shown in FIG. 2A, but the differences between them lies in that FIG. 3B provides a configuration table converted from the look-up table of FIG. 3A. Moreover, the configuration table shows the timing association of subframes transmitting ACK/NACK and subframes transmitting data created due to the TDD frame structure. The configuration tale also provides the associations of the subframes transmitting ACK/NACK and subframes transmitting data in the HARQ transmission process, where the figures shown in the block is the value of *k.*

In examples of FIG. 3B, if the eNB 122 transmits downlink data in the subframe "*n-k*", then the mapping table shows that the subframe "*n*" is granted by the eNB 122 for transmitting data or ACK/NACK. For example, in configuration 1 (also in a situation of UL-DL switchpiont periodicity of 5 ms), if the UE 132 replies ACK/NACK in the subframe 2, then it can be known by looking up in the configuration table of FIG. 3B, the UE 132 received the downlink data in the subframe 5 (i.e., *n*-*k*=(2-7)+10=5) or in the subframe 6 (i.e., *n*-*k*=(2-6)+10=6). For another example, in configuration 4, if the UE 132 replies ACK/NACK in the subframe 2, then it can be known by looking up in the configuration table of FIG. 3B, the UE 132 received the downlink data in the subframe 0 (i.e., *n-k*=(2-12)+10=0), the subframe 4 (i.e., *n-k*=(2-8)+10=4), the subframe 5 (i.e., *n*-*k*=(2-7)+10=5) or in the subframe 1 (i.e., *n-k*=(2-11)+10=1).

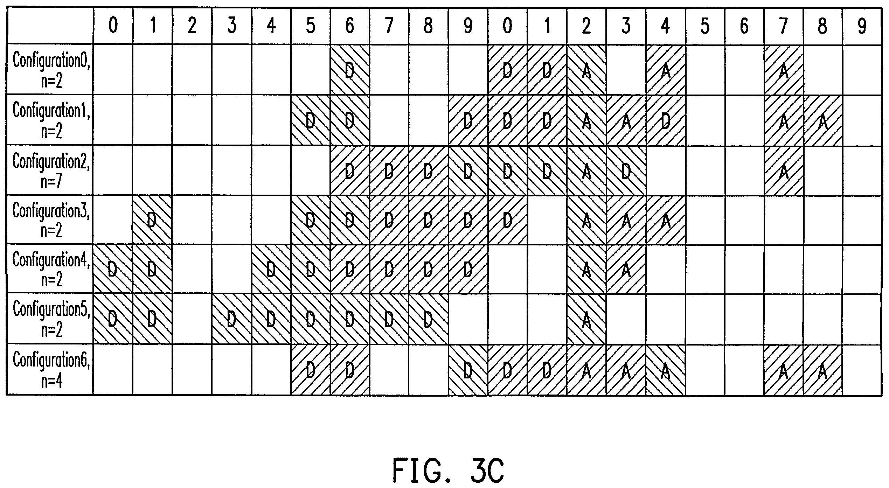

FIG. 3C is a schematic diagram illustrating associations of subframes in every configuration of FIG. 3B. In the mapping table shown in FIG. 3C, the subframe labeleed as "*D*" may be associated with the subframe labeleed as "*A*". For example, in configuration 1, when the subframe "*n*" is 2, the subframe 2 labled as "*A*" is then associated with the subframes 5, 6, which are labled as "*D*". For another example, in configuration 4, when the subframe "*n*" is 2, the subframe 2 labled as "*A*" is then associated with the subframes 0, 1, 4, 5, which are labled as "*D*". In other words, when the eNB 122 transmits downlink data in the subframes 0, 1, 4 or 5 in the configuration 4, the UE 132 can reply ACK/NACK signal in the subframe 2 of the next frame period.

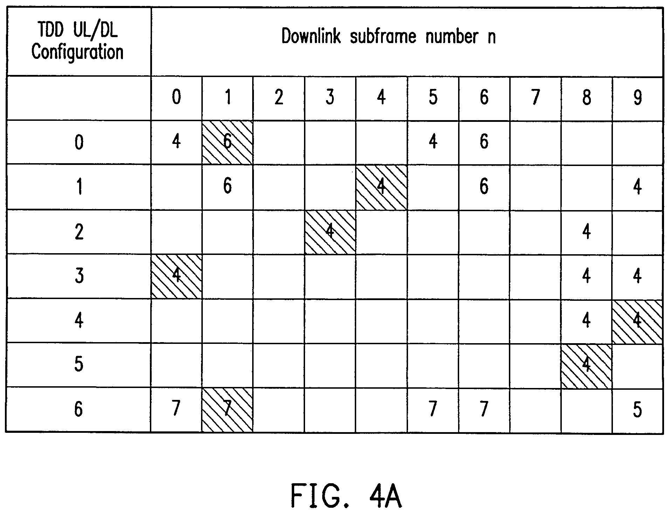

The uplink HARQ process in the TDD mode of 3GPP LTE system is similar to the process shown in FIG. 2B, but the difference between then lies in that a timing associations between grant subframes, uplink data subframes and ACK/NACK subframes are required due to the TDD frame structure. FIG. 4A is a schematic diagram illustrating a mapping of grant subframe allocated in a TDD mode of LTE system and corresponding uplink data subframe. FIG. 4A corresponds to an uplink HARQ data transmission example similar to that shown in FIG. 2B. As shown in FIG. 4A, if grant signal is transmitted in the subframe "*n*", then the UE can transmits the uplink data in the the subframe "*n*+*k*". For example, in the configuration 1, if the eNB 122 transmits the grant signal in the subframe 1, then the UE can transmits the uplink data in the the subframe 7 (i.e., *n*+*k*=1+6=7)*.*

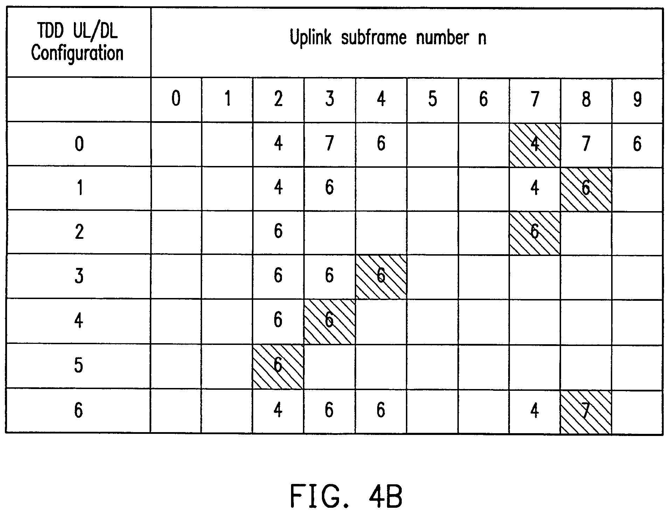

FIG. 4B is a schematic diagram illustrating a mapping of uplink data subframe allocated in a TDD mode of LTE system and corresponding ACK/NACK. FIG. 4B corresponds to an uplink HARQ transmission example similar to that shown in FIG. 2B, and shows timing associations of uplink subframes and the corresponding ACK/NACK subframes as following FIG. 4A. As shown in FIG. 4B, if uplink data is transmitted in the subframe "*n*", then the eNB 122 can transmit ACK/NACK signal in the subframe "*n*+*k*"*.* For example, in configuration 1, if the UE 132 transmits the uplink data in the subframe 7, then the eNB 122 can transmit ACK/NACK in the subframe 1 (i.e., *n*+*k*=7+4-10=1) in the next frame period.

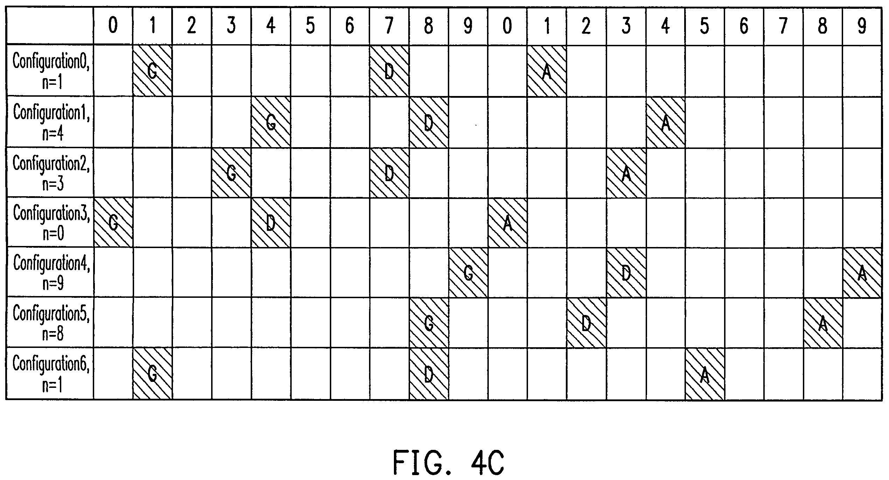

FIG. 4C is a schematic diagram illustrating associations of subframes in every configuration of FIG. 4B. FIG. 4c corresponds to an uplink HARQ data transmission example similar to that shown in FIG. 2B, and provides a configuration table converted from FIG. 4A and FIG. 4B. In the configuration table of FIG. 4C, the subframe labelled as "*G*" is represents a time point of transmitting the grant signal for the subframe labelled as "*D*", and the subframe "*A*" is represents a time point of tranmissint ACK/NACK signal for the subframe labelled as "*D*". For example, if configuration is 0, and in the situation where subframe *n*=1, the eNB 122 transmits grant signal in the subframe 1, and the UE 132 can transmit uplink data in the subframe 7, and the eNB 122 can transmit the ACK/NACK signal in the subframe 1 of the next frame period. For another example, if configuration is 5, and in the situation where subframe *n*=8, the eNB 122 transmits grant signal in the subframe 8, and the UE 132 can transmit uplink data in the subframe 2, and the eNB 122 can transmit the ACK/NACK signal in the subframe 8 of the next frame period.

However, the aforementioned conventional HARQ method, as illustrated in FIG. 2A and Fig. 4B, can merely be applied to the situation without a relay node.
Moreover, the conventional wireless relay communication system mostly uses dynamic allocation indication signals, which results in control signaling overhead in the wireless relay communication system. The dynamic allocation indication signaling is also more complicated, and can easily lower operation efficiency of the entire wireless relay communication system. Therefore, how to efficiently transmit data and corresponding control signals in a wireless relay communication system is currently an important issue.

The document "HARQ Timeline for LTE-Advanced relay in FDD" by A.-L. Shanghai Bell et al., 3GPP DRAFT ; R-100948, volume RAN WG1 (2010) discloses HARQ timelines for both Type-I relays and Type-II relays, wherein using 8ms HARQ RTT as the baseline assumption for DL and UL minimum requirement would result in losses in resource efficiency. Hence, these HARQ timeline for Type I relays need improvements. For Type II relays, the conventional 8ms HARQ timeline is shown to have no impact on the resource efficiency.

The document "Type-II Relay DL/UL Transmission Schemes and Performance Analysis" by Research In Motion Uk Limited; 3GPP DRAFT; Rl-093294, volume RAN WG1 (2009) discloses various DL/UL transmission options regarding type-II relays. On the DL, the type-II relay can assist both the initial transmissions and retransmissions or it can only assist the retransmissions. On the UL, the type-II relay has more flexibility for the transmission assistance. Initial simulation results show that the Type-II relay can help to improve the SINR performance and reduce the UE's battery consumption.

### SUMMARY

The scope of the invention is defined by the appended independent claims. Beneficial embodiments are provided in the dependent claims. The following disclosure serves a better understanding of the invention.

Several exemplary embodiments accompanied with figures are described in detail below to further describe the disclosure in details.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.
FIG. 1 is schematic diagram of a wireless communication system with a relay node.
FIG. 2A is a schematic diagram illustrating a convential HARQ process in a downlink transmission of a frequency division duplex mode of LTE system.
FIG. 2B is a schematic diagram illustrating a convential HARQ process in an uplink transmission of a frequency division duplex mode of LTE system.
FIG. 3A is a schematic diagram illustrating a category of frame structures of a time division duplex in LTE system.
FIG. 3B is a schematic diagram illustrating a mapping of downlink data subframe allocated in a time division duplex mode of LTE system and corresponding ACK/NACK.
FIG. 3C is a schematic diagram illustrating associations of subframes in every configuration of FIG. 3B.
FIG. 4A is a schematic diagram illustrating a mapping of grant subframe allocated in a time division duplex mode of LTE system and corresponding uplink data subframe.
FIG. 4B is a schematic diagram illustrating a mapping of uplink data subframe allocated in a time division duplex mode of LTE system and corresponding ACK/NACK.
FIG. 4C is a schematic diagram illustrating associations of subframes in every configuration of FIG. 4B.
FIG. 5A is schematic diagram illustrationg a HARQ process in a downlink transmission of a frequendcy division duplex mode of LTE system according a first exemoplary embodiment
FIG. 5B, FIG. 5C and FIG. 5D are schematic diagrams illurstating associations of subframes in every configuration according to FIG. 5A
FIG. 6A is schematic diagram illustrationg a HARQ process in an uplink transmission of a frequendcy division duplex mode of LTE system according a second exemoplary embodiment.
FIG. 6B is schematic diagram illustrationg a HARQ process in an uplink transmission of a frequendcy division duplex mode of LTE system according a third exemoplary embodiment.
FIG. 6C, FIG. 6D and FIG. 6E are schematic diagrams illurstating associations of subframes in every configuration according to FIG. 6A.
FIG. 7A is schematic diagram illustrationg a HARQ process in a downlink transmission of a time division duplex mode of LTE system according a fourth exemoplary embodiment.
FIG. 7B is a schematic diagram illurstating associations of subframes in every configurarion according to FIG. 7A.
FIG. 7C summarizes a portion of a downlink transmission process in a TDD mode according to FIG. 7B.
FIG. 7D summarizes another portion of a downlink transmission process in a TDD mode according to FIG. 7B.
FIG. 7E summarizes downalink transmission processes of all configurations in a TDD mode according to FIG. 7A.
FIG. 8A is schematic diagram illustrationg a HARQ process in an uplink transmission of a time division duplex mode of LTE system according a fifth exemoplary embodiment.
FIG. 8B is a schematic diagram illurstating associations of subframes in every configurarion according to FIG. 8A, and provides a configuration table converted from FIG. 8A.
FIG. 8C summarizes a portion of an uplink transmission process in a TDD mode according to FIG. 8B.
FIG. 8D summarizes another portion of an uplink transmission process in a TDD mode according to FIG. 8B.
FIG. 8E summarizes subframe numbers at which a relay node receives a grant signal of uplink wireless resource in uplink transmission processes of all configurations in a TDD mode according to FIG. 8A.
FIG. 8F summarizes subframe numbers at which a relay node forwards uplink data in uplink transmission processes of all configurations in a TDD mode according to FIG. 8A.
FIG. 9 is a flowchart illustrating a transmission method for a wireless relay system summarized from the first exemplary embodiment to the fifth exemplary embodiment.
FIG. 10A-FIG. 10I are schematic diagrams respectively illustrating associations of subfrarmes in every configuration of different embodiments according to FIG. 5A.
FIG. 11A-FIG. 11I are schematic diagrams respectively illustrating associations of subfrarmes in every configuration of different embodiments according to FIG. 6A.
FIG. 12A-FIG. 12F are schematic diagrams respectively illustrating associations of subframes in configurion 1 to configuration 6 according to FIG. 7A, and summarizing the downlink transmission process of the TDD mode.
FIG. 12G illustrates the subframe number where the relay node replies asknowledgement signal of every configuration in the downlink transmission process of the TDD mode according to FIG. 7A.
FIG. 12H illustrates the subframe number where the relay node forwards the downlink datat of every configuration in the downlink transmission process of the TDD mode according to FIG. 7A.
FIG. 13A-FIG. 13F are schematic diagrams respectively illustrating associations of subframes in configurion 1 to configuration 6 according to FIG. 8A, and summarizing the uplink transmission process of the TDD mode.
FIG. 13G illulstrates the subframe number where the relay node is granted uplink wireless resource corresponding to every configuration of the TDD mode of the uplink transmission process according to FIG. 8A.
FIG. 13H illulstrates the subframe number where the relay node forwards the uplink data corresponding to every configuration of the TDD mode of the uplink transmission process according to FIG. 8A.

### DETAILED DESCRIPTION OF DISCLOSED EMBODIMENTS

Aspects or embodiments that do not fall under the scope of the claims are useful to understand the invention. The basic principles of exemplary embodiments of the present disclosure mainly provide a transmission method for a wireless relay communication system. The transmission method includes a HARQ process of a wireless relay system which is capable of being operated in n TDD mode or in a FDD mode. By adopting a configured timing association or a fixed timing association between grant signal transmission process, data transmission process and feedback signal transmission process between a base station, a relay node and a mobile communication device, control signaling overhead can be effectively reduced, thereby lowering transmission delay.

The following exemplary embodiments will be introduced based upon 3GPP LTE system, but technical content of the disclosure is not limited to 3GPP LTE system and can be adapted for any wireless communication system, which adopts relay communication techniques, and can operate in a TDD mode or in a FDD mode. Moreover, the following exemplary embodiments will be described with a type II relay node, but the technical content of the disclosure is not limited to the type II relay node.

The type II relay node operates a transparent and inband relay techniques, and it does not possess a unique cell ID but can still have a relay ID. Referring to FIG. 1, from the perspective of the UE 136, the eNB 124 is a doner cell in the wireless communication system 10, and has at least a portion of radio resource management (RRM) and can directly control the UE 136. However, there is still a portion of RRM operated in the type II relay node (relay communication device). For example, smart repeater communication devices, decode-and-forward communication devices and layer 3 relay communication devices are the type II relay node. In addition, mobile communication devices in exemplary embodiments are, for example, a digitial television, a digital set-top-box, a notebooks computer, a tablelet computer, a mobile phone and a smartphone.

The notation principle of a timing sequence "*n*" described in accordance with FIG. 2A can also be applied to following exemplary embodiments. For example, the figure in each block represents a timing sequence of each subframe, and subframe "*n*+3" represents the 3^{rd} subframe appeared after the *n*^{th} subframe. The TDD mode of 3GPP LTE system has 7 UL/DL configurations, such as configuration 0 to configuration 6. Different configurations may have UL-to-DL switch-point periodicity of 5 ms or 10 ms. Moreover, the subframe labelled as "*D*" or "*S*" represents a downlink transmission, and the subframe labelled as "*U*" represents an uplink transmission. Furthermore, each subframe occupies 1 ms of wireless resource. In an uplink operation mode, the subframe labelled as "*G*" represents a timing point when grant signal is transmitted for the subframe laelled as "*D*", while the subframe labelled as "*A*" represents a timing point when ACK/NACK signal is transmitted for the subframe laelled as "*D*". The aforementioned basic principles of 3GPP LTE system can be applied to exemplary embodiments of the disclosure.

The following exemplary embodiments of the disclosure are all associated with base stations (such as the eNB 24 in FIG. 1), relay nodes (such as the relay node 126 in FIG. 1) and mobile communication device (such as the UE 136 in FIG. 1). Though fixed timing associations are disclosed in some exemplary embodiments, such as the mobile communication device replies ACK/NACK signal to the base station after *X*=4 subframes, the present disclosure is not limited to such timing association (X=4), and principles of the technical contents of the present disclosure can be applied to situations where there is fixed timing association bwtewen data subframe for uplink transmission and ACK/NACK subframe. Meanwhile, principles of the technical contents of the present disclosure can also be applied to situations where there is fixed timing association bwtewen grant subframe, data subframe and ACK/NACK subframe for downlink transmission.

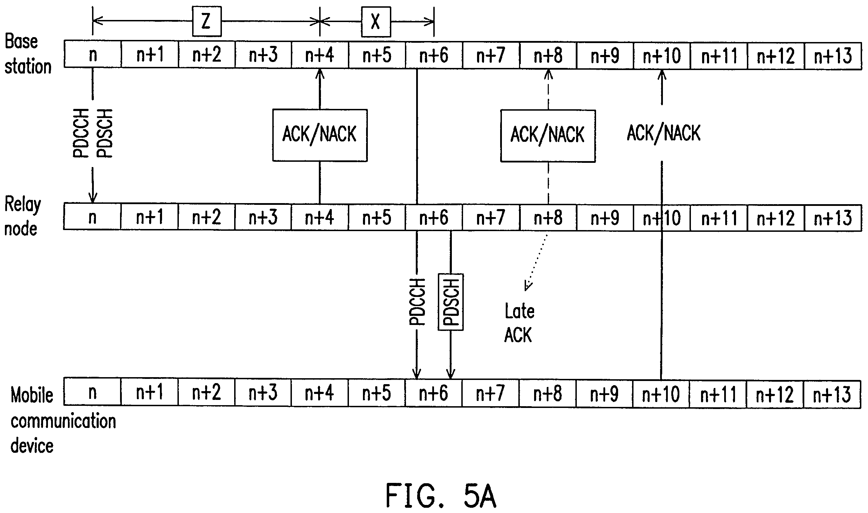

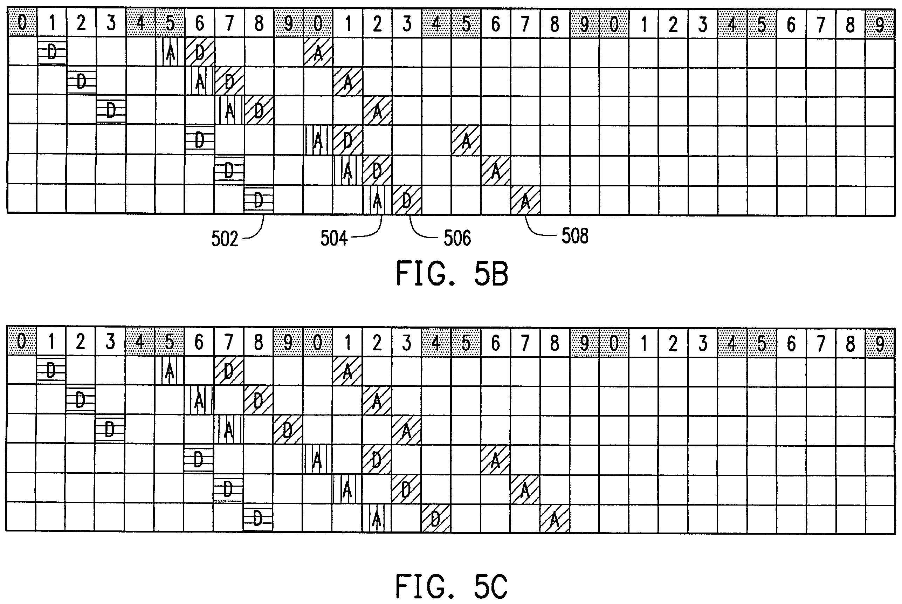

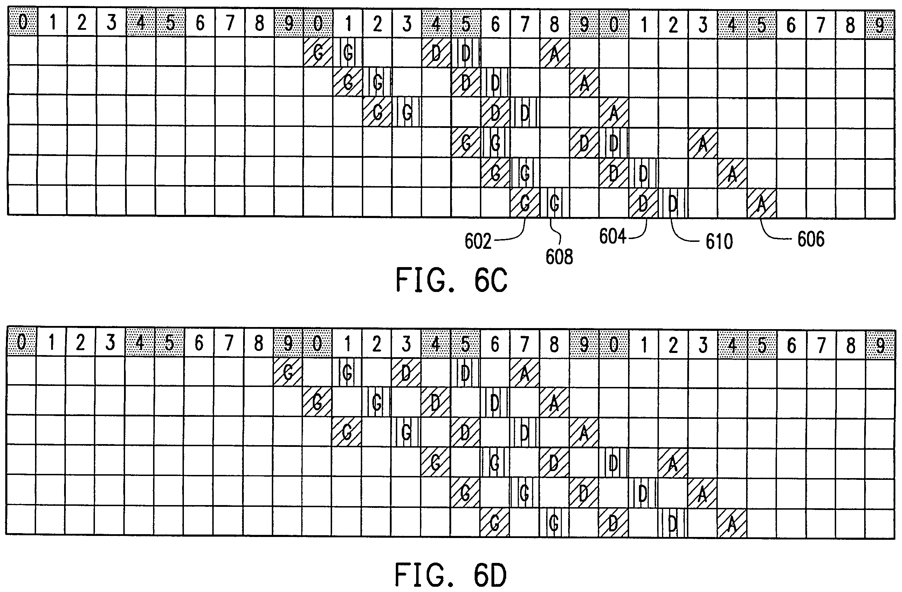

The following embodiment falls under the scope of the invention. FIG. 5A is schematic diagram illustrationg a HARQ process in a downlink transmission of a FDD mode of LTE system according a first exemoplary embodiment. In FIG. 5A, the subframes 0, 4, 5 or 9 of 3GPP LTE system are used for transnmitting control signaling, and this principle can be also applied to FIG. 5B, FIG. 5C and FIG. 6C to FIG. 6E. The base station firstly transmits downlink datat to the relay node, and the relay node then can independently forward data to the mobile communication device, or cooperate with the base station to transmit the downlink data to the mobile communication device. Moreover, the relay node can use modulation and coding scheme (MCS) and cooperative realy technique to achieve the objectives of relaying. In a pre-transmission step of the base station transmitting data to the relay node, the base station can also transmit control signaling such as PDCCH.

Control signaling can be transmitted to the relay node along with data (such as PDSCH). For example, in the subframe "*n*", PDCCH/PDSCH is transmitted by the base station to the relay node. Then, the base station receives acknowledgement signal, such as ACK/NACK signal, before the relay node transmits data to the mobile communication device. The acknowledgement signal can be, for example, Physical hybrid-ARQ indicator channel (PHICH). As shown in FIG. 5A, after an interval of *Z* subframes, the base station receives ACK/NACK signal replied by the relay node in the frame "*n*+4", for example.

After the base station receives ACK/NACK signal (replied by the relay node), the base station allocates wireless resource granted to the mobile communication device through control signaling (e.g., PDCCH), and the relay node can at the same time transmit the downlink data from the base station to the mobile communication device. As shown in FIG. 5A, after an interval of *X* subframes, the base station, for example in the subframe "*n*+6", the base station transmits PDCCH to the mobile communication device, and meanwhile the relay node also transmits PDSCH to the mobile communication device. Withing a configured duration (e.g., 4 subframes) after the downlink data is received by the mobile communication device, the mobile communication device replies ACK/NACK signal to the base station. In the present exemplary embodiment, the mobile communication device can directly reply ACK/NACK signal to the base station without the relay node forwarding the ACK/NACK signal.

However, the relay node can also reply ACK/NACK signal to the base station after transmitting the downlink data to the mobile communication device, and such situation is called a late ACK. For example, in FIG. 5A, the relay node transmits the ACK/NACK signal to the base station in the subframe "*n*+8", which is later than the mobile communication device receiving the downlink data in the subframe "*n*+6". Since the base station is not known the transmission procedures in advance in such situation, the base station can merely determine whether the overall data transmission process is successful by the ACK/NACK signal directly replied by the mobile communication device. It is usually that the value of Z is greater than or equal to 0, such that sufficient time is allocated for the relay node to process data (such as PDCCH or PDSCH). The value of Z in FIG. 5A represents a time delay from the timing point where the relay node has received the PDCCH/PDSCH to the timing point where the relay node replies the ACK/NACK signal. The value of *X* in FIG. 5A represents a time delay (or also called time interval) between the timing point where the base station transmits the PDCCH/PDSCH to the relay node and the timing point where the relay node replies the ACK/NACK signal. From another perspectives, the value of *Z* in FIG. 5A also represents a time interval from the timing point where the relay node receives grant signal of the base station to the timing point where the relay node replies the ACK/NACK signal to the base station. The value of *X* in FIG. 5A also represents a time interval from the timing point where the relay node replies the ACK/NACK signal to the timing point where the mobile communication device is granted downlink wireless resource.

If data is of higher priority, being more instant or of more emergency, then the value of *X* can be lowered. When the value of *X* is negative, it represents a situation of late ACK. The value of *Z* is usually 4 subframes, and if the value of *Z* is less than 4, then it means that the data processing speed is faster (or the data processing capability is more powerful). The sum of the value of *X* and value of *Z* is usually greater than 0, and if the sum of of the value of *X* and value of *Z* is equal to 0, then it represents a situation of simultaneous transmission. That is, *X*+*Z*=0, and the base station and the relay node simultaneously transmit downlink data to the mobile communication device. The principle regarding the value of *X* and value of *Z* can be applied to the following exemplary embodiments. In FIG. 5A, if *X*+*Z*>0, then it means that the base station and the relay node do not simultaneously transmit downlink data to the mobile communication device. If *X*<0, then it represents a late ACK situation, where the relay node replies the ACK/NACK signal to the base station after the relay node transmits downlink data to the mobile communication device.

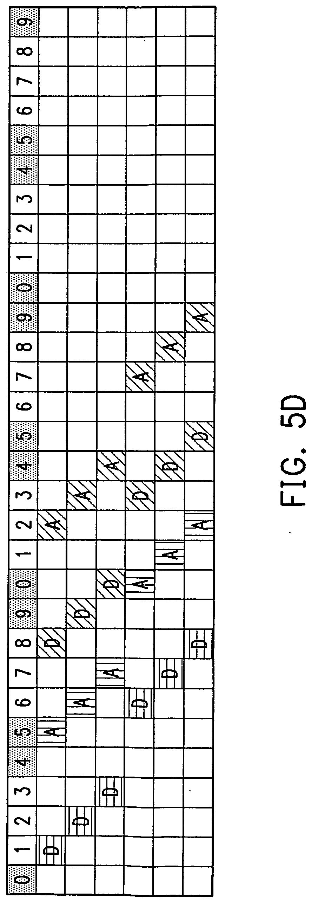

FIG. 5B, FIG. 5C and FIG. 5D are schematic diagrams illurstating associations of subframes in every configuration according to FIG. 5A. FIG. 5B, FIG. 5C and FIG. 5D all correspond to the HARQ process in a downlink transmission of the FDD mode with *Z*=4, and respectively provide three configuration tables converted from FIG. 5A. In the configuration tables of FIG. 5B, FIG. 5C and FIG. 5D, the subframes with diagonal stripes on background (but labeled as "*A*" or "*D*") represent the subframes associated with the mobile communication device; the subframes with vertical stripes or horizontal stripes on background (but labeled as "*A*" or "*D*") represent the subframes associated with the relay node. For example, the subframes 502, 504 are the ones associated with the relay node; the subframes 506, 508 are the ones associated with the mobile communication device. However, FIG. 5B, FIG. 5C and FIG. 5D respectively correspond to the conditions of *X*=1, *X*=2 and *X*=3.

Moreover, in FIG. 5B, since *X*=1, then the relay node replies the ACK/NACK signal to the base station in the subframe 5 (the subframe labeled as "*A*"), the relay node forwards the downlink data from the base station to the mobile communication device in the subframe 6 (the subframe labeled as "*D*"), and there is just 1 subframe interval between the two processes.

For example, from an overall perspectives of FIG. 5B-FIG. 5D, the base station transmits the downlink data in subframe 1, 2, 3, 5, 6, 7 or 8, the relay node correspondingly reply ACK/NACK signal to the base station in subframe 5, 6, 7, 0, 1 or 2. If *X*=1, then the relay node forwards the downlink data in subframe 6, 7, 8, 1, 2 or 3; if *X*=2, then the relay node forwards the downlink data in subframe 7, 8, 9, 2, 3 or 4; *X*=3, then the relay node forwards the downlink data in subframe 8, 9, 0, 3, 4 or 5. The disclosure is not limited to the case where *Z*=4, and in other exemplary embodiments, the value of *Z* can other integers based upon practical design parameters of the wireless relay system; the corresponding value of *X* can be -5, -6, -7, 1, 2, 3 or other integers.

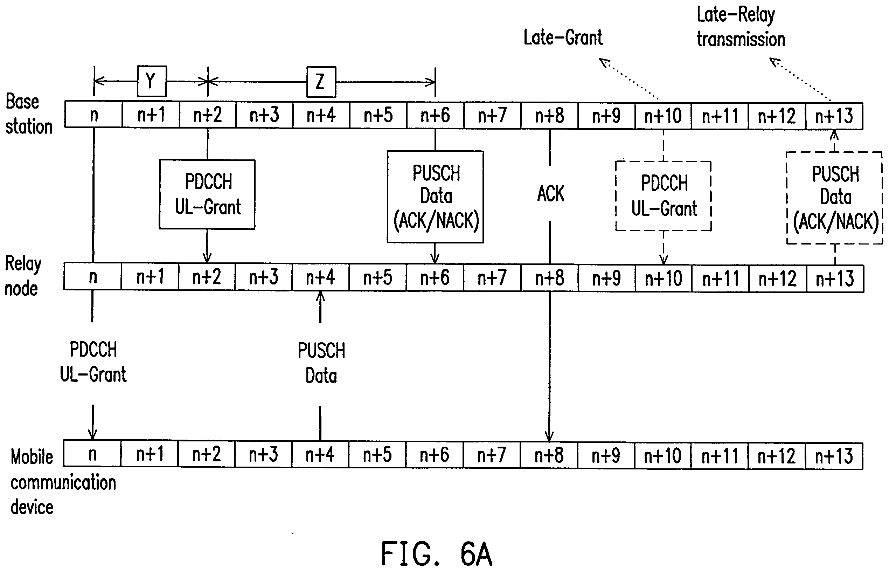

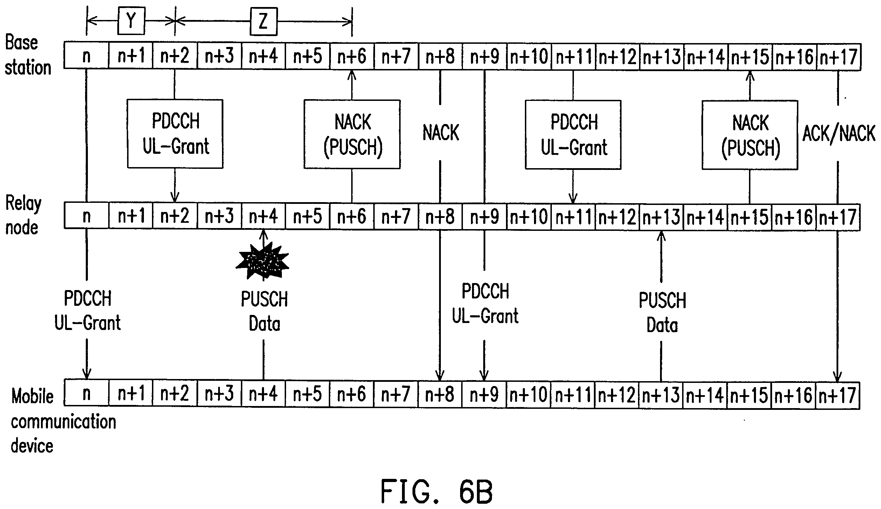

FIG. 6A is schematic diagram illustrationg a HARQ process in an uplink transmission of a FDD mode of LTE system according a second exemoplary embodiment. FIG. 6B is schematic diagram illustrationg a HARQ process in an uplink transmission of a FDD mode of LTE system according a third exemoplary embodiment. FIG. 6A illustrates a normal data transmission sitatution, and FIG. B illustrates a sitatuion of re-transmission. Since FIG. 6A and FIG. 6B both are of uplink transmission processes, the base station can respectively transmit grant signals to the relay node and the mobile communication device in advance.

In FIG. 6A and FIG. 6B, the value of *Y* represents a time interval from the timing point where the mobile communication device is granted uplink wireless resource to the timing point where the relay node is granted uplink wireless resource. For example, in the subframe "*n*" in FIG. 6A, the base station transmits PDCCH (UL-Grant) singal to the mobile communication device; in the the subframe "*n*+2", the base station transmits PDCCH (UL-Grant) singal to the relay node. If the value of *Y* is negative, it represents that the wireless resource granted to the relay node arranged by the base station is earlier than the arrangement for granting wireless resource to the mobile communication device.

In FIG. 6A and FIG. 6B, the value of *Z* represents a time interval (time delay) between the timing point where the relay node is granted uplink wireless resource and the timing point where the relay node replies ACK/NACK signal or forwards uplink data to the base station. For example, in the subframe "*n*+2" in FIG. 6A, the base station transmits PDCCH (UL-Grant) singal to the relay node; in the the subframe "*n*+4", the mobile communication device transmits PUSCH (the uplink data) to the relay node. When the realy node receives the PUSCH data, it then transmits the PUSCH data to the base station or replies ACK/NACK signal to the mobile communication device in the subframe "*n*+6". The base station then replies the ACK/NACK signal to the replay node, for notifying whether the PUSCH data is transmitted successfully. If 8≧*Y*+ *Z*≧4 (i.e., 2×*Z*≧*Y*+ *Z*≧*Z*), then it represents a non-late relay situation. On the contrary, if *Y*+ *Z*≧8, it represents a late relay situation where the wireless resource is granted by the base station to the relay node for transmitting the uplink data after the relay node replies the ACK/NACK signal to the mobile communication device.

In FIG. 6A, if the wireless resource is granted by the base station to the relay node for transmitting the uplink data after the relay node replies the ACK/NACK signal to the mobile communication device, it represents a late relay situation. For example, in FIG. 6A, in the subframe "*n*+6", the relay node has received the uplink data from the mobile communication device, but the relay node is granted uplink wireless resource by the base station in the the subframe "*n*+10", and thus the relay node transmits the PUSCH data to the base station or replies the ACK/NACK signal to the mobile communication device. If *Y*≧8, it represents a late grant situation. If *Y*+ *Z*≧8, it represents a late relay situation. FIG. 6A illustrates normal transmission situations and an uplink data transmission failure is illustrated in FIG. 6B, where the base station may initiate a retransmission process of the mobile communication device or the relay node.

In FIG. 6B, the processes from the subframe "*n*" to the the subframe "*n*+6" is similar to that shown in FIG. 6A, except that an error appears when the mobile communication device transmits the PUSCH data in the subframe "*n*+4", such that the relay node receives the corrupted uplink data. Then, the relay node may select to replay NACK to the mobile communication device with or without data. After the base station transmits the NACK signal to the mobile communication device in the subframe "*n*+8", the base station may initiate a retransmission process of the mobile communication device, where the base station may retransmit a new uplink grant signal to the mobile communication device or the relay node, or retransmit new uplink grant signals to both the mobile communication device and the relay node. For example, the base station transmits an uplink resource grant signal to the mobile communication device in the subframe "*n*+9", the base station transmits an uplink resource grant signal to the relay node in the subframe "*n*+11", the base station receives PUSCH data forwarded by the relay node or the relay node replies ACK signal to the mobile communication device in the subframe "*n*+15", and the base station replies ACK/NACK signal to the mobile communication device.

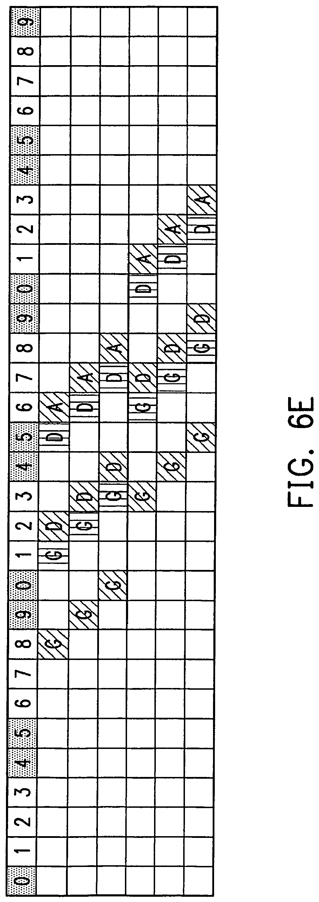

FIG. 6C, FIG. 6D and FIG. 6E are schematic diagrams illurstating associations of subframes in every configurarion according to FIG. 6A. FIG. 6C, FIG. 6D and FIG. 6E all correspond to the HARQ process in an uplink transmission of the FDD mode with *Z*=4, and respectively provide three exemplary configuration tables converted from FIG. 6A or FIG. 6B. However, FIG. 6C, FIG. 6D and FIG. 6E respectively correspond to the conditions of *Y*=1, *Y*=2 and *Y*=3. In the configuration tables of FIG. 6C, FIG. 6D and FIG. 6E, the subframes with diagonal stripes on background (but labeled as "*A*" or "*D*" or "*G*") represent the subframes associated with the mobile communication device; the subframes without diagonal stripes on background (but labeled as "*A*" or "*D*" or "*G*") represent the subframes associated with the relay node. For example, the subframes 602, 604, 606 are the ones associated with the relay node; the subframes 608, 610 are the ones associated with the mobile communication device.

Moreover, from the top to the bottom, each row in FIG. 6C, FIG. 6D and FIG. 6E correspond to different configurations. For example, in FIG. 6C, since *Y*=1, the base station respectively grants the mobile communication device uplink wireless resource in the subframe 0, 1, 2, 5, 6 , 7 or 8 (the subframe labeled as "*G*"), and respectively grants the relay node uplink wireless resource in the subframe 1, 2, 3, 6, 7, or 8 (the subframe labeled as "*G*") and there is 1 subframe interval between the two processes. The relay node then forwards data to the base station in the subframe 5, 6, 7, 0, 1 or 2 (the subframe labeled as "*D*").

For example, referring to FIG. 6B, if *Y*=1, the base station grants uplink wireless resource to the mobile communication device in subframe 0, 1, 2, 5, 6 or 7, then the relay node is correspondingly granted the uplink wireless resource in subframe 1, 2, 3, 6, 7 or 8, and the relay node forwards the uplink data in subfame 5, 6, 7, 0, 1 or 2; if *Y*=2, the base station grants uplink wireless resource to the mobile communication device in subframe 9, 0, 1, 4, 5 or 6, then the relay node is correspondingly granted the uplink wireless resource in subframe 1, 2, 3, 6, 7 or 8, and the relay node forwards the uplink data in subfame 5, 6, 7, 0, 1 or 2; if *Y*=3, the base station grants uplink wireless resource to the mobile communication device in subframe 8, 9, 0, 3, 4 or 5, then the relay node is correspondingly granted the uplink wireless resource in subframe 1, 2, 3, 6, 7 or 8, and the relay node forwards the uplink data in subfame 5, 6, 7, 0, 1 or 2. The disclosure is not limited to the case where *Z*=4, and in other emobidments, the value of *Z* can be other integers based upon practical design parameters of the wireless relay system; the corresponding value of *Y* can be 1, 2, 3 or other integers,

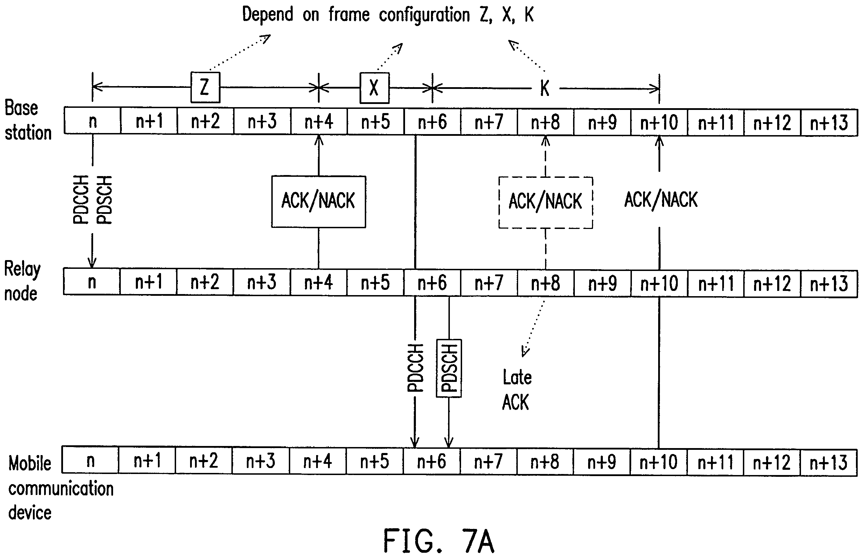

The following embodiment falls under the scope of the invention. FIG. 7A is schematic diagram illustrationg a HARQ process in a downlink transmission of a TDD mode of LTE system according a fourth exemoplary embodiment. FIG. 7A is mostly similar to FIG. 5A, except that there is an extra *K* value in FIG. 7A, and the values of *K*, *X*, *Z* are selected according to TDD mode configurations. In FIG. 7A, similar to FIG. 5A, the value of *Z* represents the timing delay (the number of subframes) between the relay node receives downlink PDCCH/PDSCH to the relay node replies the ACK/NACK signal. Moreoever, since the transmission result of the downlink data to the relay node, the base station may also delay transmitting PDCCH data to the mobile communication device, in *X* subframes. If the value of *X* is negative, it implicitly represents a late ACK. That is, the relay node transmits the ACK/NACK signal to the base station after the base station downlink transmits PDCCH data to the mobile communication device. In addition, in the downlink transmission process of the TDD mode, the base station and the relay node can simultaneously or cooperatively transmits control signal and/or data to the mobile communication device.

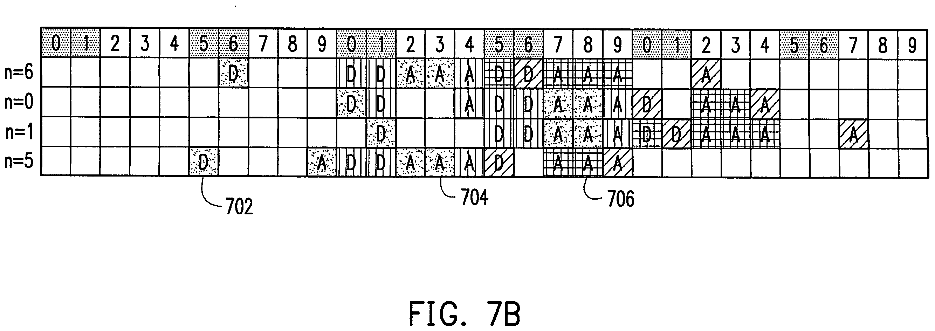

The values of *K* in FIG. 7A represents a time interval from the timing point where the mobile communication device receives the downlink data to the timing point where the mobile communication device replies ACK/NACK signal to the base station. FIG. 7B is a schematic diagram illurstating associations of subframes in every configuration according to FIG. 7A, and provides a configuration table converted from FIG. 7A. In the configuration tables of FIG. 7B, the subframe with diagonal stripes on background (but labeled as "*A*" or "*D*") represents the subframe associated with the mobile communication device; the subframes without diagonal stripes on background (but labeled as *"A"* or "*D*") represent the subframes associated with the relay node. Moreover, the subframe with thick frame lines (e.g., the subframe 702) represents a conflict situation, and it means that the relay node and the mobile communication device may transmit the ACK signal or the data to the base station in the same subframe. The subframe with less number of dots on background (e.g., the subframe 704) represents the subframe of a normal situation. The subframe with small squares on background (e.g., the subframe 706) represents a late ACK. In addition, the value of *n* shown in FIG. 7B are the subframe numbers, from the top to the bottom, *n*=6, 0, 1 or 5, and *Z≧*4.

For example, referring to FIG. 7B, if downlink wireless resource is granted in the subframe 6 (i.e., *n*=6) for transmitting the downlink data to the mobile communication device, then in a normal situation, the relay node can be granted wireless resource to transmit the downlink data in the subframe 0 or 1; in a (data) conflict situation, the relay node can be granted wireless resource to transmit the downlink data in the subframe 6; in a late ACK situation, the relay node can be granted wireless resource to transmit the downlink data in the subframe 5. Moreover, in a normal situation, the relay node can be granted wireless resource to reply ACK/NACK signal to the base station in the subframe 4. In a (ACK/NACK) conflict situation, the relay node can be granted wireless resource to reply ACK/NACK signal to the base station in the subframe 2; in a (data) conflict situation, the relay node can be granted wireless resource to reply ACK/NACK signal to the base station in the subframe 3; in a late ACK situation, the relay node can be granted wireless resource to reply ACK/NACK signal to the base station in the subframe 7, 8 or 9,

For another example, referring to FIG. 7B, when the subframe number *n*=0, in a normal situation, the relay node can be granted wireless resource to transmit the downlink data in the subframe 5 or 6; in a (data) conflict situation, the relay node can be granted wireless resource to transmit the downlink data in the subframe 0 or 1. Moreover, in a normal situation, the relay node can be granted wireless resource to reply ACK/NACK signal to the base station in the subframe 9. In a (ACK/NACK) conflict situation, the relay node can be granted wireless resource to reply ACK/NACK signal to the base station in the subframe 4; in a (data) conflict situation, the relay node can be granted wireless resource to reply ACK/NACK signal to the base station in the subframe 7 or 8; in a late ACK situation, the relay node can be granted wireless resource to reply ACK/NACK signal to the base station in the subframe 2 or 3.

In FIG. 7A, the aforementioned normal situation is that the relay node successfully receives the downlink data of the base station, and replies ACK/NACK signal to the the base station before transmitting the downlink data to the the mobile communication device; the aforementioned conflict situation is that, under the operation principle of the TDD UL-toDL switch-point periodicity shown in FIG. 3A, the base station can allocate the same subframe number for transmitting grant signal or transmitting data to the relay node and the mobile communication device; the aforementioned late ACK situation is that the relay node replies ACK/NACK signal to the base station after the base station transmits the downlink data to the mobile communication device. The subframe used for ACK/NACK signal may also be associated with the subframe used for transmitting the downlink data, and the association can be selected depending upon the value of *Z* and frame configurations of the TDD mode.

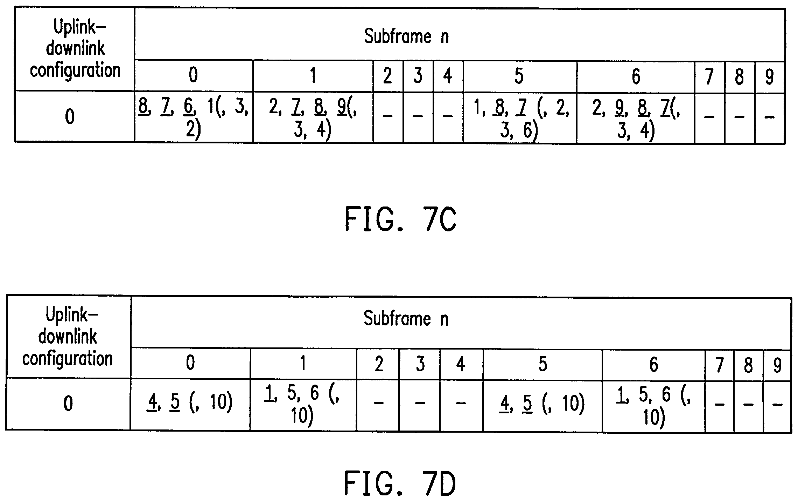

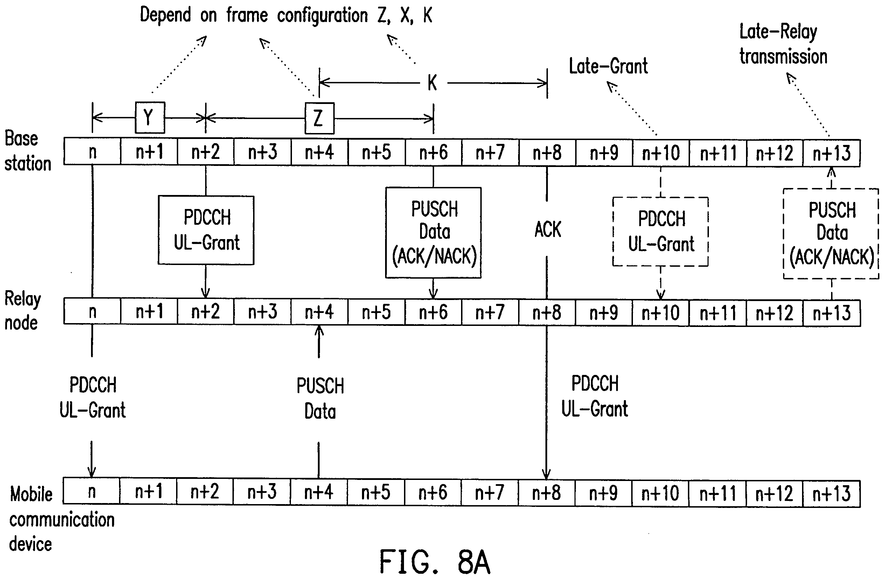

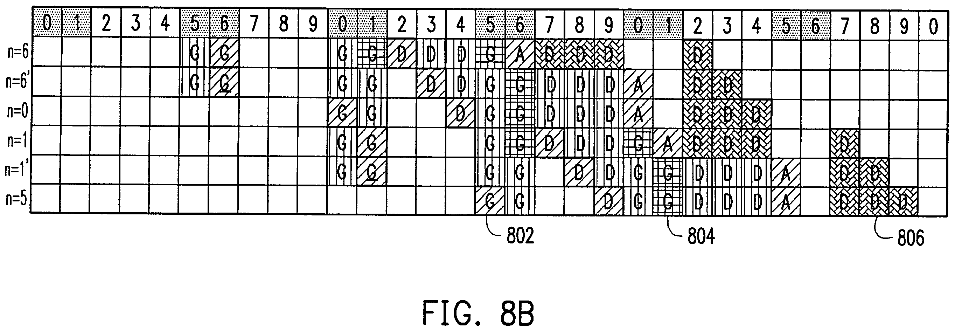

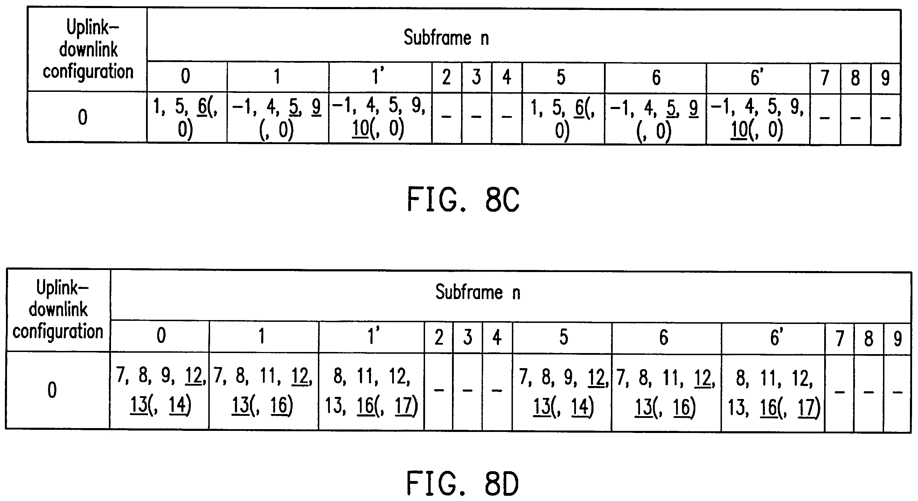

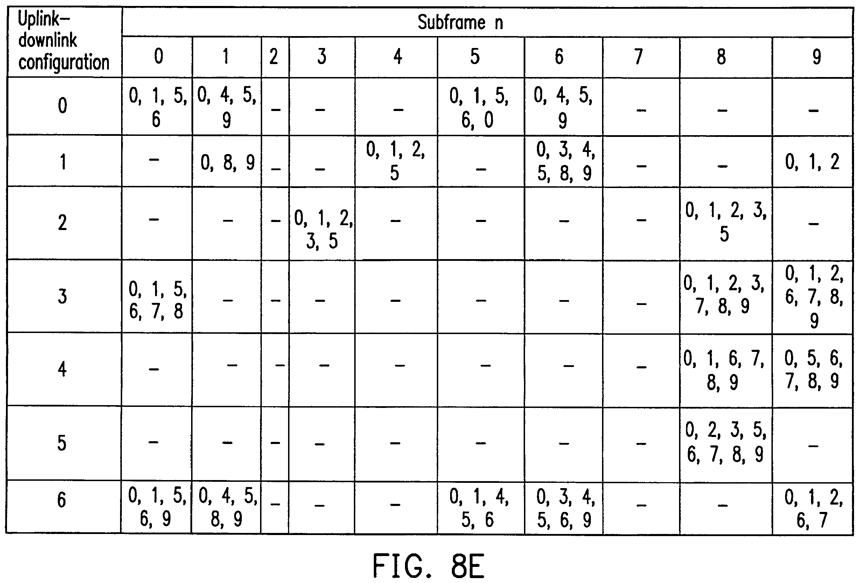

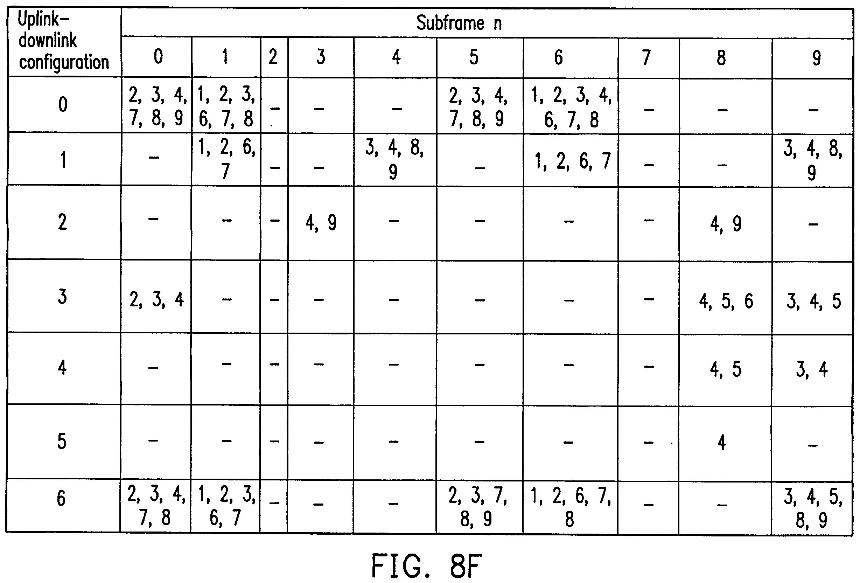

FIG. 7C summarizes a portion of a downlink transmission process in a TDD mode according to FIG. 7B. FIG. 7C illustrates that when the subframe "*n*" is granted for transmitting the downlink data, the subframe "*n-X*" can be granted for the relay node replying ACK/NACK signal to the base station, or due to the UL-to-DL switch-point periodicity, the subframe "*n-X* +10" can be granted for the relay node replying the ACK/NACK signal to the base station. In each table of FIG. 7C, the figure underscored (e.g., the figure 8 in the table of the subframe *n*=0 corresponding to the configuration 0) is a late ACK situation; the figure in a bracket (e.g., the (3, 2) in the table of the subframe *n*=0 corresponding to the configuration 0) is a conflict situation, and these principles can be applied to FIG. 7D. The figure in each table in FIG. 7C represents the value of *X*. For example, in a normal situation of the subrame *n*=0, the relay node can reply ACK/NACK signal to the base station in the subframe 4 or 9 (corresponding to *X*=6 or *X*=1); in a conflict situation of the subrame *n*=0, the relay node can reply ACKINACK signal to the base station in the subframe 7 or 8 (corresponding to *X*=3 or *X*=2); in a late ACK situation of the subrame *n*=0, the relay node can reply ACK/NACK signal to the base station in the subframe 2 or 3 (corresponding to *X*=8 or *X*=7).

FIG. 7D summarizes another portion of a downlink transmission process in a TDD mode according to FIG. 7B. FIG. 7D illustrates that when the subframe "*n*" is granted for transmitting the downlink data, the subframe "*n*-(*X*+*Z*)" can be granted for the relay node forwarding the downlink data to the mobile communication device, or due to the UL-to-DL switch-point periodicity, the subframe *"n-*(*X*+*Z*)+10*"* can be granted for the relay node forwarding the downlink data to the mobile communication device. For example, in a normal situation of the subrame *n*=0, the relay node can forward the downlink data to the mobile communication device in the subframe 5 or 6 (corresponding to *X*=5 or *X*=4); in a conflict situation of the subrame *n*=0, the relay node can forward the downlink data to the mobile communication device in the subframe 0 (corresponding to *X*=10). The disclosure is not limited to FIG. 7A to FIG. 7D, and in other embodiments, the downlink transmission methods of the TDD mode can also be operated in configuration 1, 2, 3, 4, 5 or 6.

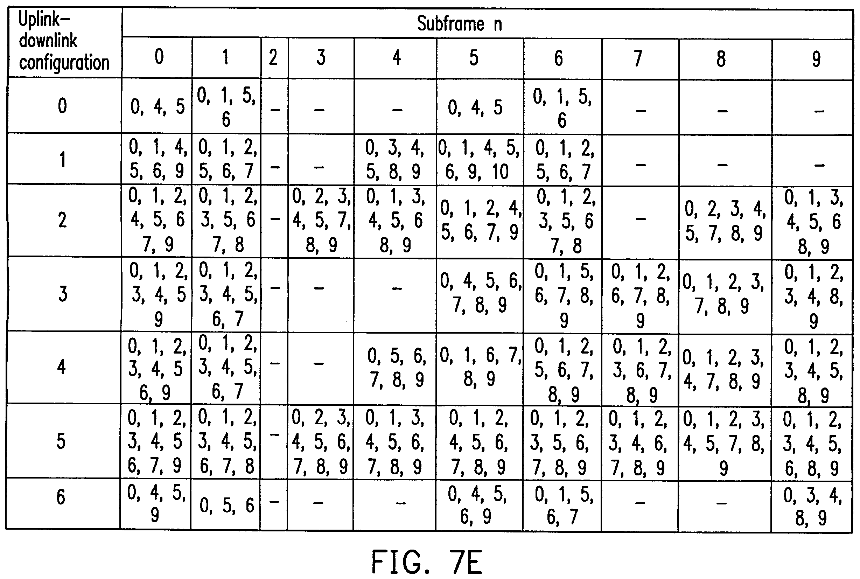

FIG. 7E summarizes downalink transmission processes of all configurations in a TDD mode according to FIG. 7A. In FIG. 7E, it is illustrated that, in configuration 0 to configuration 6, if the subframe "*n*" can be granted for transmitting the downlink data, the subframe "*n*-(*X*+*Z*)" or subframe "*n*-(*X*+*Z*)+10" can be granted to the relay node for forwarding the downlink data to the mobile communication device. The figures in the table of FIG. 7E are values of "*X*+*Z*", and *Z*≧4. In other words, the table in FIG. 7E records, in every configuration, the value of *X* corresponding to the specific subframe number *n* and the corresponding subframe number at which the relay node forwards the downlink data to the mobile communication device. For example, in configuration 0, when the eNB 124 transmits the downlink data to the relay node 126 in subframe 0, the relay node 126 can determine to forward the downlink data to the UE 136 in subframe 10, 6 or 6 (respectively corresponding to *X*+*Z* =0, *X*+*Z* =4, *X*+*Z* =5) according to the table in FIG. 7E.

FIG. 8A is schematic diagram illustrationg a HARQ process in an uplink transmission of a TDD mode of LTE system according a fifth exemoplary embodiment. FIG. 8A is mostly similar to FIG. 6A, except that there is an extra *K* value in FIG. 8A, and the values of *K*, *Y*, *Z* are selected according to TDD mode configurations. In FIG. 8A, similar to FIG. 6A, the value of *Y* represents the time interval (the number of subframes) from the timing point where the mobile communication device is granted uplink wireless resource to the timing point where the relay node is granted uplink wireless resource. If the value of *Y* is negative, it represents that the base station arranges granting uplink wireless resource to the relay node earlier than the arrangements of granting uplink wireless resource to the mobile communication device. In FIG. 8A, the value of *Z* represents the number of subframes (or the time interval) between the timing point where the relay node is gratned uplink wireless resource and the timing point where the relay node replies ACK/NACK signal to the mobile communication device or forwards the uplink data to the base station.

For example, in this uplink transmission of the TDD mode, the situation of late ACK represents that the base station grants the uplink wireless resource to the relay node for forwarding the uplink data from the mobile communication device after the the relay node transmits the ACK/NACK signal to the mobile communication device; the situation of late realy after represents that the relay node forwards the uplink data from the mobile communication device to the base station after the relay node replies ACK/NACK signal to the mobile communication device; the situation of conflict represents that the mobile communication device and the relay node transmits the uplink data or replies ACK/NACK in the same subframe.

The values of *K* in FIG. 8A represents a time interval from the timing point where the relay node receives the uplink data to the timing point where the relay node replies ACK/NACK signal to the mobile communication device. FIG. 8B is a schematic diagram illurstating associations of subframes in every configurarion according to FIG. 8A, and provides a configuration table converted from FIG. 8A. In the configuration table of FIG. 8B, the subframe with diagonal stripes on background (but labeled as "*A*" or "*D*" or "*G*") represents the subframe associated with the mobile communication device; the subframes without diagonal stripes on background (but labeled as "*A*" or "*D*" or "*G*") represent the subframes associated with the relay node. The subframes without diagonal stripes on background refer to the subframes with, for example, veritcal stripes, horizontal stripes, squares or weaved patterns on background. Moreover, the subframe with thick frame lines (e.g., the subframe 802) represents a conflict situation; the subframe with small squares on background (e.g., the subframe 804) represents a late grant situation; the subframe with weaved patterns on background (e.g., the subframe 806) represents a late relay situation. In addition, the value of *n* shown in FIG. 8B are the subframe numbers, from the top to the bottom, *n*=6, 6', 0, 1, 1' or 5, and *Z*≧4.

For example, referring to FIG. 8B, if uplink wireless resource is granted to the mobile communication device in the subframe 6 (i.e., *n*=6), then in a normal situation, the relay node can be granted to transmit the uplink data in subframe 3 or 4; in a (data) conflict situation, the relay node can be granted to transmit the uplink data in the subframe 2; in a late relay situation, the relay node can be granted to transmit the uplink data in the subframe 7, 8 or 9. Moreover, in a normal situation, the relay node can receive a grant signal of the uplink wireless resource by the base station in subframe 5 or 0; in a (grant) conflict situation, the relay node can receive the grant signal of the uplink wireless resource by the base station in subframe 6; in a late relay situation, the relay node can receive the grant signal of the uplink wireless resource by the base station in subframe 1 or 5,

For another example, referring to FIG. 8B, if the uplink wireless resource is granted in subframe 0, which means that when the subframe number *n*=0, in a normal situation, the relay node can be granted to transmit the uplink data in subframe 7, 8 or 9; in a (data) conflict situation, the relay node can be granted to transmit the uplink data in subframe 4; in a late relay situation, the relay node can be granted to transmit the uplink data in subframe 2, 3 or 4. Moreover, in a normal situation, the relay node can receive the grant signal of the uplink wireless resource from the base station in subframe 5. In a (Grant) conflict situation, the relay node can receive the grant signal of the uplink wireless resource from the base station in the subframe 0; in a late relay situation, the relay node can receive the grant signal of the uplink wireless resource from the base station in the subframe 6.

In FIG. 8A and FIG. 8B, the aforementioned normal situation is that the relay node successfully receives the uplink data of the the mobile communication device, and replies ACK/NACK signal to the the mobile communication device before transmitting the uplink data to the base station; the aforementioned conflict situation is that, under the operation principle of the TDD UL-toDL switch-point periodicity shown in FIG. 3A, the base station can allocate the same subframe number for transmitting a grant signal or transmitting data to the relay node and the mobile communication device; the aforementioned late relay situation is that the relay node forwards the uplink data to the base station after the relay node replies ACK/NACK signal to the mobile communication device. The subframe used for ACK/NACK signal may also be associated with the subframe used for transmitting the uplink data, and the association can be selected depending upon the value of *Z* and frame configurations of the TDD mode.

FIG. 8C summarizes a portion of an uplink transmission process in a TDD mode according to FIG. 8B. FIG. 8C illustrates that when the mobile communication device is is granted uplink wireless resource in the subframe "*n*"for transmitting the uplink data, the relay node can receive a grant signal from the base station in the subframe "*n*+*Y*", or due to the UL-to-DL switch-point periodicity, the relay node can receive the grant signal from the base station in the subframe "*n*+Y-10". In each table of FIG. 8C, the figure underscored (e.g., the figure 6 in the table of the subframe *n*=0 corresponding to the configuration 0) is a late grant situation or a late relay situation; the figure in a bracket (e.g., the (0) in the table of the subframe *n*=0 corresponding to the configuration 0) is a conflict situation, and these principles can be applied to FIG. 7D. The figures in each table in FIG. 7C represent the value of *Y*. For example, under the condition of 4≦*Z*<10, in a normal situation of the subrame *n*=0, the relay node can receive a grant signal from the base station in subframe 1 or 5 (corresponding to *Y*=1 or *Y*=5); in a conflict situation of the subrame *n*=0, the relay node can receive a grant signal from the base station in the subframe 0 (corresponding to *Y*=0); in a late relay situation of the subrame *n*=0, the relay node can receive a grant signal from the base station in the subframe 6 (corresponding to *Y*=6).

FIG. 8D summarizes another portion of an uplink transmission process in a TDD mode according to FIG. 8B. FIG. 8D illustrates that when the subframe "*n*" is granted for the mobile communication device transmitting the uplink data, the subframe "*n*+(*Y*+*Z*)" can be granted for the relay node forwarding the uplink data to the base station, or due to the UL-to-DL switch-point periodicity, the subframe "*n*+(*Y*+*Z*)+10" can be granted for the relay node forwarding the uplink data to the base station. For example, in a normal situation of the subrame *n*=0, the relay node can forward the uplink data to the base station in the subframe 7, 8 or 9 (corresponding to *Y* =7 or *Y* =8 or *Y*=9); in a conflict situation of the subrame *n*=0, the relay node can forward the uplink data to the base station in the subframe 14 (corresponding to *Y* =14); in a late relay situation of the subrame *n*=0, the relay node can forward the uplink data to the base station in the subframe 12 or 13 (corresponding to *Y* =12 or *Y* =13). The disclosure is not limited to FIG. 8A to FIG. 8D, and in other embodiments, the uplink transmission methods of the TDD mode can also be operated in configuration 1, 2, 3, 4, 5 or 6.

The subrame *n*=1 in FIG. 8B to FIG. 8D represents that the base station transmits a grant signal to the mobile communication device in the subrame 1, the mobile communication device transmits uplink data in subframe 7, and the base station replies ACK/NACK signal to the mobile communication device in subframe 1 of the next frame period. The subrame *n*=1' represents that the base station transmits a grant signal to the mobile communication device in the subrame 1, the mobile communication device transmits uplink data in subframe 8, and the base station replies ACK/NACK signal to the mobile communication device in subframe 5 of the next frame period. The subrame *n*=6 represents that the base station transmits a grant signal to the mobile communication device in the subrame 6, the mobile communication device transmits uplink data in subframe 2 of the next frame period, and the base station replies ACK/NACK signal to the mobile communication device in subframe 6 of the next frame period. The subrame *n*=6' represents that the base station transmits a grant signal to the mobile communication device in the subrame 6, the mobile communication device transmits uplink data in subframe 3 of the next frame period, and the base station replies ACK/NACK signal to the mobile communication device in subframe 0 of the further next frame period. In FIG. 8C, if *Y*=0, it represents that the grants signal can be simultaneously transmitted by the base station to the relay node and the mobile communication device.

FIG. 8E summarizes subframe numbers at which a relay node receives a grant signal of uplink wireless resource in uplink transmission processes of all configurations in a TDD mode according to FIG. 8A. In FIG. 8E, it is illustrated that, in configuration 0 to configuration 6, if the base station grants the mobile communication device to transmit uplink data in the subframe "*n*", the relay node can be granted uplink wireless resource for forwarding the uplink data to the base station in the subframe "*n*+(*Y*)" or subframe "*n*+(*Y*)-10". The figures in the table of FIG. 7E are values of "*Y*", and 4≦*Z*<10. In other words, the table in FIG. 8E records, in every configuration, the value of *Y* corresponding to the specific subframe number *n*, the corresponding subframe number at which the mobile communication device receives a grant signal of uplink wireless resource, and the corresponding subframe number at which the relay node forwards the uplink data to the base station. For example, in configuration 0, when the eNB 124 grants the uplink wireless resource to the UE 136 in subframe 0, the eNB 124 can determine to grant the uplink wireless resource to the relay node 126 in subframe 0, 1, 5 or 6 (respectively corresponding to *Y*=0, *Y*=1, *Y*=5 or *Y*=6) according to the table in FIG. 8E. If *Y*<0, it represents that the base station arranges granting the uplink wireless resource to the relay node earlier than the arrangement of granting the uplink wireless resource to the mobile communication device.

FIG. 8F summarizes subframe numbers at which a relay node forwards uplink data in uplink transmission processes of all configurations in a TDD mode according to FIG. 8A. In FIG. 8F, it is illustrated that, in configuration 0 to configuration 6, if the base station transmits a grant signal of uplink wireless resource to the relay node in the subframe "*n*", the relay node can be granted uplink wireless resource for forwarding the uplink data to the base station in the subframe "*n*+(*Y*+*Z*)" or subframe "*n*+(*Y*+*Z*)-10". The figures in the table of FIG. 8F are values of "*Y*+*Z*", and 4≦*Z*<10. In other words, the table in FIG. 8F records, in every configuration, the value of *Y* corresponding to the specific subframe number *n,* the corresponding subframe number at which the relay node receives a grant signal of the uplink wireless resource, and the corresponding subframe number at which the relay node forwards the uplink data to the base station. For example, in configuration 0, when the eNB 124 grants the uplink wireless resource to the relay node 126 in subframe 0, the relay node 126 can determine to forward the uplink data of the UE 136 to the eNB 124 in subframe 2, 3, 4, 7, 8 or 9 (respectively corresponding to *Y*+*Z*=2, *Y*+*Z*=3, *Y*+*Z*=4, *Y*+*Z*=7*, Y*+*Z*=8 or *Y*+*Z*=9) according to the table in FIG. 8F.

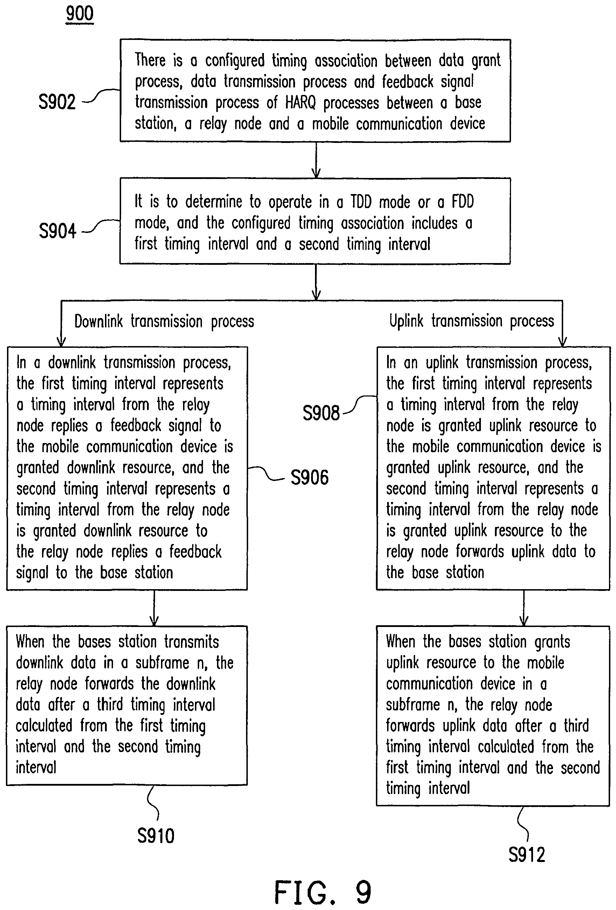

After the transmission methods for a wireless relay system of the first exemplary embodiment to the fifth exemplary embodiment are introduced above in accordance with FIG. 5A to FIG. 8F, these transmission methods for a wireless relay system can be briefly summarized as a flowchart as illustrated in FIG. 9 below. FIG. 9 is a flowchart illustrating a transmission method 900 for a wireless relay system summarized from the first exemplary embodiment to the fifth exemplary embodiment. The transmission method 900 is adapted for a wireless relay communication system and enables at least a base station in the wireless relay communication system, with facilitation of at least a relay node, to provide a relay service to at least a mobile communication device.

The transmission method 900 can be implemented by storing the configuration tables shown in FIG. 5B-FIG. 5D, FIG. 6C-FIG. 6E, FIG. 7E and FIG. 8E-FIG. 8F on the base station, the relay node and the mobile communication device, so as to avoid the situations of dynamically assigning indication signals. The base station, the relay node and the mobile communication device can thus perform a grant signal transmission process, a data transmission process and a feedback signal transmission process with a configured timing association or a fixed timing association according to the configuration tables. In addition, an uplink grant signal just appears in the uplink data transmission, but there could be no grant signal for the downlink data transmission.

In step S902, there is a configured timing association or a fixed timing association between at least a grant signal transmission process, at least a data transmission process and at least a feedback signal transmission process of HARQ processes between the base station, the relay node and the mobile communication device. Referring to FIG. 9, the data transmission process can include an uplink data transmission process and a downlink data transmission process, and, at the same time, can also include a relay node forwarding the uplink data to the base station and the relay node forwarding the downlink data to the mobile communication device. Moreover, the transmission method 900 can be operated in a TDD mode or in a FDD mode, so in step 5904, it is to determine (or decide) to operate in a TDD mode or a FDD mode, and the configured timing association include a first time interval and a second time interval. Furthermore, in the step S904, it is further to determine whether the transmission method 900 is operated in a downlink transmission process or an uplink transmission process. If it is to be operated in the uplink transmission process, then steps S906, S910 are executed after the step S904. If it is to be operated in the downlink transmission process, then steps S908, S912 are executed after the step S904.

In step S906, in a downlink transmission process, the first time interval represents a time interval from the timing point where the relay node replies a feedback signal to the timing point where the mobile communication device is granted downlink wireless resource, and the second time interval represents a time interval from the timing point where the relay node is granted downlink wireless resource to the timing point where the relay node replies a feedback signal to the base station..

In step S910, when the bases station transmits the downlink data in a subframe *n*, the relay node forwards the downlink data after a third time interval calculated from the first time interval and the second time interval.

In step S908, in an upink transmission process, the first time interval represents a time interval from the timing point where the relay node is granted uplink wireless resource to the mobile communication device is granted uplink resource, and the second time interval represents a time interval from the timing point where the relay node is granted uplink wireless resource to the timing point where the relay node forwards uplink data to the base station.

In step S912, when the bases station grants uplink wireless resource to the mobile communication device in a subframe *n,* the relay node forwards the uplink data after a third time interval calculated from the first time interval and the second time interval.

To be further illustrated following the step S910, if it is operated in the downlink transmission process of the FDD mode, then meanings and timing associations of the first time interval, such as the value of *X*, and the second time interval, such as the value of *Z* can be referred to the exemparly embodiment shown in FIG. 5A. Referring to FIG. 5A and the configuration tables similar to those shown in FIG. 5B-FIG. 5C, it can respectively determine the subframe for the relay node receiving the downlink data, the subframe for the mobile communication device receiving the downlink data, the subframe for the relay node replying the feedback signal, the subframe for the relay node forwarding the downlink data and the subframe for the mobile communication device replying the feedback signal, based upon the configurations of the wireless relay communication system, the configured values of *X* and *Z*, and subframe for the base station transmitting the downlink data. The values of *X* and *Z* can be referred to assocatied descriptions of FIG. 5A, so they are not repeated herein.

To be further illustrated following the step S912, if it is operated in the uplink transmission process of the FDD mode, then meanings and timing associations of the first time interval, such as the value of *Y*, and the second time interval, such as the value of *Z* can be referred to the exemparly embodiment shown in FIG. 6A-FIG. 6B. Referring to FIG. 6A-FIG. 6B and the configuration tables similar to those shown in FIG. 6C-FIG. 6E, it can respectively determine the subframe for the relay node receiving the grant signal, the subframe for the mobile communication device receiving the uplink data, the subframe for the relay node replying the feedback signal, the subframe for the mobile communication device transmitting the uplink data, the subframe for the relay node forwarding the uplink data and the subframe for the base station replying the feedback signal, based upon the configurations of the wireless relay communication system, the configured values of *Y* and *Z*, and subframe for the base station transmitting the grant signal to the mobile communication device. The values of *Y* and *Z* can be referred to assocatied descriptions of FIG. 6A, so they are not repeated herein.

To be further illustrated following the step S910, if it is operated in the downlink transmission process of the TDD mode, then meanings and timing associations of the first time interval, such as the value of *X*, and the second time interval, such as the value of *Z* can be referred to the exemparly embodiment shown in FIG. 7A. Referring to FIG. 7A and the configuration tables similar to those shown in FIG. 7E, it can respectively determine the subframe for the relay node receiving the downlink data, the subframe for the mobile communication device receiving the downlink data, the subframe for the relay node replying the feedback signal, the subframe for the relay node forwarding the downlink data and the subframe for the mobile communication device replying the feedback signal, based upon the configurations of the wireless relay communication system, the configured values of *X* and *Z*, and subframe for the base station transmitting the downlink data. The values of *X* and *Z* can be referred to assocatied descriptions of FIG. 7A, so they are not repeated herein.

To be further illustrated following the step S912, if it is to be operated in the uplink transmission process of the TDD mode, then meanings and timing associations of the first time interval, such as the value of *Y*, and the second time interval, such as the value of *Z* can be referred to the exemparly embodiment shown in FIG. 8A. Referring to FIG. 8A and the configuration tables similar to those shown in FIG. 8E-FIG. 8F, it can respectively determine the subframe for the relay node receiving the grant signal, the subframe for the mobile communication device receiving the uplink data, the subframe for the relay node replying the feedback signal, the subframe for the mobile communication device transmitting the uplink data, the subframe for the relay node forwarding the uplink data and the subframe for the base station replying the feedback signal, based upon the configurations of the wireless relay communication system, the configured values of *Y* and *Z,* and subframe for the base station transmitting the grant signal to the mobile communication device. The values of *Y* and *Z* can be referred to assocatied descriptions of FIG. 8A, so they are not repeated herein.

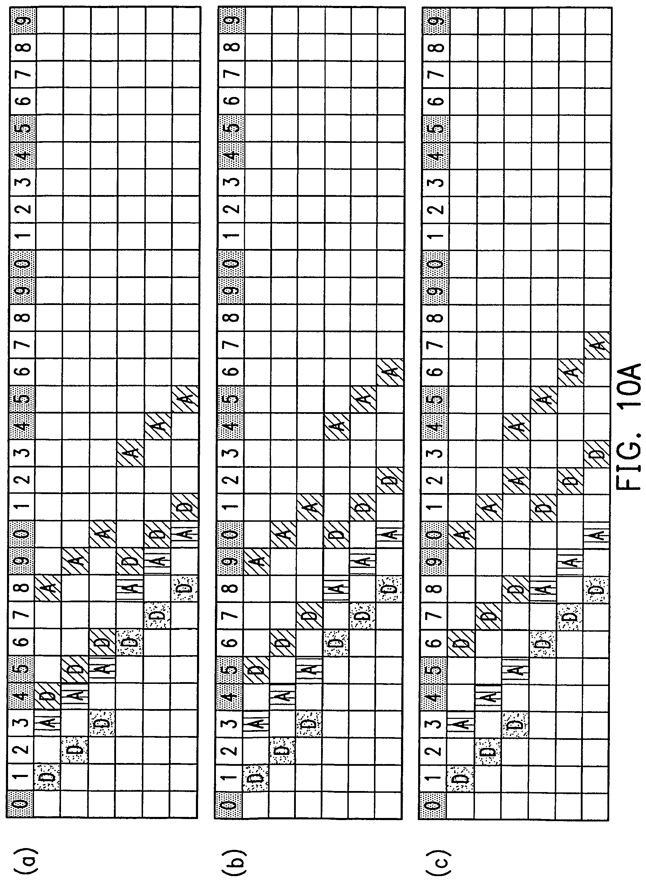

Similar to FIG. 9, the situations of dynamically assigning indication signals can be avoided by storing the following configuration tables (or called mapping tables) shown in FIG. 10A-FIG. 13H on the base station, the relay node and the mobile communication device, so as to avoid the situations of. The base station, the relay node and the mobile communication device can thus perform a grant signal transmission process, a data transmission process, a feedback signal transmission process and an acknowledgement signal transmission process with a configured timing association or a fixed timing association according to the configuration tables. In addition, an uplink grant signal just appears in the uplink data transmission, but there could be no grant signal for the downlink data transmission.

FIG. 10A-FIG. 10I are schematic diagrams respectively illustrating associations of subfrarmes in every configuration of different embodiments according to FIG. 5A.

In FIG. 10A, *Z*=2, and the sub-diagrams (a), (b), (c) respectively correspond to *X*=1*, X*=2*, X*=3*.* Each row in the sub-diagrams (a), (b), (c) of FIG. 10A respectively correspond to different configurations.

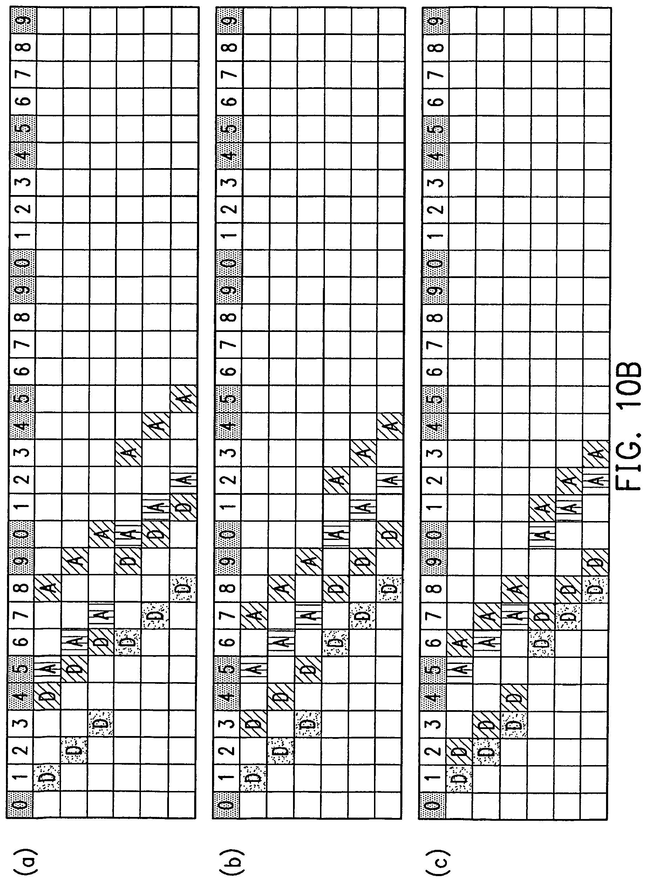

In FIG. 10B, Z=4, and the sub-diagrams (a), (b), (c) respectively correspond to *X*=-1, *X*=-2*, X*=-3. Each row in the sub-diagrams (a), (b), (c) of FIG. 10B respectively correspond to different configurations.

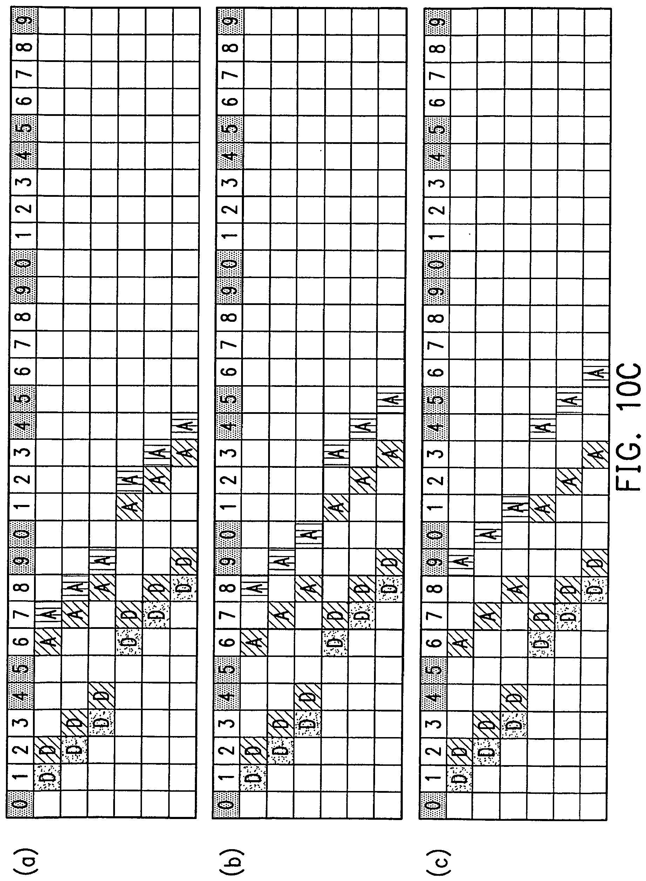

In FIG. 10C, the sub-diagrams (a), (b), (c) respectively correspond to *Z*=6 and *X*=-5, *Z*=7 and *X*=-6, and *Z*=8 and *X*=-7. Each row in the sub-diagrams (a), (b), (c) of FIG. 10C respectively correspond to different configurations.

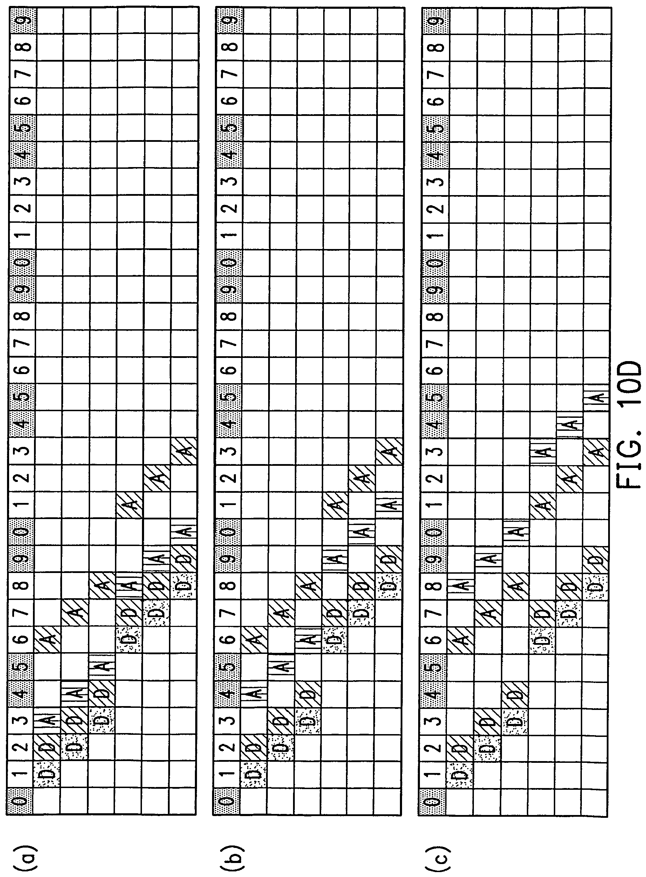

In FIG. 10D, the sub-diagrams (a), (b), (c) respectively correspond to *Z*=2 and *X*=-1, *Z*=3 and *X*=-2, and *Z*=7 and *X*=-6. Each row in the sub-diagrams (a), (b), (c) of FIG. 10D respectively correspond to different configurations.

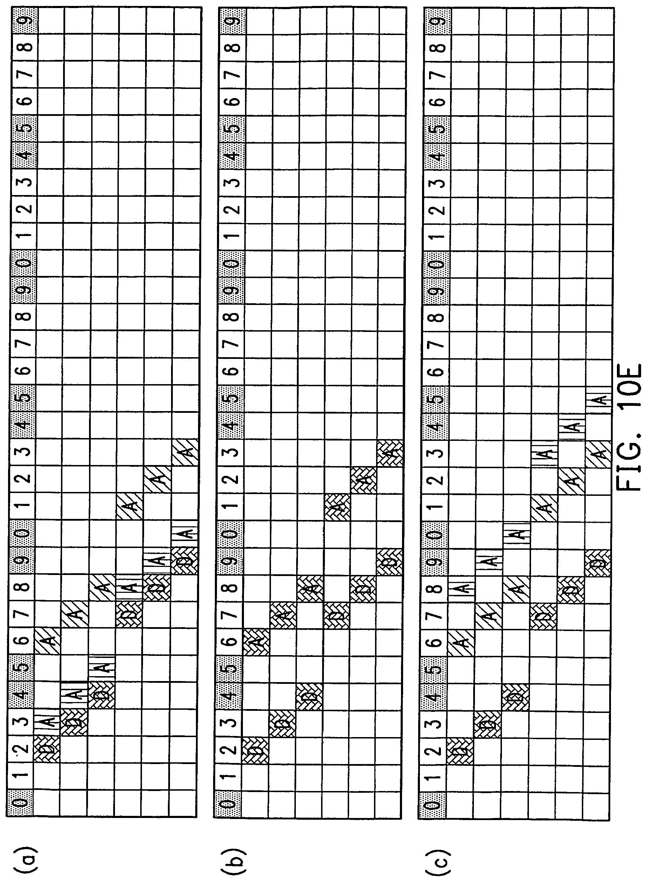

In FIG. 10E, the sub-diagrams (a), (b), (c) respectively correspond to *Z*=2 and *X*=-1, *Z*=3 and *X*=-2, and *Z*=7 and *X*=-6, and illustratre the situation of a simultaneous transmission of the base station and the relay node. Referring to the sub-diagrams (a), (b), (c) of FIG. 10E, if the relay node receives the downlink data from the base stationh in subframe 3, then the relay node immediately forwards the downlink data to the mobile communication device, and the relay node replies ACK/NACK signal to the base station in frame 4, 7 or 9; if the relay node receives the downlink data from the base stationh in subframe 4, then the relay node immediately forwards the downlink data to the mobile communication device, and the relay node replies ACK/NACK signal to the base station in frame 5, 8 or 0; if the relay node receives the downlink data from the base stationh in subframe 9, then the relay node immediately forwards the downlink data to the mobile communication device, and the relay node replies ACK/NACK signal to the base station in frame 0, 3 or 5. Each row in the sub-diagrams (a), (b), (c) of FIG. 10E respectively correspond to different configurations.

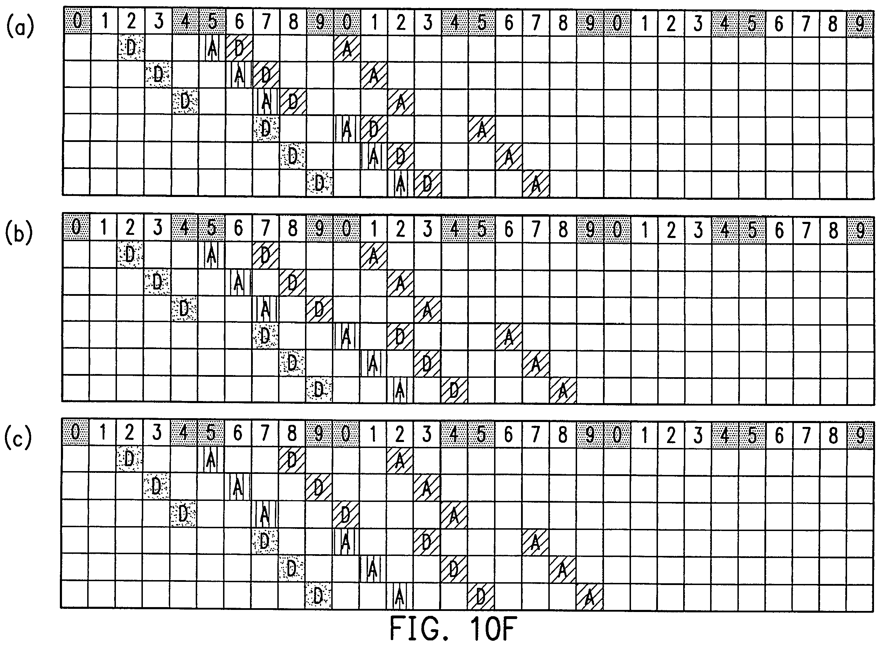

In FIG. 10F, *Z*=3, and the sub-diagrams (a), (b), (c) respectively correspond to *X*=1, *X*=2, *X*=3. Each row in the sub-diagrams (a), (b), (c) of FIG. 10F respectively correspond to different configurations.

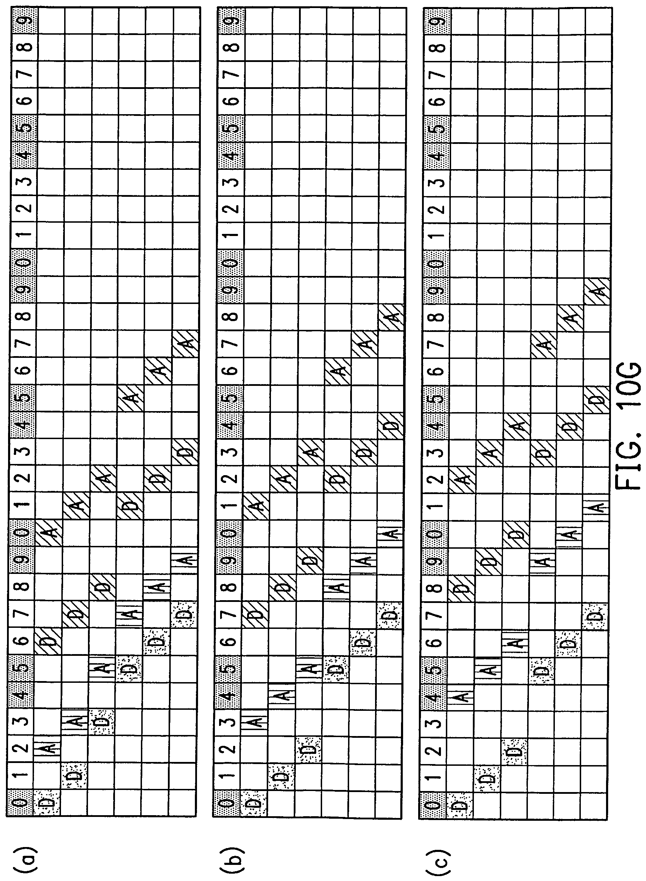

In FIG. 10G, *X*=4, and the sub-diagrams (a), (b), (c) respectively correspond to *Z*=2, *Z*=3, *Z*=4. Each row in the sub-diagrams (a), (b), (c) of FIG. 10G respectively correspond to different configurations.

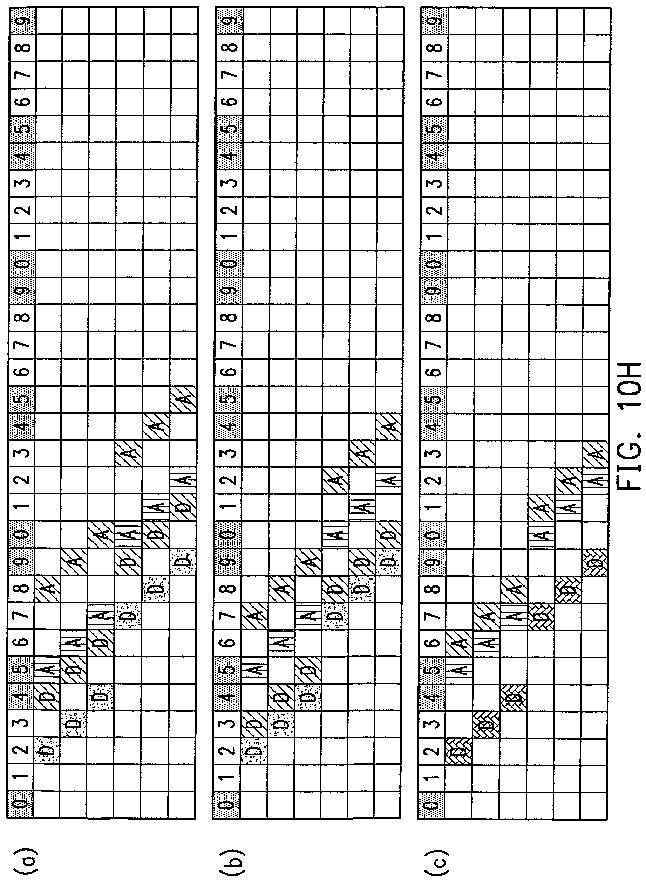

In FIG. 10H, *Z*=3, and the sub-diagrams (a), (b), (c) respectively correspond to *X*=-1, *X*=-2, *X*=-3*.* Each row in the sub-diagrams (a), (b), (c) of FIG. 10H respectively correspond to different configurations.

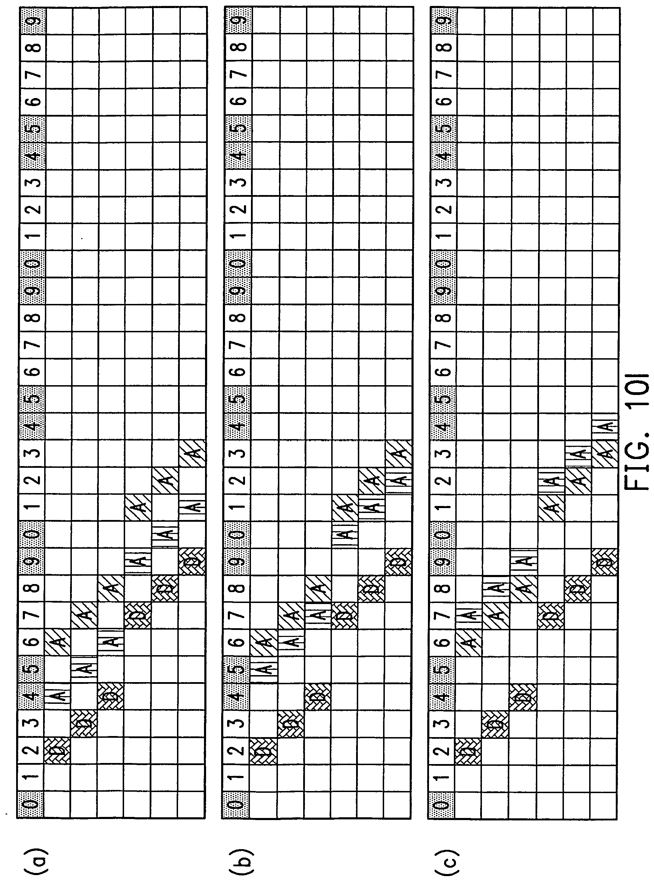

In FIG. 10I, and the sub-diagrams (a), (b), (c) respectively correspond to *Z*=2 and *X*=-2, *Z*=3 and *X*=-3, and Z=5 and *X*=-5. Each row in the sub-diagrams (a), (b), (c) of FIG. 10I respectively correspond to different configurations.

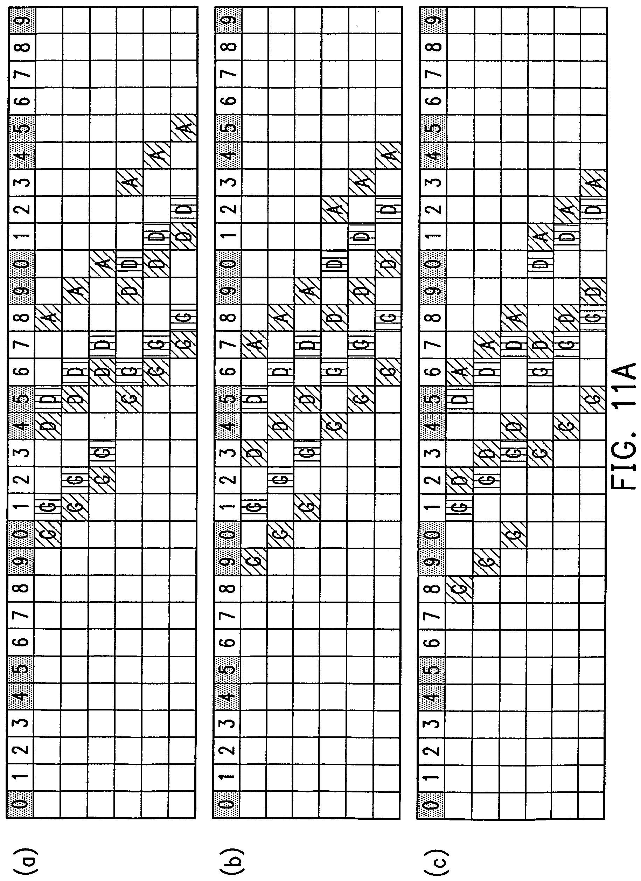

FIG. 11A-FIG. 11I are schematic diagrams respectively illustrating associations of subfrarmes in every configuration of different embodiments according to FIG. 6A.

In FIG. 11A, *Z*=4, and the sub-diagrams (a), (b), (c) respectively correspond to *Y*=1, *Y*=2, *Y*=3. Each row in the sub-diagrams (a), (b), (c) of FIG. 11A respectively correspond to different configurations.

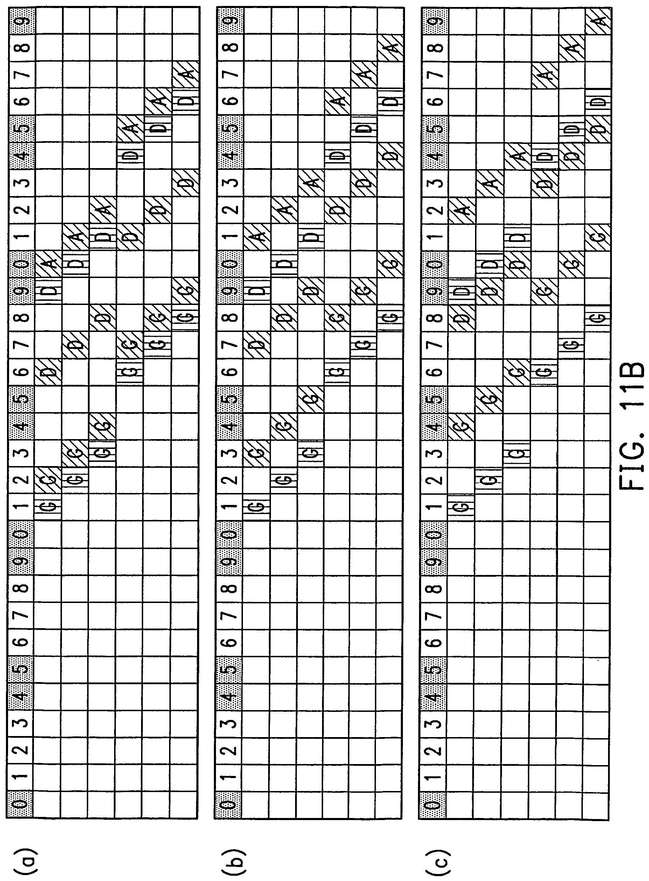

In FIG. 11B, *Z*=8, and the sub-diagrams (a), (b), (c) respectively correspond to *Y*=-1, *Y*=-2, *Y*=-3. Each row in the sub-diagrams (a), (b), (c) of FIG. 11B respectively correspond to different configurations.

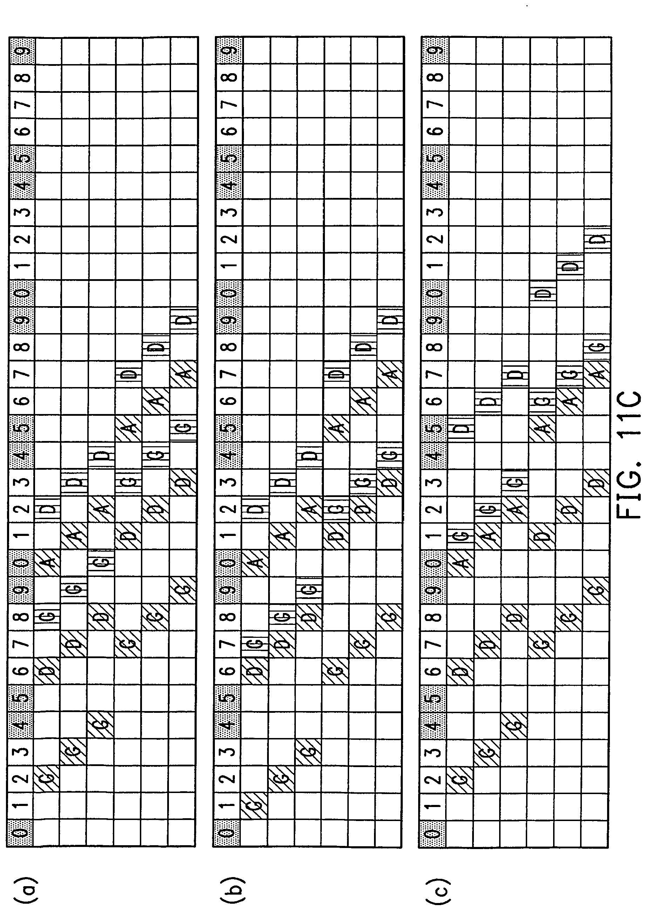

In FIG. 11C, the sub-diagrams (a), (b), (c) respectively correspond to *Y*=6 and *Z*=4, *Y*=5 and *Z*=5, *Y*=9 and *Z*=4, and illustrates the situations of delay transmission. Referring to the sub-diagrams (a), (b), (c) of FIG. 11C, if the relay node is granted uplink wireless resource (i.e., a data grant signal is received from the base statione) in subframe 3, then the relay node transmits HARQ data to the base station in subframe 7 or 8; if the relay node is granted uplink wireless resource in subframe 4, then the relay node transmits HARQ data to the base station in subframe 8 or 9; if the relay node is granted uplink wireless resource in subframe 8, then the relay node transmits HARQ data to the base station in subframe 2 or 3; if the relay node is granted uplink wireless resource in subframe 9, then the relay node transmits HARQ data to the base station in subframe 3 or 4. Each row in the sub-diagrams (a), (b), (c) of FIG. 11C respectively correspond to different configurations.

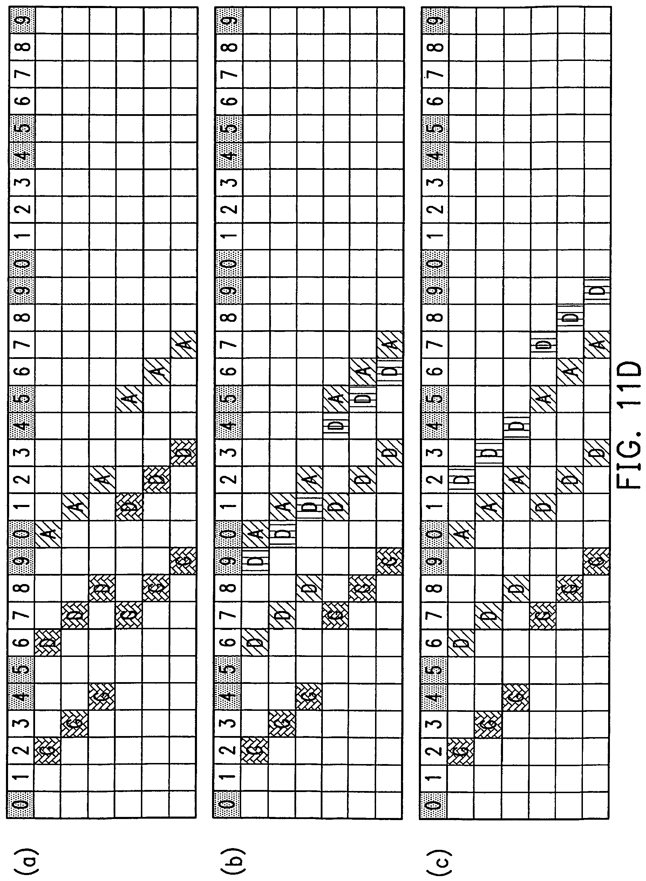

In FIG. 11D, *Y*=4, and the sub-diagrams (a), (b), (c) respectively correspond to *Z*=4, *Z*=7, *Z*=10. Each row in the sub-diagrams (a), (b), (c) of FIG. 11D respectively correspond to different configurations.

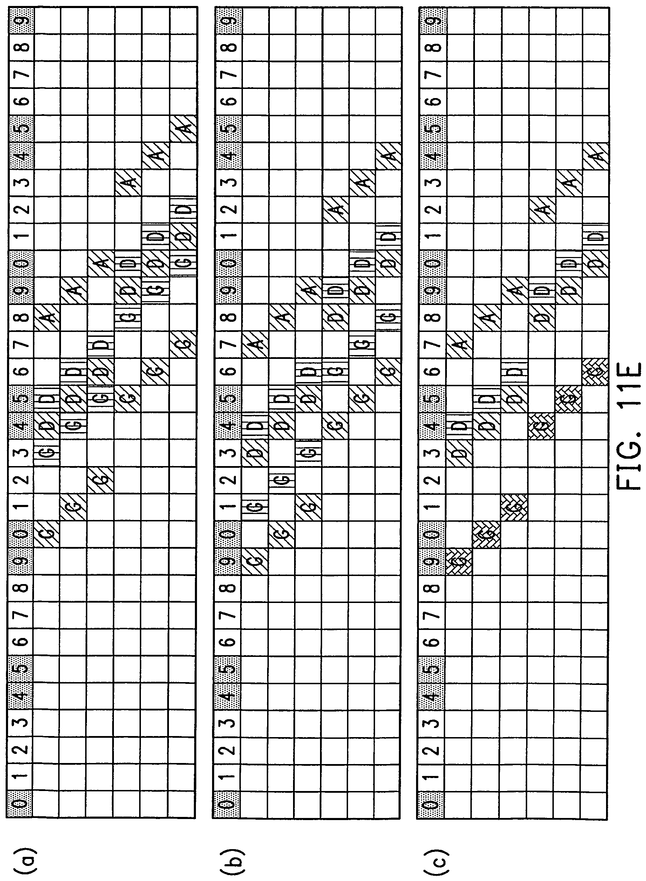

In FIG. 11E, the sub-diagrams (a), (b), (c) respectively correspond to *Y*=3 and Z=2, *Y*=2 and *Z*=3, *Y*=0 and *Z*=5. Each row in the sub-diagrams (a), (b), (c) of FIG. 11E respectively correspond to different configurations.

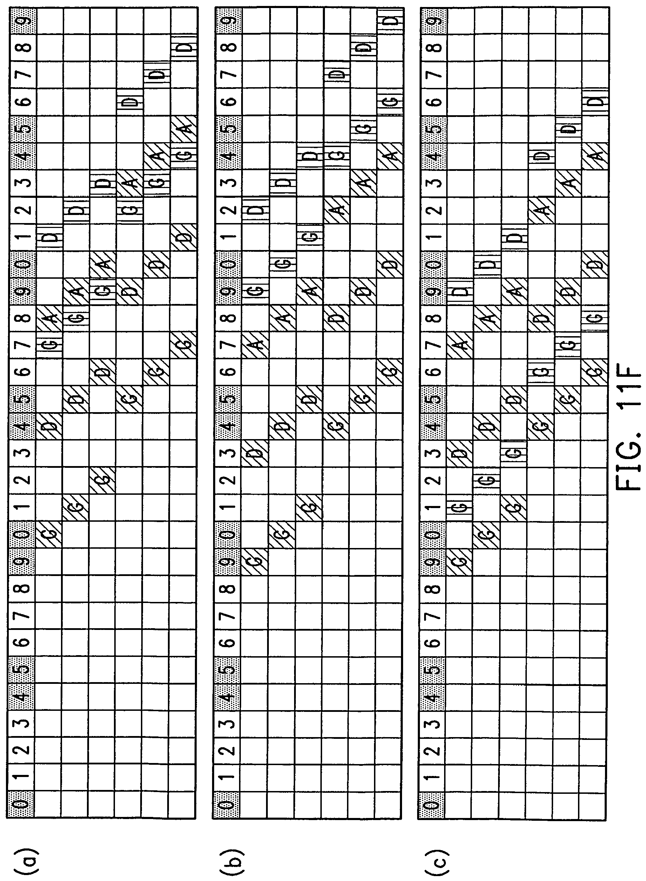

In FIG. 11F, the sub-diagrams (a), (b), (c) respectively correspond to *Y*=7 and *Z*=4, *Y*=10 and *Z*=3, *Y*=2 and *Z*=8. Each row in the sub-diagrams (a), (b), (c) of FIG. 11F respectively correspond to different configurations.

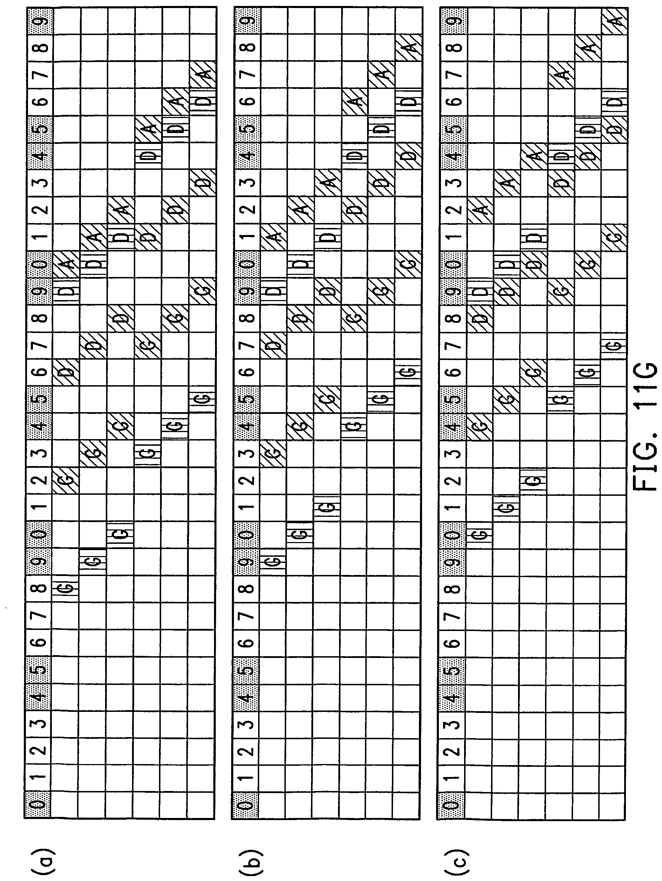

In FIG. 11G, *Y*=-4, and the sub-diagrams (a), (b), (c) respectively correspond to *Z*=11, *Z*=10, *Z*=9. Each row in the sub-diagrams (a), (b), (c) of FIG. 11G respectively correspond to different configurations.

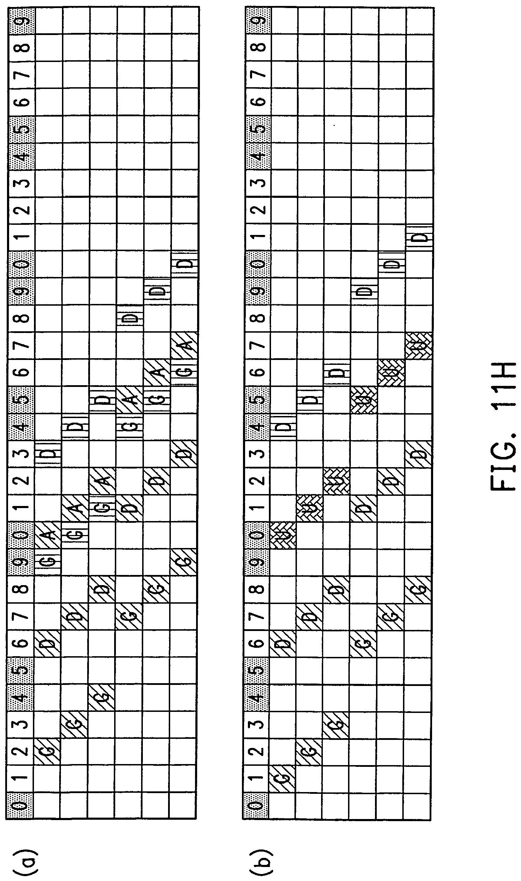

In FIG. 11H, *Z*=4, and the sub-diagrams (a), (b), (c) respectively correspond to *Y*=7, *Y*=8. Each row in the sub-diagrams (a), (b), (c) of FIG. 11H respectively correspond to different configurations. The subframe labeled "*U*" in the sub-diagram (b) represents the subframe where the base station replies ACK/NACK signal to the mobile communication device, and the base station can also grant the uplink wireless resource to the relay node in the same subframe. Each row in the sub-diagrams (a), (b), (c) of FIG. 11H respectively correspond to different configurations.

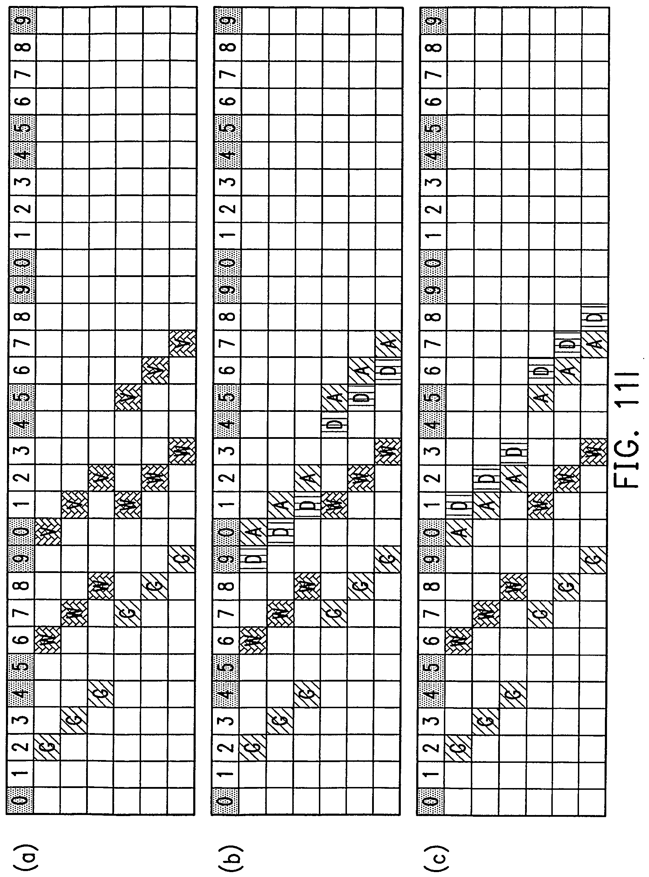

In FIG. 11I, *Y*=4, and the sub-diagrams (a), (b), (c) respectively correspond to *Z*=4, *Z*=3, *Z*=5. Each row in the sub-diagrams (a), (b), (c) of FIG. 11G respectively correspond to different configurations. The subframe labeled "*V*" in the sub-diagram (b) represents the subframe where the base station replies ACK/NACK signal to the mobile communication device, and the relay node can also forward the uplink datat to the base station in the same subframe. The subframe labeled "*W*" in the sub-diagram (b) represents the subframe where the base station grantes the uplink wireless resource to the relay node, and the mobile communication device can also transmit the uplink datat to the relay node/the base station in the same subframe. Each row in the sub-diagrams (a), (b), (c) of FIG. 11I respectively correspond to different configurations.

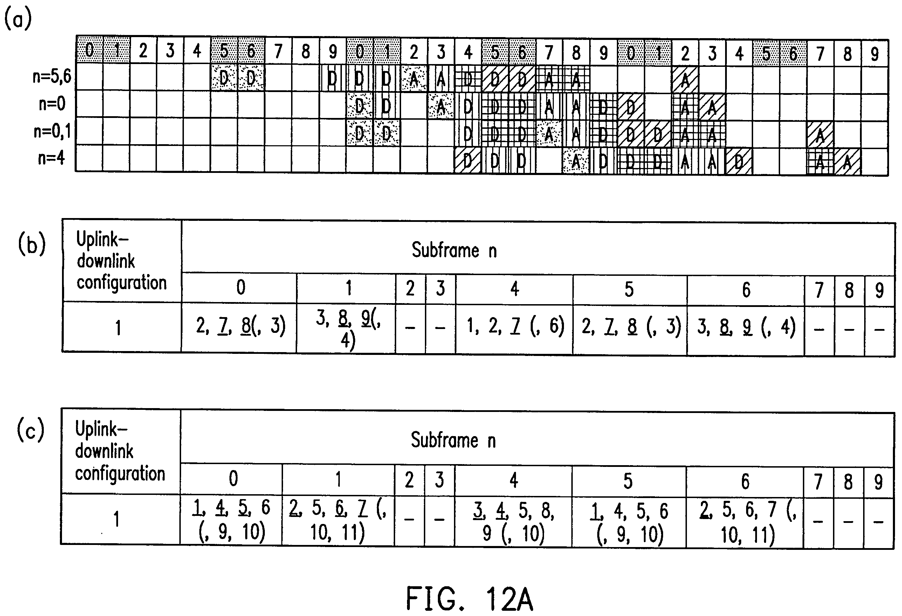

FIG. 12A-FIG. 12F are schematic diagrams respectively illustrating associations of subframes in configurion 1 to configuration 6 according to FIG. 7A, and summarizing the downlink transmission process of the TDD mode. The sub-diagrams (a) of FIG. 12A-FIG. 12F respectively illustrate associations of subframes in configuration 1 to configuration 6, The sub-diagrams (b), (c) of FIG. 12A-FIG. 12F respectively correspond to configuration 1 to configuration 6 in the summarized downlink transmission processes of the TDD mode. Referring to FIG. 7B, the configuration is 0 in FIG. 7B, and the relay node can receive the downlink data in subframe 0, 1, 5 or 6, and the relay node can reply ACK/NACK signal in subframe 2, 3, 4, 7, 8, or 9 to the base station.

In FIG. 12A, the configuration is 1. Referring to the sub-diagram (a) of FIG. 12A, the relay node can receive the downlink data in subframe 0, 1, 4, 5, 6 or 9, and the relay node can reply ACK/NACK signal in subframe 2, 3, 7 or 8 to the base station. In the sub-diagrams (b), (c) of FIG. 12A, the figure underscored represents a late ACK situation, and the figure in a bracket represents a conflict situation.

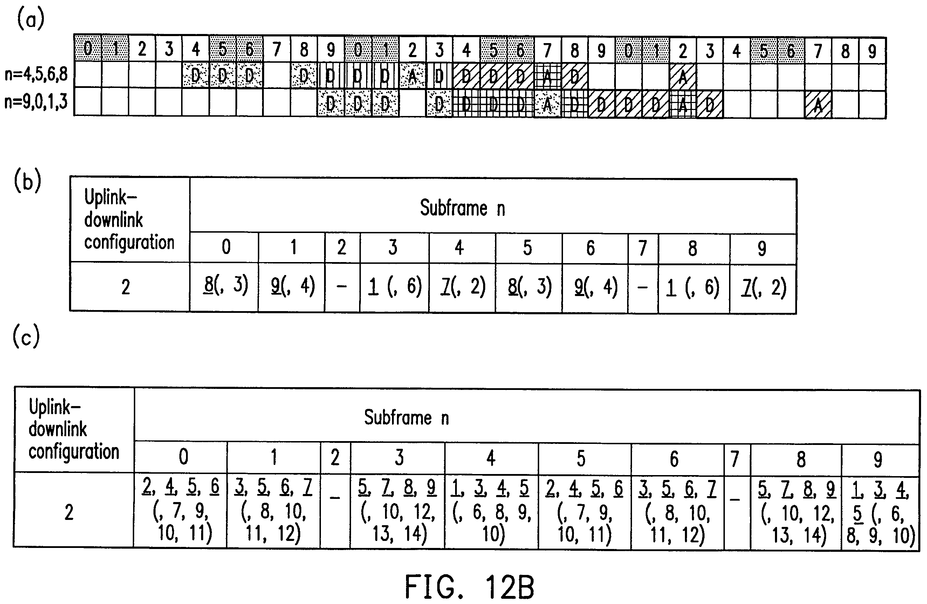

In FIG. 12B, the configuration is 2. Referring to the sub-diagram (a) of FIG. 12B, the relay node can receive the downlink data in subframe 0, 1, 3, 4, 5, 6, 8 or 9, and the relay node can reply ACK/NACK signal in subframe 2 or 7 to the base station. In the sub-diagrams (b), (c) of FIG. 12B, the figure underscored represents a late ACK situation, and the figure in a bracket represents a conflict situation.

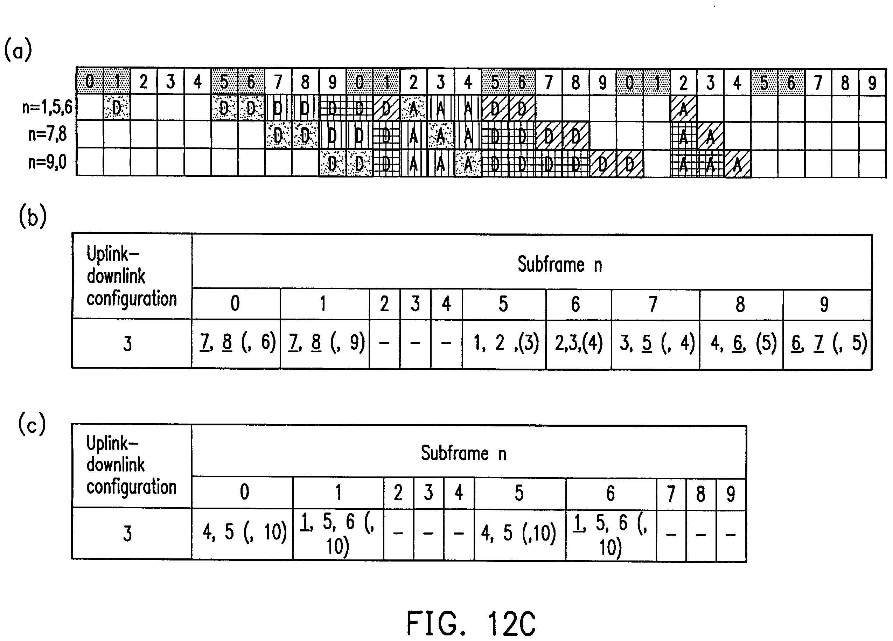

In FIG. 12C, the configuration is 3, Referring to the sub-diagram (a) of FIG. 12C, the relay node can receive the downlink data in subframe 0, 1, 5, 6, 7, 8 or 9, and the relay node can reply ACK/NACK signal in subframe 2, 3 or 4 to the base station. In the sub-diagrams (b), (c) of FIG. 12C, the figure underscored represents a late ACK situation, and the figure in a bracket represents a conflict situation.

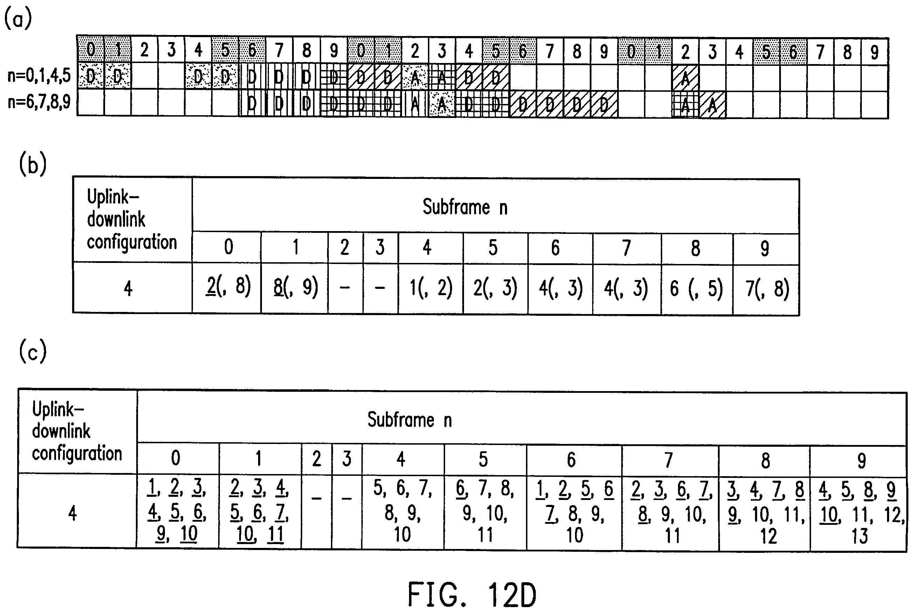

In FIG. 12D, the configuration is 4. Referring to the sub-diagram (a) of FIG. 12D, the relay node can receive the downlink data in subframe 0, 1, 4, 5, 6, 7, 8 or 9, and the relay node can reply ACK/NACK signal in subframe 2 or 3 to the base station. In the sub-diagrams (b), (c) of FIG. 12D, the figure underscored represents a late ACK situation, and the figure in a bracket represents a conflict situation.

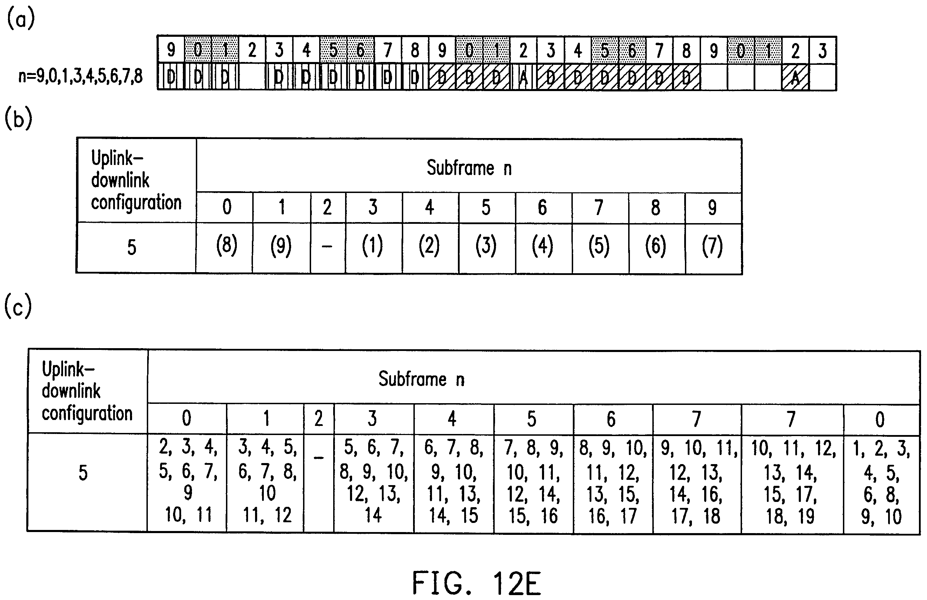

In FIG. 12E, the configuration is 5. Referring to the sub-diagram (a) of FIG. 12E, the relay node can receive the downlink data in subframe 0, 1, 3, 4, 5, 6, 7, 8 or 9, and the relay node can reply ACK/NACK signal in subframe 2 to the base station. In the sub-diagrams (b), (c) of FIG. 12E, the figure underscored represents a late ACK situation, and the figure in a bracket represents a conflict situation.

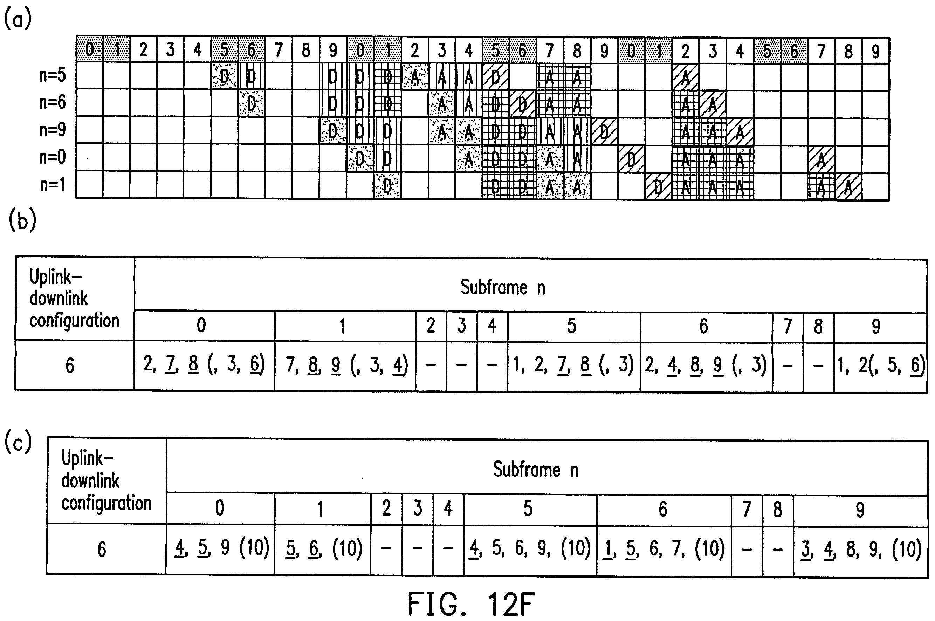

In FIG. 12F, the configuration is 6. Referring to the sub-diagram (a) of FIG. 12F, the relay node can receive the downlink data in subframe 0, 1, 5, 6 or 9, and the relay node can reply ACK/NACK signal in subframe 2, 3, 4, 7, or 8 to the base station. In the sub-diagrams (b), (c) of FIG. 12F, the figure underscored represents a late ACK situation, and the figure in a bracket represents a conflict situation,

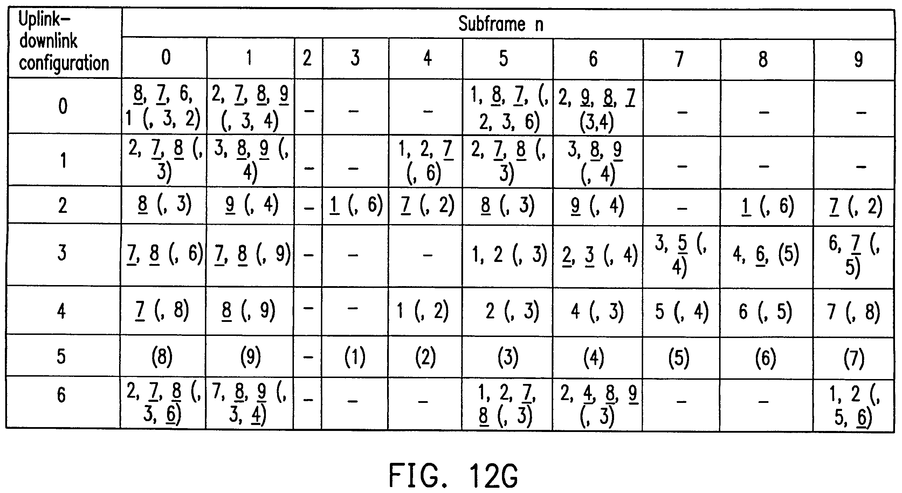

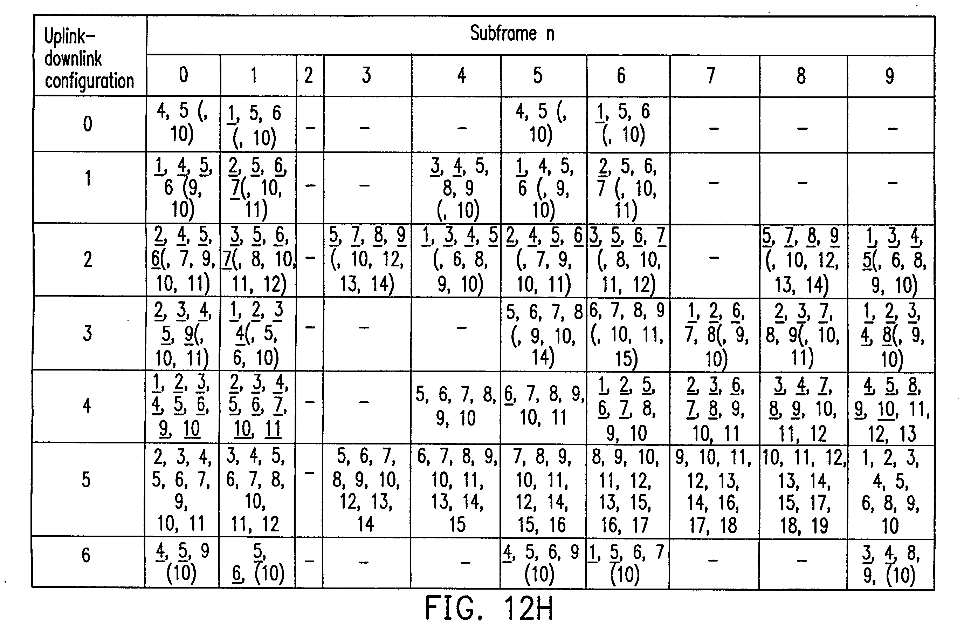

FIG. 12G illustrates the subframe number where the relay node replies asknowledgement signal of every configuration in the downlink transmission process of the TDD mode according to FIG. 7A. In short, FIG. 12G integrates FIG. 7C and each sub-diagram (b) of FIG. 12A-FIG. 12F. FIG. 12H illustrates the subframe number where the relay node forwards the downlink datat of every configuration in the downlink transmission process of the TDD mode according to FIG. 7A. FIG. 12H integrates FIG. 7D and each sub-diagram (c) of FIG. 12A-FIG. 12F. In FIG. 12G, the figure underscored represents a late ACK situation, and the figure in a bracket represents a conflict situation.

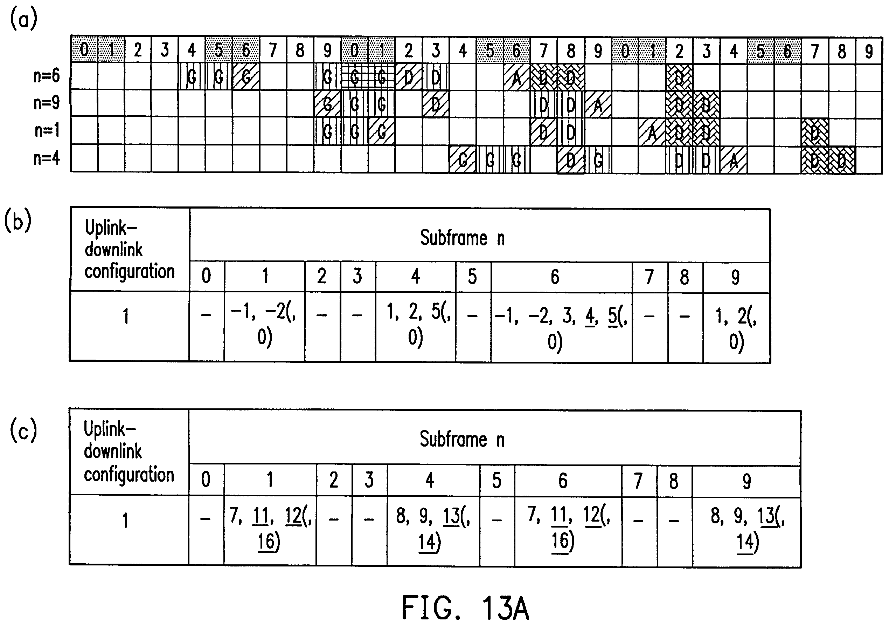

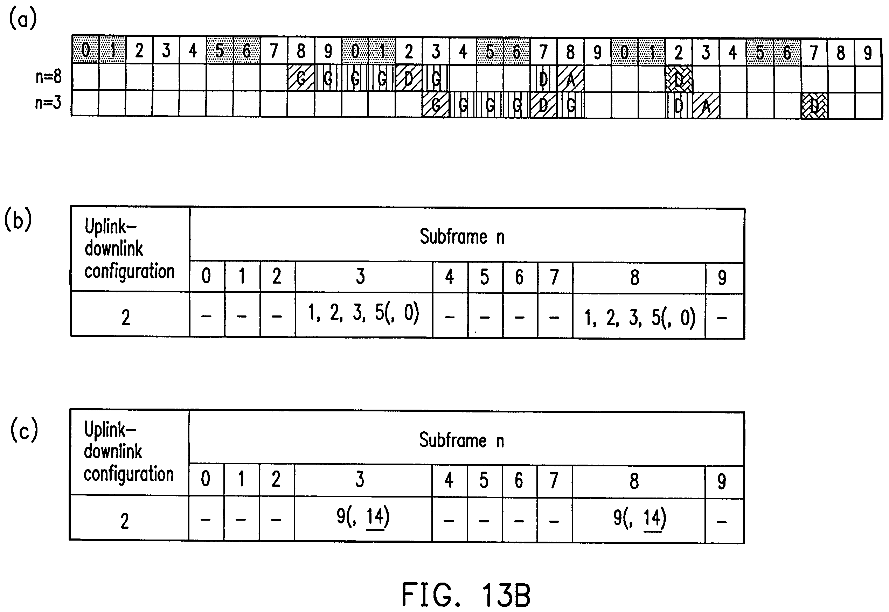

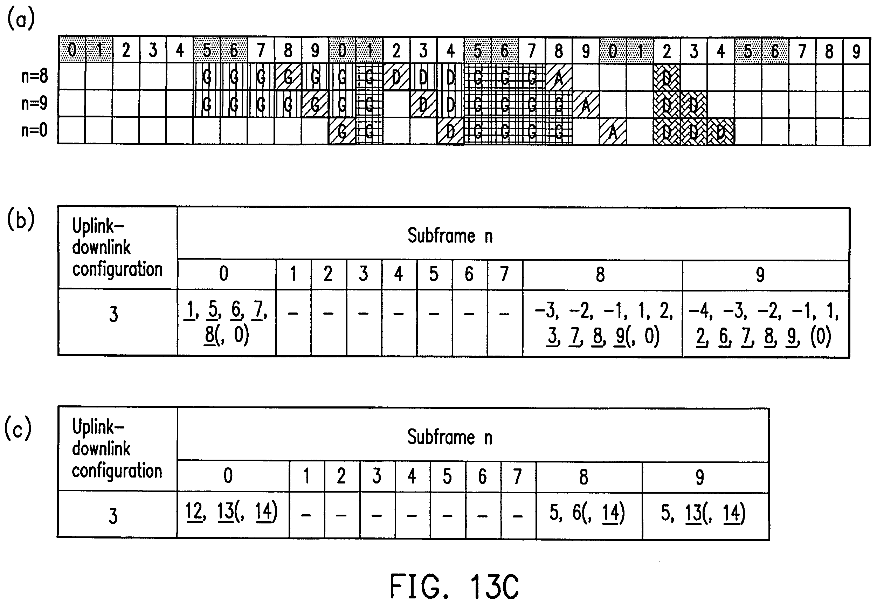

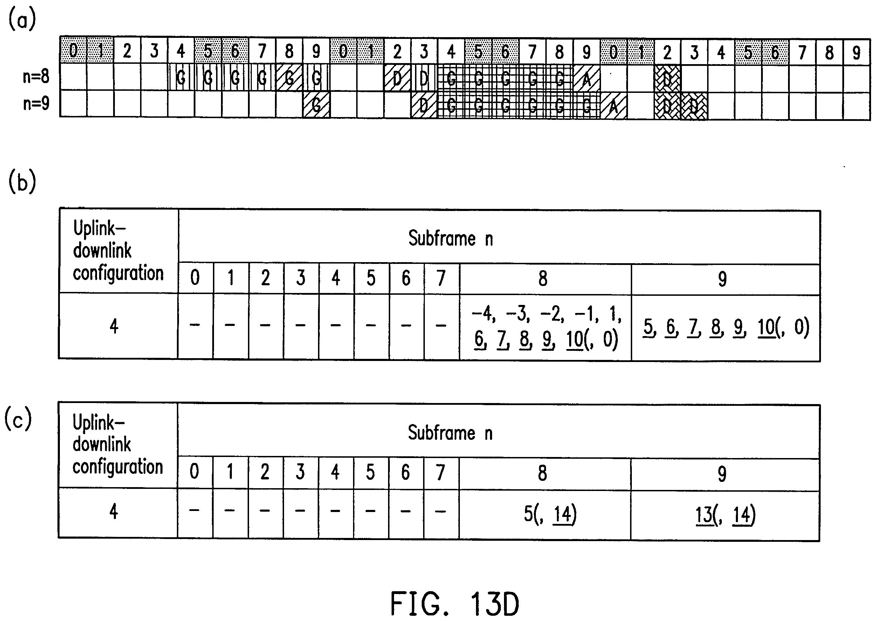

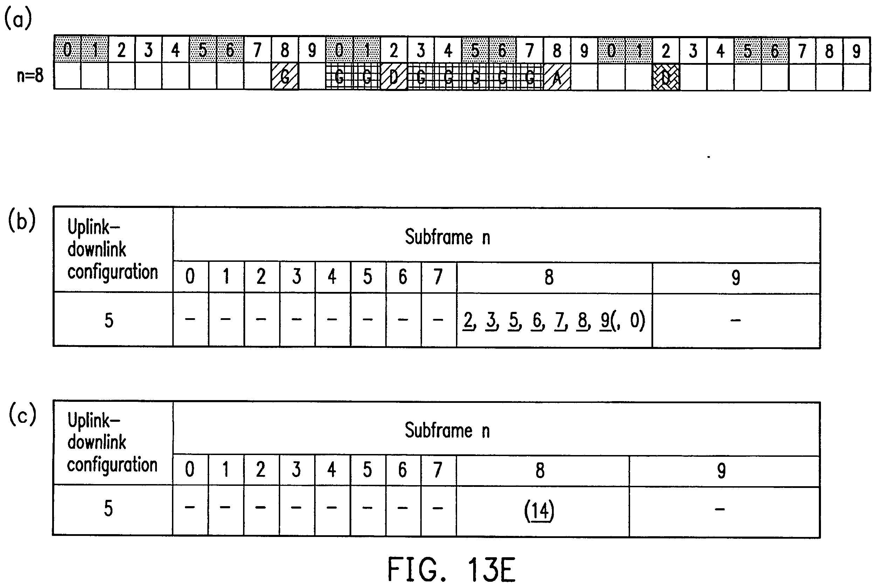

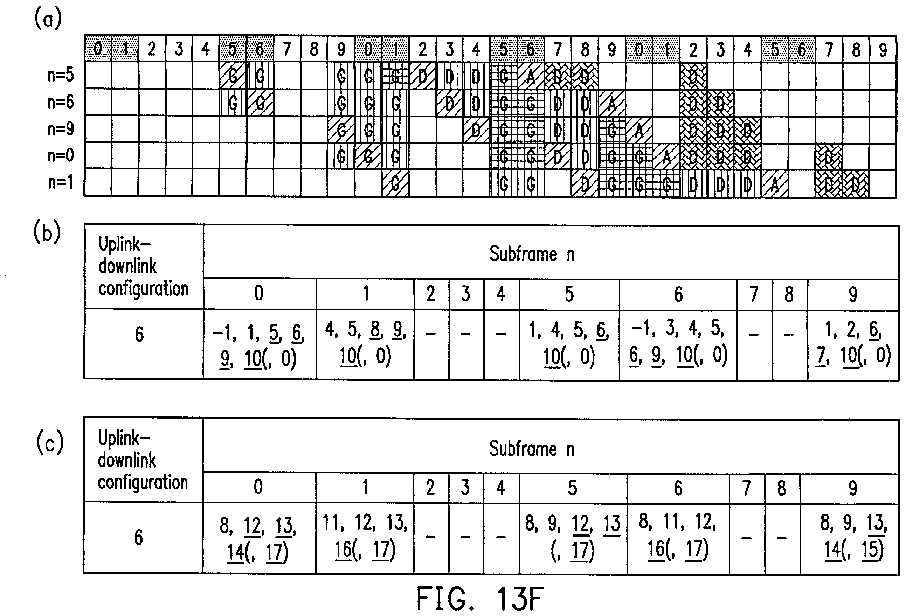

FIG. 13A-FIG. 13F are schematic diagrams respectively illustrating associations of subframes in configurion 1 to configuration 6 according to FIG. 8A, and summarizing the uplink transmission process of the TDD mode. To be illustrated more clearly, the sub-diagrams (a) of FIG. 13A-FIG. 13F respectively illustrate associations of subframes in configuration 1 to configuration 6, the sub-diagrams (b), (c) of FIG. 13A-FIG. 13F respectively corresponds to configuration 1 to configuration 6 in the summarized uplink transmission process of the TDD mode. In each sub-diagram (b), (c) of FIG. 13A-FIG. 13F, the figure underscored represents a late ACK situation or a late relay situation, and the figure in a bracket represents a conflict situation.

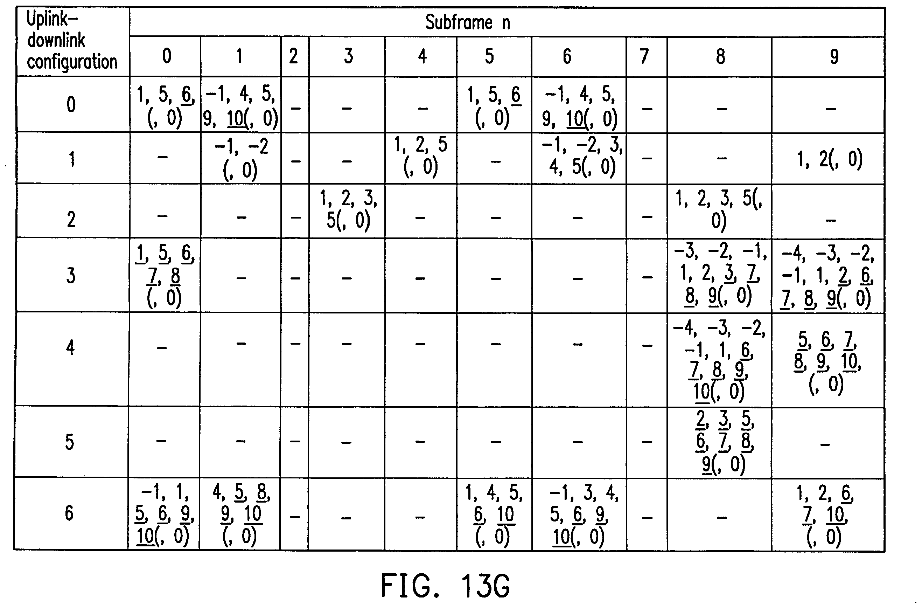

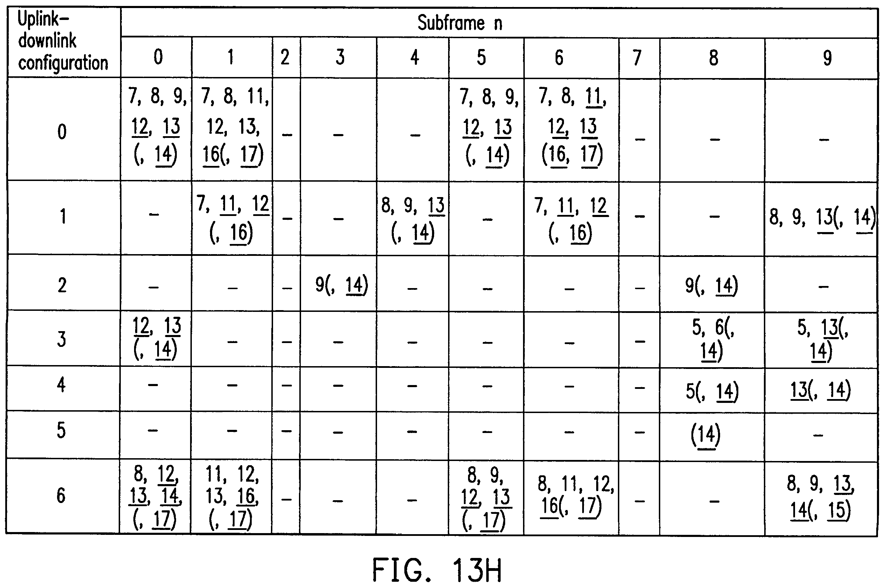

FIG. 13G illustrates the subframe number where the relay node is granted uplink wireless resource corresponding to every configuration of the TDD mode of the uplink transmission process according to FIG. 8A. In short, FIG. 13G integrates FIG. 8C and each sub-diagram (b) of FIG. 13A-FIG. 13F. FIG. 13H illulstrates the subframe number where the relay node forwards the uplink data corresponding to every configuration of the TDD mode of the uplink transmission process according to FIG. 8A. In short, FIG. 13G integrates FIG. 8D and each sub-diagram (c) of FIG. 13A-FIG. 13F. In FIG. 13G and FIG. 13H, the figure underscored represents a late ACK situation or a late relay situation, and the figure in a bracket represents a conflict situation. In addition, the configuration may be reduced to a subset table due to some considerations, e.g. deployment, implementation, complexity, or resource utilization.

In summary, exemplary embodiments of the disclosure provide a transmission method for a wireless relay communication system and a relay station using the same method. The proposed transnmission method includes HARQ process operating in TDD mode or in FDD mode of the wireless relay communication system. Situations of dynamically assigning indication signals can be effectively avoided through a base station, a relay node and a mobile communication device performing a grant signal transmission process, a data transmission process and a feedback signal transmission process with a configured timing association or a fixed timing association. Moreover, an uplink grant signal just appears in the uplink data transmission, but there could be no grant signal for the downlink data transmission. In addition, the proposed transmission methd provides efficient transmission indication and efficient configuration schemes such that the wireless relay system is operated in a simpler manner, thereby greatly saving hardware complexity and overall cost of the base station, the relay node and the mobile communication device.

It will be apparent to those skilled in the art that various modifications and variation can be made to the structure of the disclosed embodiments without departing from the scope of the disclosure. Therefore, modifications and variation of this disclosure may fall within the scope of the invention as defined by the appended claims.

## Claims

1. A transmission method for a wireless relay system (10), adapted for providing a relay of the wireless relay system (10), wherein the wireless relay system (10) comprises at least a base station (124), at least a relay node (126) and at least a mobile communication device (134), and the method comprises:
the at least a base station (124) provides a data transmission service to the at least a mobile communication device (134) with facilitation of the at least a relay node (126), wherein there is configured timing association between at least a grant signal transmission process, at least a data transmission process and at least a feedback signal transmission process of the at least a base station, the at least a relay node (126) and the at least a mobile communication device (134),
wherein the configured timing association includes a first time interval (X) and a second time interval (Z),
wherein, in a downlink transmission process, the first time interval represents a time interval from the timing point where the at least a relay node (126) replies at least a feedback signal to the at least a base station (124) to the timing point where the at least a mobile communication device (134) is granted downlink resource allocated from the base station (124), and the second time interval represents a time interval from the timing point where the at least a relay node (126) is granted the downlink resource to the timing point where the at least a relay node (126) replies the at least a feedback signal to the at least a base station (124).

2. The method according to claim 1, wherein,
if it is to be operated in the downlink transmission process, then when the at least a base station (124) transmits downlink data in subframe n, the at least a relay node (126) forwards the downlink data in a third time interval calculated from the first time interval and the second time interval.

3. The method according to claim 2, wherein,
the at least a relay node (126) successfully receives the downlink data from the at least a base station (124), and the at least a relay node (126) replies the feedback signal being an acknowledgment signal to the at least a base station (124) before forwarding the downlink data to the at least a mobile communication device (134).

4. The method according to claim 2, wherein,
the at least a base station (124) transmits the downlink data to the at least a relay node (126) and the at least a mobile communication device (134) in the same subframe.

5. The method according to claim 2, wherein,
the at least a relay node (126) replies the feedback signal being an acknowledgment signal to the at least a base station (124) after forwarding the Downlink data to the at least a mobile communication device (134).

6. The method according to claim 2, wherein,
if the sum of the first time interval and the second time interval is greater than 0, then the at least a base station (124) and the at least a relay node (126) do not simultaneously transmit the downlink data to the at least a mobile communication device (134).

7. The method according to claim 2, wherein,
if the sum of the first time interval and the second time interval is equal to 0, then the at least a base station (124) and the at least a relay node (126) simultaneously transmit the downlink data to the at least a mobile communication device (134).

8. The method according to claim 2, wherein,
if the first time interval is less than 0, then it represents a late ACK situation, and the at least a relay node (126) replies the feedback signal being an acknowledgement signal to the the at least a base station (124) after the at least a relay node (126) forwards the downlink data to the at least a mobile communication device (134).

9. A transmission method according to claim 1, wherein
a FDD mode or a TDD mode being operated between the at least a base station (124), the at least a relay node (126) and the at least a mobile communication device (134), wherein,
if it is operated in the FDD mode, then there is a configured timing association between at least a grant signal transmission process, at least a data transmission process and at least a feedback signal transmission process of the at least a base station (124), the at least a relay node (126) and the at least a mobile communication device (134); and
if it is operated in the TDD mode, then the at least a grant signal, at least a data and at least a feedback signal are transmitted between the at least a base station (124), the at least a relay node (126) and the at least a mobile communication device (134) according to a configuration table.

10. The method according to claim 9, wherein, the configuration table includes the first time interval representing the time interval from the time point where the at least a relay node (126) replies at least a feedback signal to the timing point where the at least a mobile communication device (134) is granted downlink resource allocated by the at least a base station, and the configuration table is established according the following situations:
the at least a relay node (126) successfully receives the downlink data from the at least a base station (124), and replies the feedback signal being an acknowledgement signal to the at least a base station (124) before forwarding the downlink data to the at least a mobile communication device (134);
the at least a base station (124) transmits the Downlink data to the at least a relay node (126) and the at least a mobile communication device (134) in the same subframe; and the at least a relay node (126) replies the feedback signal being an acknowledgement signal to the at least a base station (124) after forwarding the downlink data to the at least a mobile communication device (134).

11. The method according to claim 10, wherein when a configuration of the configuration table is 0,
if a subframe number *n* is 0, then the first time interval is 0, 4 or 5 subframe interval;
if the subframe number *n* is 1, then the first time interval is 0, 1, 5 or 6 subframe interval;
if the subframe number *n* is 5, then the first time interval is 0, 4 or 5 subframe interval; and
if the subframe number *n* is 6, then the first time interval is 0, 1, 5 or 6 subframe interval.

12. The method according to claim 10, wherein when a configuration of the configuration table is 1,
if a subframe number *n* is 0, then the first time interval is 0, 1, 4, 5, 6 or 9 subframe interval;
if the subframe number *n* is 1, then the first time interval is 0, 1, 2, 5, 6 or 7 subframe interval;
if the subframe number *n* is 4, then the first time interval is 0, 3, 4, 5, 8 or 9 subframe interval;
if the subframe number *n* is 5, then the first time interval is 0, 1, 4, 5, 6, 9 or 10 subframe interval; and
if the subframe number *n* is 6, then the first time interval is 0, 1, 2, 5, 6 or 7 subframe interval.

13. The method according to claim 10, wherein when a configuration of the configuration table is 2,
if a subframe number *n* is 0, then the first time interval is 0, 1, 2, 4, 5, 6, 7 or 9 subframe interval;
if the subframe number *n* is 1, then the first time interval is 0, 1, 2, 3, 5, 6, 7 or 8 subframe interval;
if the subframe number *n* is 3, then the first time interval is 0, 2, 3, 4, 5, 7, 8 or 9 subframe interval;
if the subframe number *n* is 4, then the first time interval is 0, 1, 3, 4, 5, 6, 8 or 9 subframe interval;
if the subframe number *n* is 5, then the first time interval is 0, 1, 2, 4, 5, 6, 7 or 9 subframe interval;
if the subframe number *n* is 6, then the first time interval is 0, 1, 2, 3, 5, 6, 7 or 8 subframe interval;
if the subframe number *n* is 8, then the first time interval is 0, 2, 3, 4, 5, 7, 8 or 9 subframe interval; and
if the subframe number *n* is 9, then the first time interval is 0, 1, 3, 4, 5, 6, 8 or 9 subframe interval.

14. The method according to claim 10, wherein when a configuration of the configuration table is 3,
if a subframe number *n* is 0, then the first time interval is 0, 1, 2, 3, 4, 5 or 9 subframe interval;
if the subframe number *n* is 1, then the first time interval is 0, 1, 2, 3, 5, 6, 7 or 8 subframe interval;
if the subframe number *n* is 5, then the first time interval is 0, 4, 5, 6, 7, 8 or 9 subframe interval;
if the subframe number *n* is 6, then the first time interval is 0, 1, 5, 6, 7, 8 or 9 subframe interval;
if the subframe number *n* is 7, then the first time interval is 0, 1, 2, 6, 7, 8 or 9 subframe interval;
if the subframe number *n* is 8, then the first time interval is 0, 1, 2, 3, 7, 8 or 9 subframe interval; and
if the subframe number *n* is 9, then the first time interval is 0,1, 2, 3, 4, 8 or 9 subframe interval.

15. The method according to claim 10, wherein when a configuration of the configuration table is 4,
if a subframe number *n* is 0, then the first time interval is 0, 1, 2, 3, 4, 5, 6 or 9 subframe interval;
if the subframe number *n* is 1, then the first time interval is 0, 1, 2, 3, 4, 5, 6 or 7 subframe interval;
if the subframe number *n* is 4, then the first time interval is 0, 5, 6, 7, 8 or 9 subframe interval;
if the subframe number *n* is 5, then the first time interval is 0, 1, 6, 7, 8 or 9 subframe interval;
if the subframe number *n* is 6, then the first time interval is 0, 1, 2, 5, 6, 7, 8 or 9 subframe interval;
if the subframe number *n* is 7, then the first time interval is 0, 1, 2, 3, 6, 7, 8 or 9 subframe interval;
if the subframe number *n* is 8, then the first time interval is 0, 1, 2, 3, 4, 7, 8 or 9 subframe interval; and
if the subframe number *n* is 9, then the first time interval is 0, 1, 2, 3, 4, 5, 8 or 9 subframe interval.

16. The method according to claim 10, wherein when a configuration of the configuration table is 5,
if a subframe number *n* is 0, then the first time interval is 0, 1, 2, 3, 4, 5, 6, 7 or 9 subframe interval;
if the subframe number *n* is 1, then the first time interval is 0, 1, 2, 3, 4, 5, 6, 7 or 8 subframe interval;
if the subframe number *n* is 3, then the first time interval is 0, 2, 3, 4, 5, 6, 7, 8 or 9 subframe interval;
if the subframe number *n* is 4, then the first time interval is 0, 1, 3, 4, 5, 6, 7, 8 or 9 subframe interval;
if the subframe number *n* is 5, then the first time interval is 0, 1, 2, 4, 5, 6, 7, 8 or 9 subframe interval;
if the subframe number n is 6, then the first time interval is 0, 1, 2, 3, 5, 6, 7, 8 or 9 subframe interval;
if the subframe number n is 7, then the first time interval is 0, 1, 2, 3, 4, 6, 7, 8 or 9 subframe interval;
if the subframe number n is 8, then the first time interval is 0, 1, 2, 3, 4, 5, 7, 8 or 9 subframe interval; and
if the subframe number n is 9, then the first time interval is 0, 1, 2, 3, 4, 5, 6, 8 or 9 subframe interval.

17. The method according to claim 10, wherein when a configuration of the configuration table is 6,
if a subframe number n is 0, then the first time interval is 0, 4, 5 or 9 subframe interval;
if the subframe number n is 1, then the first time interval is 0, 5 or 6 subframe interval;
if the subframe number n is 5, then the first time interval is 0, 4, 5, 6 or 9 subframe interval;
if the subframe number n is 6, then the first time interval is 0, 1, 5, 6 or 7 subframe interval; iand
if the subframe number n is 9, then the first time interval is 0, 3, 4, 8 or 9 subframe interval.

18. A relay station (126), adapted for relaying at least a data between a base station (124) and a mobile communication device (134), wherein, the relay station (126) transmits and receives the data with a configured timing association, wherein the configured timing association includes a first time interval (X) and a second time interval (Z),
wherein, if it is in a downlink transmission process, the first time interval represents a time interval from the timing point where the at least a relay node (126) replies at least a feedback signal to the at least a base station (124) to the timing point where the at least a mobile communication device (134) is granted downlink resource allocated from the base station (124), and the second time interval represents a time interval from the timing point where the at least a relay node (126) is granted the downlink resource to the timing point where the at least a relay node (126) replies the at least a feedback signal to the at least a base station (124).

19. The relay station according to claim 18, wherein, the data received by the relay station (126) is a HARQ data, and the feedback signal transmitted by the relay station (126) is an acknowledgement signal for the HARQ data.

20. The relay station according to claim 19, wherein, if the relay station (126) receives downlink data in subframe 3, 4 or 9, then the relay station (126) transmits the acknowledgement signal of the downlink data in subframe 0, 3, 4, 5, 7, 8 or 9.

21. The relay station according to claim 20, wherein, if the relay station (126) receives Downlink data in subframe 3, then the relay station (126) transmits the acknowledgement signal of the downlink data in subframe 4, 7 or 9.

22. The relay station according to claim 20, wherein, if the relay station (126) receives downlink data in subframe 4, then the relay station (126) transmits the acknowledgement signal of the downlink data in subframe 5, 8 or 0.

23. The relay station according to claim 20, wherein, if the relay station (126) receives downlink data in subframe 9, then the relay station (126) transmits the acknowledgement signal of the downlink data in subframe 0, 3 or 5.

24. The relay station according to claim 18, wherein, the data transmitted by the base station and received by the relay station (126) is a HARQ data, and the feedback signal transmitted by the relay station (126) is an acknowledgement signal for the HARQ data.

25. The relay station according to claim 19, wherein, if the relay station (126) receives the down link data in subframe 0, 1, 5 or 6, then the relay station (126) transmits the acknowledgement signal for the downlink data in subframe 2, 3, 4, 7, 8 or 9.

26. The relay station according to claim 19, wherein, if the relay station (126) receives the down link data in subframe 0, 1, 4, 5, 6 or 9, then the relay station (126) transmits the acknowledgement signal for the downlink data in subframe 2, 3, 7 or 8.

27. The relay station according to claim 19, wherein, if the relay station (126) receives the down link data in subframe 3, 4, 5, 6, 8 or 9, then the relay station (126) transmits the acknowledgement signal for the downlink data in subframe 2 or 7.

28. The relay station according to claim 19, wherein, if the relay station (126) receives the down link data in subframe 0, 1, 5, 6, 7, 8 or 9, then the relay station (126) transmits the acknowledgement signal for the downlink data in subframe 2, 3 or 4.

29. The relay station according to claim 19, wherein, if the relay station (126) receives the down link data in subframe 0, 1, 4, 5, 6, 7, 8 or 9, then the relay station (126) transmits the acknowledgement signal for the downlink data in subframe 2 or 3.

30. The relay station according to claim 19, wherein, if the relay station (126) receives the down link data in subframe 0, 1, 3, 4, 5, 6, 7, 8 or 9, then the relay station (126) transmits the acknowledgement signal for the downlink data in subframe 2.

31. The relay station according to claim 19, wherein, if the relay station (126) receives the down link data in subframe 0, 1, 5, 6 or 9, then the relay station (126) transmits the acknowledgement signal for the downlink data in subframe 2, 3, 4, 7 or 8.

## Patentansprüche

1. Übertragungsverfahren für ein drahtloses Relaissystem (10), das zum Bereitstellen eines Relais des drahtlosen Relaissystems (10) angepasst ist, wobei das drahtlose Relaissystem (10) mindestens eine Basisstation (124), mindestens einen Relaisknoten (126) und mindestens eine mobile Kommunikationsvorrichtung (134) umfasst, und das Verfahren umfasst, dass:
die mindestens eine Basisstation (124) einen Datenübertragungsdienst für die mindestens eine mobile Kommunikationsvorrichtung (134) mit Vermittlung des mindestens einen Relaisknotens (126) bereitstellt, wobei eine zeitliche Verknüpfung zwischen mindestens einem Genehmigungssignalübertragungsprozess, mindestens einem Datenübertragungsprozess und mindestens einem Rückkopplungssignalübertragungsprozess der mindestens einen Basisstation, des mindestens einen Relaisknotens (126) und der mindestens einen mobilen Kommunikationsvorrichtung (134) konfiguriert ist,
wobei die konfigurierte zeitliche Verknüpfung ein erstes Zeitintervall (X) und ein zweites Zeitintervall (Z) beinhaltet,
wobei in einem Downlink-Übertragungsprozess das erste Zeitintervall ein Zeitintervall von dem Zeitpunkt, an dem der mindestens eine Relaisknoten (126) mit mindestens einem Rückkopplungssignal der mindestens einen Basisstation (124) antwortet, bis zu dem Zeitpunkt, an dem der mindestens einen mobilen Kommunikationsvorrichtung (134) die von der Basisstation (124) zugewiesene Downlink-Ressource genehmigt wird, darstellt und das zweite Zeitintervall ein Zeitintervall von dem Zeitpunkt, an dem dem mindestens einen Relaisknoten (126) die Downlink-Ressource genehmigt wird, bis zu dem Zeitpunkt, an dem der mindestens eine Relaisknoten (126) mit mindestens einem Rückkopplungssignal der mindestens einen Basisstation (124) antwortet, darstellt.

2. Verfahren nach Anspruch 1, wobei
wenn es im Downlink-Übertragungsprozess zu betreiben ist, dann, wenn die mindestens eine Basisstation (124) Downlink-Daten in einem Teilrahmen n überträgt, der mindestens eine Relaisknoten (126) die Downlink-Daten in einem dritten Zeitintervall weiterleitet, das sich aus dem ersten Zeitintervall und dem zweiten Zeitintervall berechnet.

3. Verfahren nach Anspruch 2, wobei
der mindestens eine Relaisknoten (126) die Downlink-Daten erfolgreich von der mindestens einen Basisstation (124) empfängt, und der mindestens eine Relaisknoten (126) mit dem Rückkopplungssignal, das ein Bestätigungssignal ist, der mindestens einen Basisstation (124) antwortet, bevor er die Downlink-Daten an die mindestens eine mobile Kommunikationsvorrichtung (134) weiterleitet.

4. Verfahren nach Anspruch 2, wobei
die mindestens eine Basisstation (124) die Downlink-Daten an den mindestens einen Relaisknoten (126) und die mindestens eine mobile Kommunikationsvorrichtung (134) in demselben Teilrahmen überträgt.

5. Verfahren nach Anspruch 2, wobei
der mindestens eine Relaisknoten (126) mit dem Rückkopplungssignal, das ein Bestätigungssignal ist, der mindestens einen Basisstation (124) antwortet, nachdem er die Downlink-Daten an die mindestens eine mobile Kommunikationsvorrichtung (134) weitergeleitet hat.

6. Verfahren nach Anspruch 2, wobei
wenn die Summe des ersten Zeitintervalls und des zweiten Zeitintervalls größer als 0 ist, die mindestens eine Basisstation (124) und der mindestens eine Relaisknoten (126) dann die Downlink-Daten nicht gleichzeitig an die mindestens eine mobile Kommunikationsvorrichtung (134) übertragen.

7. Verfahren nach Anspruch 2, wobei
wenn die Summe des ersten Zeitintervalls und des zweiten Zeitintervalls gleich 0 ist, die mindestens eine Basisstation (124) und der mindestens eine Relaisknoten (126) dann die Downlink-Daten gleichzeitig an die mindestens eine mobile Kommunikationsvorrichtung (134) übertragen.

8. Verfahren nach Anspruch 2, wobei
wenn das erste Zeitintervall kleiner als 0 ist, dann dies eine Situation mit verspäteter ACK darstellt, und der mindestens eine Relaisknoten (126) der mindestens einen Basisstation (124) mit dem Rückkopplungssignal, das ein Bestätigungssignal ist, antwortet, nachdem der mindestens eine Relaisknoten (126) die Downlink-Daten an die mindestens eine mobile Kommunikationsvorrichtung (134) weitergeleitet hat.

9. Übertragungsverfahren nach Anspruch 1, wobei
ein FDD-Modus oder ein TDD-Modus zwischen der mindestens einen Basisstation (124), dem mindestens einen Relaisknoten (126) und der mindestens einen mobilen Kommunikationsvorrichtung (134) betrieben wird, wobei
wenn es im FDD-Modus betrieben wird, dann eine konfigurierte zeitliche Verknüpfung zwischen mindestens einem Genehmigungssignalübertragungsprozess, mindestens einem Datenübertragungsprozess und mindestens einem Rückkopplungssignalübertragungsprozess der mindestens einen Basisstation (124), des mindestens einen Relaisknotens (126) und der mindestens einen mobilen Kommunikationsvorrichtung (134) besteht; und
wenn es im TDD-Modus betrieben wird, dann das mindestens eine Genehmigungssignal, das mindestens eine Daten- und das mindestens eine Rückkopplungssignal zwischen der mindestens einen Basisstation (124), dem mindestens einen Relaisknoten (126) und der mindestens einen mobilen Kommunikationsvorrichtung (134) gemäß einer Konfigurationstabelle übertragen werden.

10. Verfahren nach Anspruch 9, wobei die Konfigurationstabelle das erste Zeitintervall beinhaltet, das das Zeitintervall von dem Zeitpunkt, an dem der mindestens eine Relaisknoten (126) mit mindestens einem Rückkopplungssignal antwortet, bis zu dem Zeitpunkt, an dem der mindestens einen mobilen Kommunikationsvorrichtung (134) die von der mindestens einen Basisstation zugewiesene Downlink-Ressource genehmigt wird, darstellt, und die Konfigurationstabelle gemäß den folgenden Situationen erstellt wird:
der mindestens eine Relaisknoten (126) empfängt die Downlink-Daten erfolgreich von der mindestens einen Basisstation (124) und antwortet mit dem Rückkopplungssignal, das ein Bestätigungssignal ist, der mindestens einen Basisstation (124), bevor er die Downlink-Daten an die mindestens eine mobile Kommunikationsvorrichtung (134) weiterleitet;
die mindestens eine Basisstation (124) überträgt die Downlink-Daten an den mindestens einen Relaisknoten (126) und die mindestens eine mobile Kommunikationsvorrichtung (134) in demselben Teilrahmen; und der mindestens eine Relaisknoten (126) antwortet mit dem Rückkopplungssignal, das ein Bestätigungssignal ist, der mindestens einen Basisstation (124), nachdem er die Downlink-Daten an die mindestens eine mobile Kommunikationsvorrichtung (134) weitergeleitet hat.

11. Verfahren nach Anspruch 10, wobei, wenn eine Konfiguration der Konfigurationstabelle 0 ist,
wenn eine Teilrahmennummer n 0 ist, das erste Zeitintervall ein 0, 4 oder 5 Teilrahmenintervall ist;
wenn die Teilrahmennummer n 1 ist, das erste Zeitintervall ein 0, 1, 5 oder 6 Teilrahmenintervall ist;
wenn die Teilrahmennummer n 5 ist, das erste Zeitintervall ein 0, 4 oder 5 Teilrahmenintervall ist; und
wenn die Teilrahmennummer n 6 ist, das erste Zeitintervall ein 0, 1, 5 oder 6 Teilrahmenintervall ist.

12. Verfahren nach Anspruch 10, wobei, wenn eine Konfiguration der Konfigurationstabelle 1 ist,
wenn eine Teilrahmennummer n 0 ist, das erste Zeitintervall ein 0, 1, 4, 5, 6 oder 9 Teilrahmenintervall ist;
wenn die Teilrahmennummer n 1 ist, das erste Zeitintervall ein 0, 1, 2, 5, 6 oder 7 Teilrahmenintervall ist;
wenn die Teilrahmennummer n 4 ist, das erste Zeitintervall ein 0, 3, 4, 5, 8 oder 9 Teilrahmenintervall ist;
wenn die Teilrahmennummer n 5 ist, das erste Zeitintervall ein 0, 1, 4, 5, 6, 9 oder 10 Teilrahmenintervall ist; und
wenn die Teilrahmennummer n 6 ist, das erste Zeitintervall ein 0, 1, 2, 5, 6 oder 7 Teilrahmenintervall ist.

13. Verfahren nach Anspruch 10, wobei, wenn eine Konfiguration der Konfigurationstabelle 2 ist,
wenn eine Teilrahmennummer n 0 ist, das erste Zeitintervall ein 0, 1, 2, 4, 5, 6, 7 oder 9 Teilrahmenintervall ist;
wenn die Teilrahmennummer n 1 ist, das erste Zeitintervall ein 0, 1, 2, 3, 5, 6, 7 oder 8 Teilrahmenintervall ist;
wenn die Teilrahmennummer n 3 ist, das erste Zeitintervall ein 0, 2, 3, 4, 5, 7, 8 oder 9 Teilrahmenintervall ist;
wenn die Teilrahmennummer n 4 ist, das erste Zeitintervall ein 0, 1, 3, 4, 5, 6, 8 oder 9 Teilrahmenintervall ist;
wenn die Teilrahmennummer n 5 ist, das erste Zeitintervall ein 0, 1, 2, 4, 5, 6, 7 oder 9 Teilrahmenintervall ist;
wenn die Teilrahmennummer n 6 ist, das erste Zeitintervall ein 0, 1, 2, 3, 5, 6, 7 oder 8 Teilrahmenintervall ist;
wenn die Teilrahmennummer n 8 ist, das erste Zeitintervall ein 0, 2, 3, 4, 5, 7, 8 oder 9 Teilrahmenintervall ist; und
wenn die Teilrahmennummer n 9 ist, das erste Zeitintervall ein 0, 1, 3, 4, 5, 6, 8 oder 9 Teilrahmenintervall ist.

14. Verfahren nach Anspruch 10, wobei, wenn eine Konfiguration der Konfigurationstabelle 3 ist,
wenn eine Teilrahmennummer n 0 ist, das erste Zeitintervall ein 0, 1, 2, 3, 4, 5 oder 9 Teilrahmenintervall ist;
wenn die Teilrahmennummer n 1 ist, das erste Zeitintervall ein 0, 1, 2, 3, 5, 6, 7 oder 8 Teilrahmenintervall ist;
wenn die Teilrahmennummer n 5 ist, das erste Zeitintervall ein 0, 4, 5, 6, 7, 8 oder 9 Teilrahmenintervall ist;
wenn die Teilrahmennummer n 6 ist, das erste Zeitintervall ein 0, 1, 5, 6, 7, 8 oder 9 Teilrahmenintervall ist;
wenn die Teilrahmennummer n 7 ist, das erste Zeitintervall ein 0, 1, 2, 6, 7, 8 oder 9 Teilrahmenintervall ist;
wenn die Teilrahmennummer n 8 ist, das erste Zeitintervall ein 0, 1, 2, 3, 7, 8 oder 9 Teilrahmenintervall ist; und
wenn die Teilrahmennummer n 9 ist, das erste Zeitintervall ein 0,1, 2, 3, 4, 8 oder 9 Teilrahmenintervall ist.

15. Verfahren nach Anspruch 10, wobei, wenn eine Konfiguration der Konfigurationstabelle 4 ist,
wenn eine Teilrahmennummer n 0 ist, das erste Zeitintervall ein 0, 1, 2, 3, 4, 5, 6 oder 9 Teilrahmenintervall ist;
wenn die Teilrahmennummer n 1 ist, das erste Zeitintervall ein 0, 1, 2, 3, 4, 5, 6 oder 7 Teilrahmenintervall ist;
wenn die Teilrahmennummer n 4 ist, das erste Zeitintervall ein 0, 5, 6, 7, 8 oder 9 Teilrahmenintervall ist;
wenn die Teilrahmennummer n 5 ist, das erste Zeitintervall ein 0, 1, 6, 7, 8 oder 9 Teilrahmenintervall ist;
wenn die Teilrahmennummer n 6 ist, das erste Zeitintervall ein 0, 1, 2, 5, 6, 7, 8 oder 9 Teilrahmenintervall ist;
wenn die Teilrahmennummer n 7 ist, das erste Zeitintervall ein 0, 1, 2, 3, 6, 7, 8 oder 9 Teilrahmenintervall ist;
wenn die Teilrahmennummer n 8 ist, das erste Zeitintervall ein 0, 1, 2, 3, 4, 7, 8 oder 9 Teilrahmenintervall ist; und
wenn die Teilrahmennummer n 9 ist, das erste Zeitintervall ein 0, 1, 2, 3, 4, 5, 8 oder 9 Teilrahmenintervall ist.

16. Verfahren nach Anspruch 10, wobei, wenn eine Konfiguration der Konfigurationstabelle 5 ist,
wenn die Teilrahmennummer n 0 ist, das erste Zeitintervall ein 0, 1, 2, 3, 4, 5, 6, 7 oder 9 Teilrahmenintervall ist;
wenn die Teilrahmennummer n 1 ist, das erste Zeitintervall ein 0, 1, 2, 3, 4, 5, 6, 7 oder 8 Teilrahmenintervall ist;
wenn die Teilrahmennummer n 3 ist, das erste Zeitintervall ein 0, 2, 3, 4, 5, 6, 7, 8 oder 9 Teilrahmenintervall ist;
wenn die Teilrahmennummer n 4 ist, das erste Zeitintervall ein 0, 1, 3, 4, 5, 6, 7, 8 oder 9 Teilrahmenintervall ist;
wenn die Teilrahmennummer n 5 ist, das erste Zeitintervall ein 0, 1, 2, 4, 5, 6, 7, 8 oder 9 Teilrahmenintervall ist;
wenn die Teilrahmennummer n 6 ist, das erste Zeitintervall ein 0, 1, 2, 3, 5, 6, 7, 8 oder 9 Teilrahmenintervall ist;
wenn die Teilrahmennummer n 7 ist, das erste Zeitintervall ein 0, 1, 2, 3, 4, 6, 7, 8 oder 9 Teilrahmenintervall ist;
wenn die Teilrahmennummer n 8 ist, das erste Zeitintervall ein 0, 1, 2, 3, 4, 5, 7, 8 oder 9 Teilrahmenintervall ist; und
wenn die Teilrahmennummer n 9 ist, das erste Zeitintervall ein 0, 1, 2, 3, 4, 5, 6, 8 oder 9 Teilrahmenintervall ist.

17. Verfahren nach Anspruch 10, wobei, wenn eine Konfiguration der Konfigurationstabelle 6 ist,
wenn eine Teilrahmennummer n 0 ist, das erste Zeitintervall ein 0, 4, 5 oder 9 Teilrahmenintervall ist;
wenn die Teilrahmennummer n 1 ist, das erste Zeitintervall ein 0, 5 oder 6 Teilrahmenintervall ist;
wenn die Teilrahmennummer n 5 ist, das erste Zeitintervall ein 0, 4, 5, 6 oder 9 Teilrahmenintervall ist;
wenn die Teilrahmennummer n 6 ist, das erste Zeitintervall ein 0, 1, 5, 6 oder 7 Teilrahmenintervall ist; und
wenn die Teilrahmennummer n 9 ist, das erste Zeitintervall ein 0, 3, 4, 8 oder 9 Teilrahmenintervall ist.

18. Relaisstation (126), die zum Weiterleiten von mindestens Daten zwischen einer Basisstation (124) und einer mobilen Kommunikationsvorrichtung (134) angepasst ist, wobei die Relaisstation (126) die Daten mit einer konfigurierten zeitlichen Verknüpfung überträgt und empfängt, wobei die konfigurierte zeitliche Verknüpfung ein erstes Zeitintervall (X) und ein zweites Zeitintervall (Z) beinhaltet,
wobei, wenn es in einem Downlink-Übertragungsprozess ist, das erste Zeitintervall ein Zeitintervall von dem Zeitpunkt, an dem der mindestens eine Relaisknoten (126) mit mindestens einem Rückkopplungssignal der mindestens einen Basisstation (124) antwortet, bis zu dem Zeitpunkt, an dem der mindestens einen mobilen Kommunikationsvorrichtung (134) die von der Basisstation (124) zugewiesene Downlink-Ressource genehmigt wird, darstellt und das zweite Zeitintervall ein Zeitintervall von dem Zeitpunkt, an dem dem mindestens einen Relaisknoten (126) die Downlink-Ressource genehmigt wird, bis zu dem Zeitpunkt, an dem der mindestens eine Relaisknoten (126) mit mindestens einem Rückkopplungssignal der mindestens einen Basisstation (124) antwortet, darstellt.

19. Relaisstation nach Anspruch 18, wobei die von der Relaisstation (126) empfangenen Daten HARQ-Daten sind und das von der Relaisstation (126) übertragene Rückkopplungssignal ein Bestätigungssignal für die HARQ-Daten ist.

20. Relaisstation nach Anspruch 19, wobei, wenn die Relaisstation (126) Downlink-Daten im Teilrahmen 3, 4 oder 9 empfängt, dann die Relaisstation (126) das Bestätigungssignal der Downlink-Daten im Teilrahmen 0, 3, 4, 5, 7, 8 oder 9 überträgt.

21. Relaisstation nach Anspruch 20, wobei, wenn die Relaisstation (126) Downlink-Daten im Teilrahmen 3 empfängt, dann die Relaisstation (126) das Bestätigungssignal der Downlink-Daten im Teilrahmen 4, 7 oder 9 überträgt.

22. Relaisstation nach Anspruch 20, wobei, wenn die Relaisstation (126) Downlink-Daten im Teilrahmen 4 empfängt, dann die Relaisstation (126) das Bestätigungssignal der Downlink-Daten im Teilrahmen 5, 8 oder 0 überträgt.

23. Relaisstation nach Anspruch 20, wobei, wenn die Relaisstation (126) Downlink-Daten im Teilrahmen 9 empfängt, dann die Relaisstation (126) das Bestätigungssignal der Downlink-Daten im Teilrahmen 0, 3 oder 5 überträgt.

24. Relaisstation nach Anspruch 18, wobei die von der Basistation übertragenen und von der Relaisstation (126) empfangenen Daten HARQ-Daten sind und das von der Relaisstation (126) übertragene Rückkopplungssignal ein Bestätigungssignal für die HARQ-Daten ist.

25. Relaisstation nach Anspruch 19, wobei, wenn die Relaisstation (126) die Downlink-Daten im Teilrahmen 0, 1, 5 oder 6 empfängt, dann die Relaisstation (126) das Bestätigungssignal für die Downlink-Daten im Teilrahmen 2, 3, 4, 7, 8 oder 9 überträgt.

26. Relaisstation nach Anspruch 19, wobei, wenn die Relaisstation (126) die Downlink-Daten im Teilrahmen 0, 1, 4, 5, 6 oder 9 empfängt, dann die Relaisstation (126) das Bestätigungssignal für die Downlink-Daten im Teilrahmen 2, 3, 7 oder 8 überträgt.

27. Relaisstation nach Anspruch 19, wobei, wenn die Relaisstation (126) die Downlink-Daten im Teilrahmen 3, 4, 5, 6, 8 oder 9 empfängt, dann die Relaisstation (126) das Bestätigungssignal für die Downlink-Daten im Teilrahmen 2 oder 7 überträgt.

28. Relaisstation nach Anspruch 19, wobei, wenn die Relaisstation (126) die Downlink-Daten im Teilrahmen 0, 1, 5, 6, 7, 8 oder 9 empfängt, dann die Relaisstation (126) das Bestätigungssignal für die Downlink-Daten im Teilrahmen 2, 3 oder 4 überträgt.

29. Relaisstation nach Anspruch 19, wobei, wenn die Relaisstation (126) die Downlink-Daten im Teilrahmen 0, 1, 4, 5, 6, 7, 8 oder 9 empfängt, dann die Relaisstation (126) das Bestätigungssignal für die Downlink-Daten im Teilrahmen 2 oder 3 überträgt.

30. Relaisstation nach Anspruch 19, wobei, wenn die Relaisstation (126) die Downlink-Daten im Teilrahmen 0, 1, 3, 4, 5, 6, 7, 8 oder 9 empfängt, dann die Relaisstation (126) das Bestätigungssignal für die Downlink-Daten im Teilrahmen 2 überträgt.

31. Relaisstation nach Anspruch 19, wobei, wenn die Relaisstation (126) die Downlink-Daten im Teilrahmen 0, 1, 5, 6 oder 9 empfängt, dann die Relaisstation (126) das Bestätigungssignal für die Downlink-Daten im Teilrahmen 2, 3, 4, 7 oder 8 überträgt.

## Revendications

1. Procédé de transmission pour un système de relais sans fil (10), conçu pour fournir un relais du système de relais sans fil (10), dans lequel le système de relais sans fil (10) comprend au moins une station de base (124), au moins un noeud de relais (126) et au moins un dispositif de communication mobile (134), et le procédé comprend :
la au moins une station de base (124) fournit un service de transmission de données au au moins un dispositif de communication mobile (134) avec facilitation du au moins un noeud de relais (126), dans lequel il y a une association temporelle configurée entre au moins un processus de transmission de signal d'attribution, au moins un processus de transmission de données et au moins un processus de transmission de signal de réaction de la au moins une station de base, du au moins un noeud de relais (126) et du au moins un dispositif de communication mobile (134),
dans lequel l'association temporelle configurée inclut un premier intervalle de temps (X) et un deuxième intervalle de temps (Z),
dans lequel, dans un processus de transmission de liaison descendante, le premier intervalle de temps représente un intervalle de temps entre le moment où le au moins un noeud de relais (126) répond au moins un signal de réaction à la au moins une station de base (124) et le moment où le au moins un dispositif de communication mobile (134) se voit attribuer une ressource de liaison descendante allouée à partir de la station de base (124), et le deuxième intervalle de temps représente un intervalle de temps entre le moment où le au moins un noeud de relais (126) se voit attribuer la ressource de liaison descendante et le moment où le au moins un noeud de relais (126) répond au au moins un signal de réaction à la au moins une station de base (124).

2. Procédé selon la revendication 1, dans lequel,
s'il doit être utilisé dans le processus de transmission de liaison descendante, alors lorsque la au moins une station de base (124) transmet des données de liaison descendante dans la sous-trame n, le au moins un noeud de relais (126) transmet les données de liaison descendante dans un troisième intervalle de temps calculé à partir du premier intervalle de temps et du deuxième intervalle de temps.

3. Procédé selon la revendication 2, dans lequel,
le au moins un noeud de relais (126) reçoit avec succès les données de liaison descendante de la au moins une station de base (124), et le au moins un noeud de relais (126) répond le signal de réaction étant un signal d'accusé de réception à la au moins une station de base (124) avant de transmettre les données de liaison descendante au au moins un dispositif de communication mobile (134).

4. Procédé selon la revendication 2, dans lequel,
la au moins une station de base (124) transmet les données de liaison descendante au au moins un noeud de relais (126) et au au moins un dispositif de communication mobile (134) dans la même sous-trame.

5. Procédé selon la revendication 2, dans lequel,
le au moins un noeud de relais (126) répond le signal de réaction étant un signal d'accusé de réception à la au moins une station de base (124) après avoir transmis les données de liaison descendante au au moins un dispositif de communication mobile (134).

6. Procédé selon la revendication 2, dans lequel,
si la somme du premier intervalle de temps et du deuxième intervalle de temps est supérieure à 0, alors la au moins une station de base (124) et le au moins un noeud de relais (126) ne transmettent pas simultanément les données de liaison descendante au au moins un dispositif de communication mobile (134).

7. Procédé selon la revendication 2, dans lequel,
si la somme du premier intervalle de temps et du deuxième intervalle de temps est égale à 0, alors la au moins une station de base (124) et le au moins un noeud de relais (126) transmettent simultanément les données de liaison descendante au au moins un dispositif de communication mobile (134).

8. Procédé selon la revendication 2, dans lequel,
si le premier intervalle de temps est inférieur à 0, alors il représente une situation d'ACK tardif, et le au moins un noeud de relais (126) répond le signal de réaction étant un signal d'accusé de réception à la au moins une station de base (124) après que le au moins un noeud de relais (126) transmet les données de liaison descendante au au moins un dispositif de communication mobile (134).

9. Procédé de transmission selon la revendication 1, dans lequel
un mode FDD ou un mode TDD étant utilisé entre au moins une station de base (124), le au moins un noeud de relais (126) et le au moins un dispositif de communication mobile (134), dans lequel,
s'il fonctionne dans le mode FDD, alors il y a une association temporelle configurée entre au moins un processus de transmission de signal d'attribution, au moins un processus de transmission de données et au moins un processus de transmission de signal de réaction de la au moins une station de base (124), du au moins un noeud de relais (126) et du au moins un dispositif de communication mobile (134) ; et
s'il fonctionne dans le mode TDD, alors le au moins un signal d'attribution, au moins une donnée et au moins un signal de réaction sont transmis entre la au moins une station de base (124), le au moins un noeud de relais (126) et le au moins un dispositif de communication mobile (134) selon une table de configuration.

10. Procédé selon la revendication 9, dans lequel la table de configuration inclut le premier intervalle de temps représentant l'intervalle de temps entre le moment où le au moins un noeud de relais (126) répond au moins un signal de réaction et le moment où le au moins un dispositif de communication mobile (134) se voit attribuer une ressource de liaison descendante allouée par la au moins une station de base, et la table de configuration est établie selon les situations suivantes :
le au moins un noeud de relais (126) reçoit avec succès les données de liaison descendante de la au moins une station de base (124), et répond le signal de réaction étant un signal d'accusé de réception à la au moins une station de base (124) avant de transmettre les données de liaison descendante au au moins un dispositif de communication mobile (134) ;
la au moins une station de base (124) transmet les données de liaison descendante au au moins un noeud de relais (126) et au au moins un dispositif de communication mobile (134) dans la même sous-trame ; et le au moins un noeud de relais (126) répond le signal de réaction étant un signal d'accusé de réception à la au moins une station de base (124) après avoir transmis les données de liaison descendante au au moins un dispositif de communication mobile (134).

11. Procédé selon la revendication 10, dans lequel lorsqu'une configuration de la table de configuration est 0,
si un numéro de sous-trame n est 0, alors le premier intervalle de temps est un intervalle de sous-trame 0, 4 ou 5 ;
si le numéro de sous-trame n est 1, alors le premier intervalle de temps est un intervalle de sous-trame 0, 1, 5 ou 6 ;
si le numéro de sous-trame n est 5, alors le premier intervalle de temps est un intervalle de sous-trame 0, 4 ou 5 ; et
si le numéro de sous-trame n est 6, alors le premier intervalle de temps est un intervalle de sous-trame 0, 1, 5 ou 6.

12. Procédé selon la revendication 10, dans lequel lorsqu'une configuration de la table de configuration est 1,
si un numéro de sous-trame n est 0, alors le premier intervalle de temps est un intervalle de sous-trame 0, 1, 4, 5, 6 ou 9 ;
si le numéro de sous-trame n est 1, alors le premier intervalle de temps est un intervalle de sous-trame 0, 1, 2, 5, 6 ou 7 ;
si le numéro de sous-trame n est 4, alors le premier intervalle de temps est un intervalle de sous-trame 0, 3, 4, 5, 8 ou 9 ;
si le numéro de sous-trame n est 5, alors le premier intervalle de temps est un intervalle de sous-trame 0, 1, 4, 5, 6, 9 ou 10 ; et
si le numéro de sous-trame n est 6, alors le premier intervalle de temps est un intervalle de sous-trame 0, 1, 2, 5, 6 ou 7.

13. Procédé selon la revendication 10, dans lequel lorsqu'une configuration de la table de configuration est 2,
si un numéro de sous-trame n est 0, alors le premier intervalle de temps est un intervalle de sous-trame 0, 1, 2, 4, 5, 6, 7 ou 9 ;
si le numéro de sous-trame n est 1, alors le premier intervalle de temps est un intervalle de sous-trame 0, 1, 2, 3, 5, 6, 7 ou 8 ;
si le numéro de sous-trame n est 3, alors le premier intervalle de temps est un intervalle de sous-trame 0, 2, 3, 4, 5, 7, 8 ou 9 ;
si le numéro de sous-trame n est 4, alors le premier intervalle de temps est un intervalle de sous-trame 0, 1, 3, 4, 5, 6, 8 ou 9 ;
si le numéro de sous-trame n est 5, alors le premier intervalle de temps est un intervalle de sous-trame 0, 1, 2, 4, 5, 6, 7 ou 9 ;
si le numéro de sous-trame n est 6, alors le premier intervalle de temps est un intervalle de sous-trame 0, 1, 2, 3, 5, 6, 7 ou 8 ;
si le numéro de sous-trame n est 8, alors le premier intervalle de temps est un intervalle de sous-trame 0, 2, 3, 4, 5, 7, 8 ou 9 ; et
si le numéro de sous-trame n est 9, alors le premier intervalle de temps est un intervalle de sous-trame 0, 1, 3, 4, 5, 6, 8 ou 9.

14. Procédé selon la revendication 10, dans lequel lorsqu'une configuration de la table de configuration est 3,
si un numéro de sous-trame n est 0, alors le premier intervalle de temps est un intervalle de sous-trame 0, 1, 2, 3, 4, 5 ou 9 ;
si le numéro de sous-trame n est 1, alors le premier intervalle de temps est un intervalle de sous-trame 0, 1, 2, 3, 5, 6, 7 ou 8 ;
si le numéro de sous-trame n est 5, alors le premier intervalle de temps est un intervalle de sous-trame 0, 4, 5, 6, 7, 8 ou 9 ;
si le numéro de sous-trame n est 6, alors le premier intervalle de temps est un intervalle de sous-trame 0, 1, 5, 6, 7, 8 ou 9 ;
si le numéro de sous-trame n est 7, alors le premier intervalle de temps est un intervalle de sous-trame 0, 1, 2, 6, 7, 8 ou 9 ;
si le numéro de sous-trame n est 8, alors le premier intervalle de temps est un intervalle de sous-trame 0, 1, 2, 3, 7, 8 ou 9 ; et
si le numéro de sous-trame n est 9, alors le premier intervalle de temps est un intervalle de sous-trame 0, 1, 2, 3, 4, 8 ou 9.

15. Procédé selon la revendication 10, dans lequel lorsqu'une configuration de la table de configuration est 4,
si un numéro de sous-trame n est 0, alors le premier intervalle de temps est un intervalle de sous-trame 0, 1, 2, 3, 4, 5, 6 ou 9 ;
si le numéro de sous-trame n est 1, alors le premier intervalle de temps est un intervalle de sous-trame 0, 1, 2, 3, 4, 5, 6 ou 7 ;
si le numéro de sous-trame n est 4, alors le premier intervalle de temps est un intervalle de sous-trame 0, 5, 6, 7, 8 ou 9 ;
si le numéro de sous-trame n est 5, alors le premier intervalle de temps est un intervalle de sous-trame 0, 1, 6, 7, 8 ou 9 ;
si le numéro de sous-trame n est 6, alors le premier intervalle de temps est un intervalle de sous-trame 0, 1, 2, 5, 6, 7, 8 ou 9 ;
si le numéro de sous-trame n est 7, alors le premier intervalle de temps est un intervalle de sous-trame 0, 1, 2, 3, 6, 7, 8 ou 9 ;
si le numéro de sous-trame n est 8, alors le premier intervalle de temps est un intervalle de sous-trame 0, 1, 2, 3, 4, 7, 8 ou 9 ; et
si le numéro de sous-trame n est 9, alors le premier intervalle de temps est un intervalle de sous-trame 0, 1, 2, 3, 4, 5, 8 ou 9.

16. Procédé selon la revendication 10, dans lequel lorsqu'une configuration de la table de configuration est 5,
si un numéro de sous-trame n est 0, alors le premier intervalle de temps est un intervalle de sous-trame 0, 1, 2, 3, 4, 5, 6, 7 ou 9 ;
si le numéro de sous-trame n est 1, alors le premier intervalle de temps est un intervalle de sous-trame 0, 1, 2, 3, 4, 5, 6, 7 ou 8 ;
si le numéro de sous-trame n est 3, alors le premier intervalle de temps est un intervalle de sous-trame 0, 2, 3, 4, 5, 6, 7, 8 ou 9 ;
si le numéro de sous-trame n est 4, alors le premier intervalle de temps est un intervalle de sous-trame 0, 1, 3, 4, 5, 6, 7, 8 ou 9 ;
si le numéro de sous-trame n est 5, alors le premier intervalle de temps est un intervalle de sous-trame 0, 1, 2, 4, 5, 6, 7, 8 ou 9 ;
si le numéro de sous-trame n est 6, alors le premier intervalle de temps est un intervalle de sous-trame 0, 1, 2, 3, 5, 6, 7, 8 ou 9 ;
si le numéro de sous-trame n est 7, alors le premier intervalle de temps est un intervalle de sous-trame 0, 1, 2, 3, 4, 6, 7, 8 ou 9 ;
si le numéro de sous-trame n est 8, alors le premier intervalle de temps est un intervalle de sous-trame 0, 1, 2, 3, 4, 5, 7, 8 ou 9 ; et
si le numéro de sous-trame n est 9, alors le premier intervalle de temps est un intervalle de sous-trame 0, 1, 2, 3, 4, 5, 6, 8 ou 9.

17. Procédé selon la revendication 10, dans lequel lorsqu'une configuration de la table de configuration est 6,
si un numéro de sous-trame n est 0, alors le premier intervalle de temps est un intervalle de sous-trame 0, 4, 5 ou 9 ;
si le numéro de sous-trame n est 1, alors le premier intervalle de temps est un intervalle de sous-trame 0, 5 ou 6 ;
si le numéro de sous-trame n est 5, alors le premier intervalle de temps est un intervalle de sous-trame 0, 4, 5, 6 ou 9 ;
si le numéro de sous-trame n est 6, alors le premier intervalle de temps est un intervalle de sous-trame 0, 1, 5, 6 ou 7 ; et
si le numéro de sous-trame n est 9, alors le premier intervalle de temps est un intervalle de sous-trame 0, 3, 4, 8 ou 9.

18. Station de relais (126) conçue pour relayer au moins une donnée entre une station de base (124) et un dispositif de communication mobile (134), dans laquelle la station de relais (126) transmet et reçoit les données avec une association temporelle configurée, dans laquelle l'association temporelle configurée inclut un premier intervalle de temps (X) et un deuxième intervalle de temps (Z),
dans laquelle, si elle est dans un processus de transmission de liaison descendante, le premier intervalle de temps représente un intervalle de temps entre le moment où le au moins un noeud de relais (126) répond au moins un signal de réaction à la au moins une station de base (124) et le moment où le au moins un dispositif de communication mobile (134) se voit attribuer une ressource de liaison descendante allouée à partir de la station de base (124), et le deuxième intervalle de temps représente un intervalle de temps entre le moment où le au moins un noeud de relais (126) se voit attribuer la ressource de liaison descendante et le moment où le au moins un noeud de relais (126) répond au au moins un signal de réaction à la au moins une station de base (124).

19. Station de relais selon la revendication 18, dans laquelle les données reçues par la station de relais (126) sont des données HARQ et le signal de réaction transmis par la station de relais (126) est un signal d'accusé de réception pour les données HARQ.

20. Station de relais selon la revendication 19, dans laquelle, si la station de relais (126) reçoit des données de liaison descendante dans la sous-trame 3, 4 ou 9, alors la station de relais (126) transmet le signal d'accusé de réception des données de liaison descendante dans la sous-trame 0, 3, 4, 5, 7, 8 ou 9.

21. Station de relais selon la revendication 20, dans laquelle, si la station de relais (126) reçoit des données de liaison descendante dans la sous-trame 3, alors la station de relais (126) transmet le signal d'accusé de réception des données de liaison descendante dans la sous-trame 4, 7 ou 9.

22. Station de relais selon la revendication 20, dans laquelle, si la station de relais (126) reçoit des données de liaison descendante dans la sous-trame 4, alors la station de relais (126) transmet le signal d'accusé de réception des données de liaison descendante dans la sous-trame 5, 8 ou 0.

23. Station de relais selon la revendication 20, dans laquelle, si la station de relais (126) reçoit des données de liaison descendante dans la sous-trame 9, alors la station de relais (126) transmet le signal d'accusé de réception des données de liaison descendante dans la sous-trame 0, 3 ou 5.

24. Station de relais selon la revendication 18, dans laquelle les données transmises par la station de base et reçues par la station de relais (126) sont des données HARQ et le signal de réaction transmis par la station de relais (126) est un signal d'accusé de réception pour les données HARQ.

25. Station de relais selon la revendication 19, dans laquelle, si la station de relais (126) reçoit des données de liaison descendante dans la sous-trame 0, 1, 5 ou 6, alors la station de relais (126) transmet le signal d'accusé de réception pour les données de liaison descendante dans la sous-trame 2, 3, 4, 7, 8 ou 9.

26. Station de relais selon la revendication 19, dans laquelle, si la station de relais (126) reçoit des données de liaison descendante dans la sous-trame 0, 1, 4, 5, 6 ou 9, alors la station de relais (126) transmet le signal d'accusé de réception des données de liaison descendante dans la sous-trame 2, 3, 7 ou 8.

27. Station de relais selon la revendication 19, dans laquelle, si la station de relais (126) reçoit des données de liaison descendante dans la sous-trame 3, 4, 5, 6, 8 ou 9, alors la station de relais (126) transmet le signal d'accusé de réception pour les données de liaison descendante dans la sous-trame 2 ou 7.

28. Station de relais selon la revendication 19, dans laquelle, si la station de relais (126) reçoit des données de liaison descendante dans la sous-trame 0, 1, 5, 6, 7, 8 ou 9, alors la station de relais (126) transmet le signal d'accusé de réception pour données de liaison descendante dans la sous-trame 2, 3, ou 4.

29. Station de relais selon la revendication 19, dans laquelle, si la station de relais (126) reçoit des données de liaison descendante dans la sous-trame 0, 1, 4, 5, 6, 7, 8 ou 9, alors la station de relais (126) transmet le signal d'accusé de réception des données de liaison descendante dans la sous-trame 2, ou 3.

30. Station de relais selon la revendication 19, dans laquelle, si la station de relais (126) reçoit des données de liaison descendante dans la sous-trame 0, 1, 3, 4, 5, 6, 7, 8 ou 9, alors la station de relais (126) transmet le signal d'accusé de réception pour les données de liaison descendante dans la sous-trame 2.

31. Station de relais selon la revendication 19, dans laquelle, si la station de relais (126) reçoit des données de liaison descendante dans la sous-trame 0, 1, 5, 6 ou 9, alors la station de relais (126) transmet le signal d'accusé de réception des données de liaison descendante dans la sous-trame 2, 3, 4, 7 ou 8.
